# FASCICULE DE BREVET EUROPEEN

(11) **EP 4 267 382 B1**
(45) Date de publication et mention de la délivrance du brevet: **30.04.2025**
(21) Numéro de dépôt: 21810659.9
(22) Date de dépôt: 21.10.2021
(51) Int. Cl.: B29D 30/02, B29D 30/06, B29D 30/10, B29D 30/12, B29D 30/20

(54) **INSTALLATION ET PROCÉDÉ POUR LA FABRICATION D'UN BANDAGE ANNULAIRE SUR UN NOYAU MONOLITHIQUE ALLÉGÉ**
ANLAGE UND VERFAHREN ZUR HERSTELLUNG EINES RINGFÖRMIGEN REIFENS AUF EINEM LEICHTGEWICHTIGEN MONOLITHISCHEN KERN
FACILITY AND METHOD FOR MANUFACTURING AN ANNULAR TYRE ON A LIGHTWEIGHT MONOLITHIC CORE

(30) Priorité: 23.12.2020 FR 2014013
(43) Date de publication de la demande: 01.11.2023
(73) Titulaire: Compagnie Générale des Etablissements Michelin, 63000 Clermont-Ferrand (FR)
(72) Inventeur: BOUCHEREAU, David, 63040 Clermont-Ferrand CEDEX 9 (FR); MECHIN, Jean, 63040 Clermont-Ferrand CEDEX 9 (FR); ROUYET, François, 63040 Clermont-Ferrand CEDEX 9 (FR); DELORME, Jean-Claude, 63040 Clermont-Ferrand CEDEX 9 (FR); BARJON, Stéphane, 63040 Clermont-Ferrand CEDEX 9 (FR)
(74) Mandataire: M.F.P. Michelin
(86) Numéro de dépôt international: PCT/FR2021/051851
(87) Numéro de publication internationale: WO 2022/136744

(56) Documents cités:
- WO-A1-2011/065951
- KR-A- 20120 015 646
- US-A1- 2013 209 595

## Description

La présente invention concerne le domaine de la fabrication des bandages destinés à équiper des roues de véhicules, et plus particulièrement la fabrication de bandages dits « sans air », c'est-à-dire non pneumatiques, au sein desquels la bande de roulement est soutenue non pas pneumatiquement par un gaz sous pression, mais mécaniquement par des organes solides, tels que des rayons, qui relient ladite bande de roulement à la jante.

Il est connu, notamment par le document WO-2011/065951, de confectionner un bandage annulaire cru en posant sur un noyau un ou plusieurs composants de bandage, dont au moins une partie sont à base de caoutchouc cru, c'est-à-dire non vulcanisé, puis de placer l'ensemble formé par ledit noyau et le bandage annulaire cru dans un moule de cuisson afin d'obtenir un bandage annulaire cuit, au sein duquel le caoutchouc est vulcanisé, et enfin de séparer le bandage annulaire cuit du noyau. Pour séparer le bandage annulaire cuit du noyau, ce document propose par exemple de refroidir le noyau afin de provoquer une contraction radiale de ce dernier par rapport au bandage annulaire cuit, puis d'utiliser un éjecteur pour extraire axialement le bandage annulaire cuit hors du noyau.

Si de tels procédés offrent une indéniable polyvalence quant au choix et à l'agencement des composants du bandage, et permettent d'obtenir des bandages performants et de bonne qualité, ils souffrent toutefois encore de certains inconvénients.

En particulier, de tels procédés requièrent l'utilisation d'un noyau relativement lourd, encombrant et complexe, qui doit notamment intégrer des sources chauffantes, telles que des cartouches chauffantes à résistances électriques, qui sont destinées à amener ledit noyau à la température requise pendant l'opération de cuisson.

Bien entendu, en raison de leur complexité, de tels noyaux sont relativement onéreux. Ils doivent en outre faire l'objet d'une maintenance soutenue, notamment afin d'éviter d'éventuelles pannes des cartouches chauffantes qui pourraient provoquer un chauffage hétérogène du noyau et causer l'apparition de défauts dans le bandage lors de l'opération de cuisson.

De surcroît, en raison de leur masse, les noyaux connus présentent une inertie relativement élevée, tant d'un point de vue mécanique que d'un point de vue thermique. Or, bien entendu, plus la masse du noyau est élevée, plus le transport du noyau d'une station à l'autre est consommateur d'énergie, et plus la vitesse de déplacement doit être limitée, afin d'éviter tout accident ou dépassement de trajectoire. De même, plus la masse du noyau est élevée, plus la mise en œuvre alternée des cycles de chauffage puis de refroidissement requiert du temps ainsi qu'une quantité d'énergie élevée. Dans tous les cas, une masse élevée du noyau pénalise donc le temps de cycle et les coûts de fonctionnement de l'installation.

Les objets assignés à l'invention visent par conséquent à remédier aux inconvénients susmentionnés et proposer une installation améliorée pour la fabrication de bandages, ainsi qu'un procédé correspondant, qui présentent notamment des performances améliorées en matière d'une part de réduction de la durée d'un cycle de fabrication et d'autre part de réduction de la consommation d'énergie.

Les objets assignés à l'invention sont atteints au moyen d'une installation de fabrication de bandages, ladite installation comprenant une station d'assemblage agencée pour poser un ou plusieurs composants de bandage sur un noyau afin de former un bandage annulaire cru, une station de cuisson agencée pour recevoir l'ensemble formé par ledit noyau et le bandage annulaire cru et pour chauffer ledit ensemble lors d'une opération de cuisson afin d'obtenir un bandage annulaire cuit, et une station d'extraction agencée pour, après l'opération de cuisson, séparer le bandage annulaire cuit du noyau, ladite installation étant caractérisée en ce que le noyau possède une paroi tubulaire qui s'étend le long et autour d'un axe central, et qui s'étend en épaisseur, radialement audit axe central, depuis une première face annulaire radialement externe, dite « face réceptrice », qui est destinée à recevoir le ou les composants de bandage, jusqu'à une seconde face annulaire, radialement interne, dite « face d'échange », qui entoure l'axe central et qui est destinée à permettre des échanges thermiques entre la paroi tubulaire du noyau et des sources thermiques extérieures audit noyau, en ce que la station de cuisson comprend une première source thermique, chauffante, qui est conçue pour venir s'appliquer contre la face d'échange du noyau lorsque ledit noyau se trouve dans ladite station de cuisson, afin de chauffer ledit noyau et le bandage annulaire lors de l'opération de cuisson, puis pour se dissocier du noyau afin de laisser à nouveau libre la face d'échange lorsque le noyau et le bandage annulaire cuit quittent ladite station de cuisson et sont transférés à la station d'extraction après l'opération de cuisson, et en ce que ladite station d'extraction comprend une seconde source thermique, réfrigérante, qui est conçue pour, lorsque le noyau et le bandage annulaire cuit se retrouvent dans la station d'extraction, venir succéder à la première source thermique au contact de ladite face d'échange du noyau, afin de refroidir ledit noyau, de manière à créer un jeu radial entre la face réceptrice du noyau et le bandage annulaire cuit, par contraction radiale différentielle de la paroi tubulaire du noyau par rapport au bandage annulaire cuit, et ainsi permettre à un organe éjecteur équipant la station d'extraction de dégager axialement le bandage annulaire cuit du noyau.

Grâce à l'invention, il est possible de conserver les première et seconde sources thermiques dans leur station respective, et en particulier de conserver la source thermique chauffante dans l'enceinte de la station de cuisson, sans qu'il soit nécessaire d'embarquer l'une ou l'autre desdites sources thermiques, et en particulier la source thermique chauffante, au sein du noyau, ce qui procure plusieurs avantages.

En effet, l'invention permet tout d'abord de proposer un noyau, déplaçable d'une station à l'autre, qui est dépourvu de source chauffante intégrée, et par conséquent un noyau qui présente une structure particulièrement légère, de forme simple et compacte, et notamment un noyau dont la paroi tubulaire peut être particulièrement fine. Un tel noyau présente donc avantageusement une faible inertie mécanique, ce qui permet de le déplacer rapidement et précisément d'une station à l'autre, au moyen d'un dispositif de transfert compact et avec une dépense d'énergie relativement modeste. Un tel noyau présente également une faible inertie thermique, ce qui permet de le chauffer et de le refroidir rapidement, à travers sa face d'échange, avec un apport d'énergie relativement faible. La durée du cycle de fabrication est ainsi significativement réduite, de même que la consommation d'énergie par cycle de fabrication.

Avantageusement, le noyau est d'autant plus compact que la première source thermique, chauffante, et la seconde source thermique, réfrigérante, se partagent en définitive une même face d'échange appartenant au noyau, surface d'échange au contact de laquelle lesdites première et seconde sources thermiques alternent en fonction de l'opération effectuée sur le noyau, à savoir l'opération de cuisson et respectivement l'opération d'extraction. La mise en œuvre d'une face d'échange partagée, de préférence unique, permet de substituer la seconde source thermique à la première source thermique, et réciproquement, à un même emplacement du noyau, au plus près de la face réceptrice portant le bandage, et ainsi de maximiser la superficie utile de ladite face d'échange dans un volume hors-tout donné du noyau. De la sorte, on optimise l'efficacité des échanges thermiques, notamment l'efficacité des échanges par conduction à travers l'épaisseur radiale de la paroi tubulaire, tout en conservant un faible encombrement global du noyau.

Ensuite, puisque le noyau se dissocie de la première source thermique chauffante avant l'opération d'extraction, ladite première source thermique chauffante peut avantageusement rester au chaud dans l'enceinte de la station de cuisson tandis que le noyau est soumis, séparément, à un transfert vers la station d'extraction puis à un refroidissement forcé dans ladite station d'extraction. De la sorte, la première source thermique chauffante ne subit pas ledit refroidissement imposé au noyau, et conserve au contraire sensiblement sa chaleur entre deux opérations de cuisson successives, appliquées à la fabrication successive d'un premier bandage annulaire puis d'un second bandage annulaire. Avantageusement l'invention permet donc de minimiser la masse utile du noyau qui sera effectivement sujette à l'amplitude totale des variations de température prévues par les phases de chauffage puis de refroidissement lors d'un cycle de fabrication, puisque l'on exclut de ladite masse utile la masse qui est propre à la première source thermique chauffante, qui peut rester quant à elle toujours chaude. Ainsi, l'installation permet de réaliser de substantielles économies d'énergie et de réduire significativement la durée qui est nécessaire, au sein de la station de cuisson, pour amener à la température de cuisson requise le noyau et le bandage.

De surcroît, en évitant d'intégrer à demeure la source thermique chauffante, et plus particulièrement des cartouches chauffantes, dans l'épaisseur radiale de la paroi tubulaire du noyau, l'invention permet de conserver une paroi tubulaire très fine, qui présente donc une très faible résistance thermique vis-à-vis des échanges par conduction.

Cette même absence de source thermique chauffante intégrée à la paroi tubulaire permet par ailleurs d'appliquer la seconde source thermique réfrigérante au plus près de la face réceptrice portant le bandage, sans que la première source thermique chauffante ne reste interposée radialement entre ladite seconde source thermique réfrigérante et ladite face réceptrice portant le bandage.

Plus globalement, aucune des première et seconde sources thermiques ne fait donc barrière, ni en termes de résistance thermique passive liée à son épaisseur, ni en termes d'antagonisme chaud/froid lié à la différence entre la température de ladite source thermique et la température de l'autre source thermique, à l'échange de chaleur entre l'autre source thermique et la face réceptrice, lorsque c'est au tour de ladite autre source thermique d'agir. Cette absence d'interférence entre les première et seconde sources thermiques, qui travaillent chacune tour à tour et de façon exclusive l'une de l'autre avec le même noyau, permet, ici encore, de réduire la consommation d'énergie et d'accélérer les transferts thermiques, ce qui réduit la durée d'un cycle de fabrication.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue de dessus, l'implantation d'une installation selon l'invention.
La figure 2 illustre, selon une vue en perspective, l'installation de la figure 1.
La figure 3 représente, selon une vue en perspective, un noyau selon l'invention, utilisé dans l'installation des figures 1 et 2.
La figure 4 est une vue de détail en coupe axiale du noyau de la figure 3.
La figure 5 est une vue de détail, en perspective avec arrachement de matière, du tronçon d'accouplement du noyau des figures 3 et 4, lequel tronçon d'accouplement marque la limite axiale de la face réceptrice et est agencé pour permettre d'une part la saisie du noyau par un outil de préhension embarqué sur un dispositif de transfert apte à transférer ledit noyau d'une station à l'autre et d'autre part le positionnement et le centrage dudit noyau au sein de la station de cuisson.
La figure 6 représente, selon une vue d'ensemble en perspective, la station de cuisson de l'installation des figures 1 et 2, station de cuisson qui comprend ici deux moules de cuisson aptes à recevoir chacun un noyau pourvu de son bandage annulaire à cuire.
La figure 7 illustre, selon une vue en perspective, un secteur chauffant appartenant à un ensemble de secteurs chauffants qui constituent la première source thermique, chauffante, utilisée au sein de la station de cuisson. Ledit secteur chauffant est ici équipé d'une résistance électrique chauffante qui est représentée par transparence.

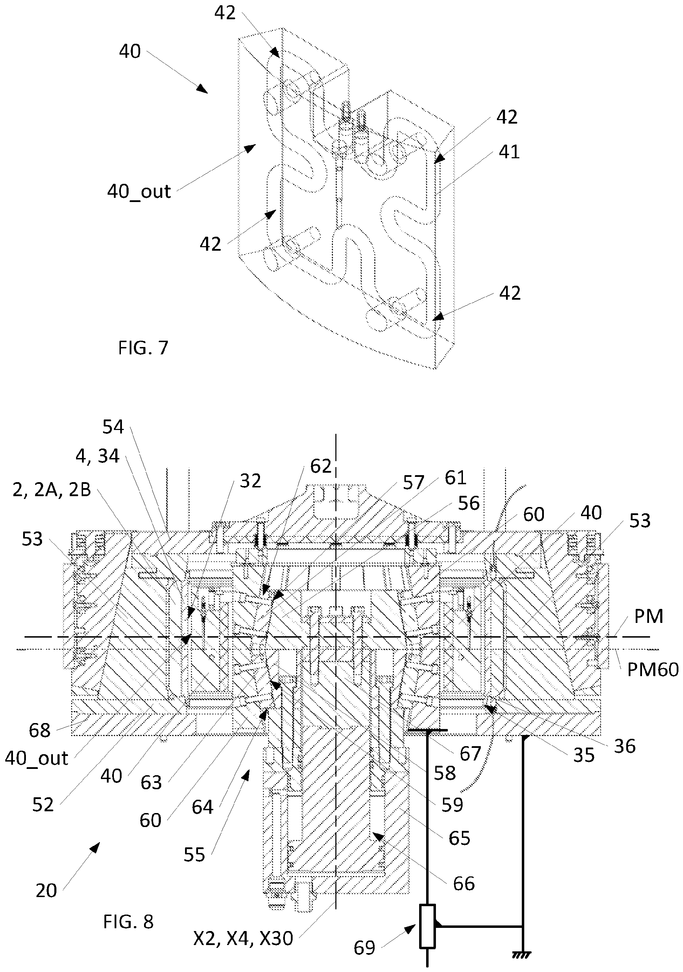

La figure 8 illustre, selon une vue en coupe axiale de l'un des moules de la station de cuisson, le mécanisme de déploiement à deux poussoirs concentriques antagonistes qui permet de déplacer radialement les secteurs chauffants pour alternativement appliquer lesdits secteurs contre la face d'échange, pour réaliser l'opération de cuisson puis, après l'opération de cuisson, dégager lesdits secteurs en retrait de ladite face d'échange pour permettre l'enlèvement du noyau, puis l'engagement ultérieur d'un nouveau noyau en vue d'une autre opération de cuisson. Sur cette figure, les secteurs se trouvent en configuration rétractée, en retrait radial par rapport à la face d'échange du noyau.
La figure 9 est une vue de détail de la figure 8, faisant apparaître plus distinctement le jeu radial prévu entre les secteurs chauffants et la face d'échange du noyau en configuration rétractée.
La figure 10 est une vue en coupe transversale de l'enceinte de cuisson de la figure 8, dans un plan de coupe normal à l'axe du noyau et qui correspond ici au plan équatorial du bandage annulaire.
La figure 11 illustre, selon une vue en coupe axiale dans le même plan de coupe que celui de la figure 8, le mécanisme de déploiement et les secteurs chauffants en configuration déployée, de sorte que lesdits secteurs chauffants se trouvent au contact de la face d'échange du noyau, en compression radiale contre ladite face d'échange.
La figure 12 est une vue de détail de la figure 11.
La figure 13 est une vue en coupe transversale de l'enceinte de cuisson de la figure 11, dans le même plan de coupe que la figure 10.

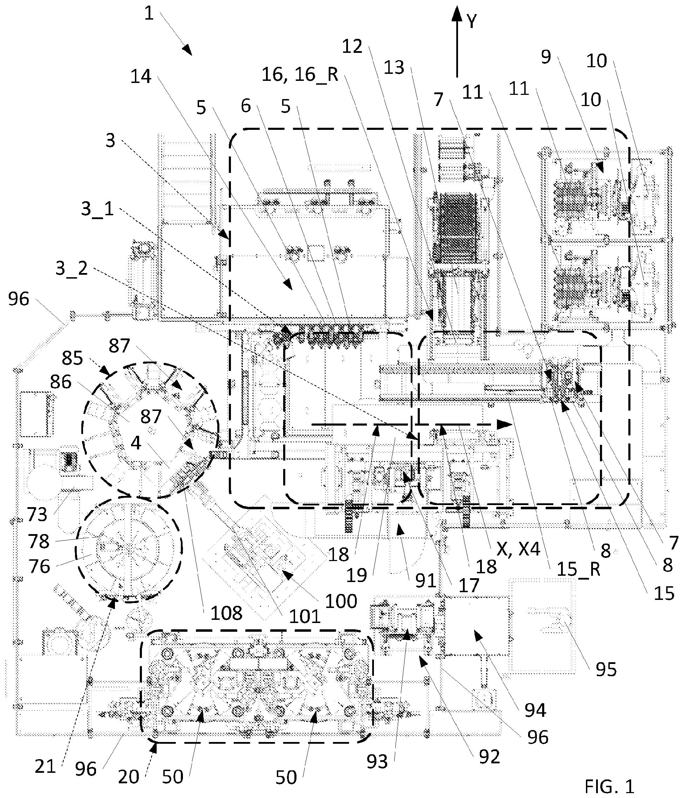

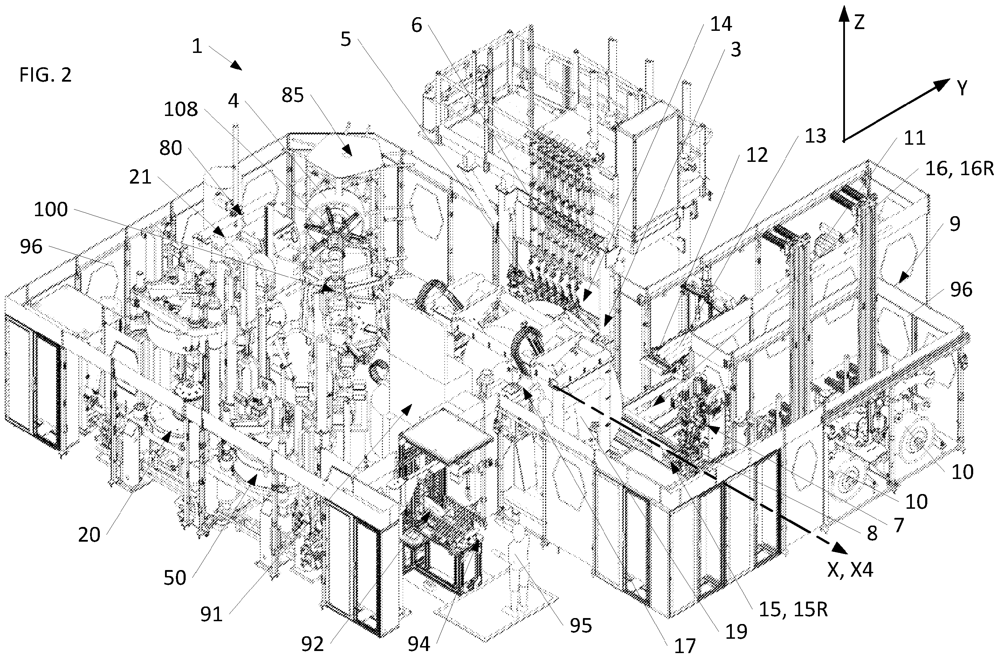

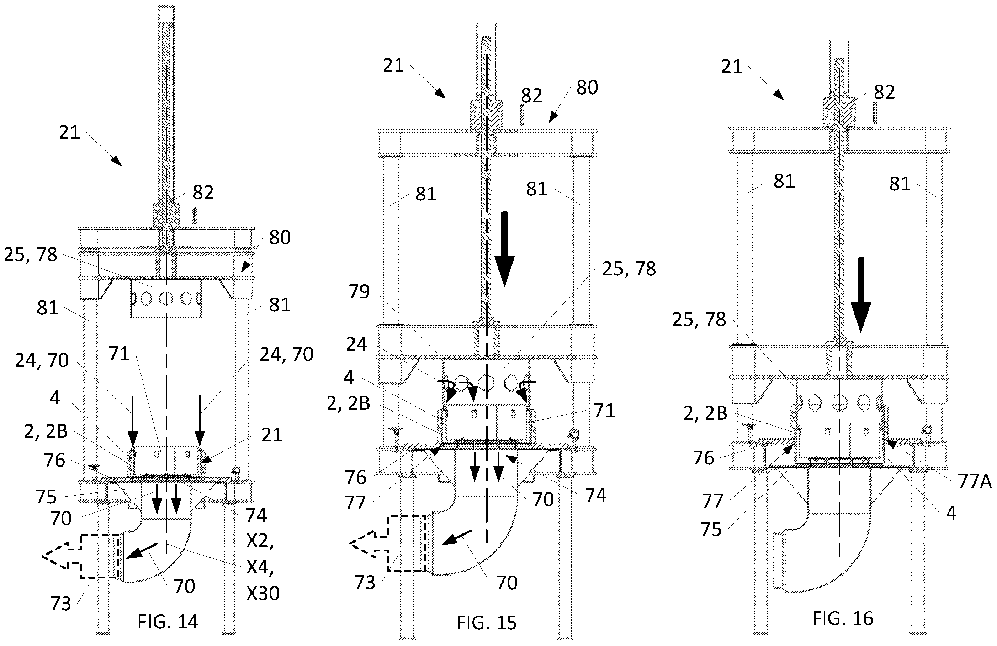

La figure 14 illustre, selon une vue en coupe axiale, un exemple de station d'extraction utilisée dans l'installation des figures 1 et 2. Ladite station comprend une table de réception horizontale qui soutient le bandage annulaire cuit, un dispositif d'aspiration, et un plateau élévateur pourvu d'un fût central qui fait saillie à travers une ouverture de la table de réception de sorte que le noyau porteur du bandage annulaire cuit est enfilé sur ledit fût central, pour permettre à un flux d'air généré par le dispositif d'aspiration et formant la seconde source thermique, réfrigérante, de circuler au contact de la face d'échange du noyau, dans un chemin d'écoulement annulaire qui est délimité radialement par ladite face d'échange du noyau et par le fût central.
La figure 15 illustre, selon une vue en coupe axiale, l'opération de refroidissement du noyau, et la mise en contact, contre le chant latéral du noyau, d'un éjecteur formant une coiffe annulaire pourvue d'évents permettant à l'air de pénétrer dans le chemin d'écoulement annulaire.
La figure 16 illustre, selon une vue en coupe axiale, l'opération de séparation, au cours de laquelle la coiffe formant éjecteur poursuit son mouvement, ici vertical descendant, pour repousser axialement le noyau contracté par le refroidissement, de manière à extraire ledit noyau du bandage annulaire cuit et à récupérer, sur le plateau élévateur qui accompagne le mouvement axial de la coiffe, ledit noyau ainsi libéré.
La figure 17 est une vue de détail de la figure 15.
La figure 18 est une vue de détail de la figure 16.
La figure 19 illustre, selon une vue d'ensemble en perspective, une station tampon qui est utilisée au sein de l'installation des figures 1 et 2 pour permettre d'une part un stockage des noyaux, vides ou porteurs d'un bandage annulaire cru, et d'autre part des bandages annulaires cuits en provenance de la station d'extraction, ladite station tampon comportant à cet effet une pluralité d'emplacements de stockage répartis sur un mât rotatif permettant d'orienter tour à tour les emplacements en vis-à-vis d'un dispositif de transfert chargé de transporter lesdits noyaux et bandages.

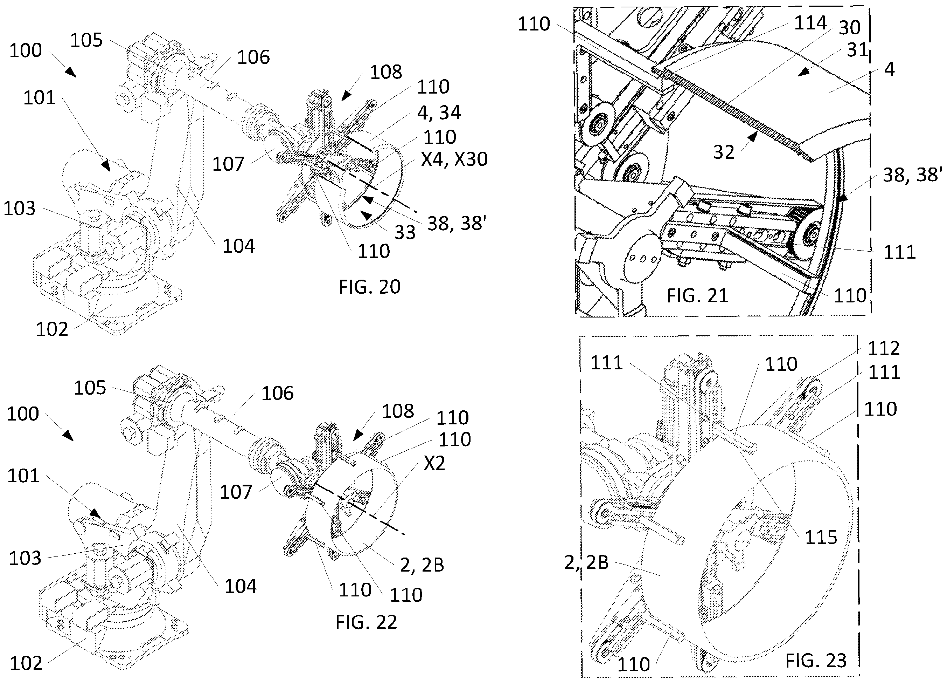

La figure 20 illustre, selon une vue d'ensemble en perspective, un dispositif de transfert utilisé au sein de l'installation des figures 1 et 2 pour transporter le noyau successivement d'une station à l'autre, ledit dispositif de transfert comprenant à cet effet un bras robotisé, du genre bras anthropomorphe à six axes, qui porte un outil de préhension à mors permettant notamment, tel que cela est illustré sur la figure, de saisir le noyau par l'intérieur. Pour faciliter la compréhension, une partie dudit noyau a été ici arrachée pour rendre visible la prise de l'outil de préhension dans le tronçon d'accouplement du noyau, à l'encontre duquel les mors exercent à cet effet un serrage radial centrifuge.
La figure 21 est une vue de détail de la figure 20.
La figure 22 illustre, selon une vue en perspective, la saisie et le transport, par le dispositif de transfert de la figure 20, d'un bandage annulaire cuit séparé de son noyau. L'outil de préhension vient cette fois en prise sur ledit bandage annulaire cuit par l'extérieur, ses mors exerçant un serrage radial centripète sur la face externe dudit bandage annulaire cuit.
La figure 23 est une vue de détail de la figure 22.
La figure 24 illustre, selon une vue de détail en perspective, l'outil de préhension polyvalent utilisé par le dispositif de transfert des figures 20 et 22 pour pouvoir transporter alternativement un noyau ou un bandage annulaire cuit.

La présente invention concerne une installation 1 de fabrication de bandages 2.

Plus préférentiellement, ladite installation 1 permet la fabrication de bandages 2 destinés à équiper des roues de véhicule.

Les bandages 2 issus de l'installation 1 comporteront ainsi de préférence une bande de roulement destinée à venir au contact de la route lorsque le véhicule est en service.

Les bandages 2 selon l'invention pourront entrer dans la composition de bandages pneumatiques, au sein desquels les bandages 2 sont montés sur une jante pour former une enveloppe étanche recevant un gaz de gonflage sous une pression supérieure à la pression atmosphérique.

Toutefois, en variante préférentielle, les bandages 2 selon l'invention entreront dans la composition de bandages non pneumatiques, dits « sans air » (« airless » en anglais), au sein desquels le bandage 2 est soutenu par un ensemble de rayons solides, de flexibilité appropriée, qui relient ledit bandage à la jante.

Le bandage 2 est, dans tous les cas, avantageusement fermé en anneau sur lui-même autour d'un axe central X2, et plus préférentiellement forme un cylindre de base circulaire centré sur ledit axe central X2.

Tel que cela est notamment visible sur les figures 1 et 2, l'installation 1 comprend une station d'assemblage 3 qui est agencée pour poser un ou plusieurs composants de bandage sur un noyau 4 afin de former un bandage annulaire cru 2A.

Le noyau 4 présente un axe central X4 qui, en pratique, se confond avec l'axe central X2 du bandage 2 lorsque ledit bandage se trouve sur le noyau 4.

La pose du ou des composants de bandage sur le noyau 4 se fait de préférence par enroulement, tandis que le noyau 4 est animé d'un mouvement de rotation autour de son axe central X4, et plus préférentiellement par enroulement d'un composant de bandage continu qui s'étend d'un seul tenant sur toute la distance d'enroulement requise autour du noyau, laquelle distance peut correspondre, selon la nature du composant de bandage, à un tour complet unique du noyau 4, ou le cas échéant à plusieurs tours consécutifs du noyau 4, autour de l'axe central X4.

Bien entendu, on pourra envisager, dans l'absolu, tout moyen approprié pour la pose d'un composant de bandage, et, par exemple, prévoir, selon une possible variante de mise en œuvre, que la station d'assemblage 3 peut réaliser au moins un composant de bandage à partir d'une pluralité de bandelettes individuelles, en posant lesdites bandelettes individuelles les unes après les autres sur le noyau et en juxtaposant lesdites bandelettes individuelles deux à deux par leurs lisières afin de constituer, au moyen desdites bandelettes individuelles ainsi réunies dans leur ensemble, un composant de bandage de type nappe.

On privilégiera toutefois de préférence, selon une autre variante de mise en œuvre, un procédé de pose par enroulement continu, plutôt que par confection séquentielle à partir de bandelettes individuelles, afin d'accroître la vitesse de pose, et donc de réduire la durée de l'opération de confection du bandage annulaire cru au sein de la station d'assemblage 3.

De préférence, parmi lesdits composants de bandage, l'un au moins, et éventuellement plusieurs, contiendront du caoutchouc cru, c'est-à-dire du caoutchouc non vulcanisé.

De préférence, parmi les composants de bandage, on compte au moins une bande de roulement, préférentiellement à base de caoutchouc cru, qui forme la couche radialement externe du bandage annulaire cru 2A.

De préférence, parmi les composants de bandage, on trouve également au moins un, voire plusieurs composants de renfort, qui seront enroulés sur le noyau 4 avant la bande de roulement afin de former une armature sous ladite bande de roulement.

Parmi lesdits composants de renfort, on comptera de préférence au moins une frette, qui sera obtenue en enroulant en spires hélicoïdales sur le noyau 4, autour de l'axe central X4, un câble de renfort continu ou bien une bande de renfort contenant, dans une matrice, plusieurs câbles de renfort continus agencés parallèlement les uns aux autres et parallèlement à la direction longitudinale de ladite bande de renfort. Lesdites spires hélicoïdales sont de préférence jointives, voire partiellement chevauchantes axialement d'une spire à l'autre.

Le câble de renfort, respectivement les câbles de renfort entrant dans la constitution de la bande de renfort, seront réalisés dans un matériau qui les rendra sensiblement inextensibles selon leur direction longitudinale, et donc selon la direction circonférentielle du bandage 2.

A cet effet, on pourra envisager des câbles de renfort métalliques, ou en polymère approprié, par exemple en aramide (Kevlar), ou bien encore en fibre de verre.

Selon une variante de réalisation préférentielle, le câble de renfort utilisé, ou la bande de renfort utilisée, est réalisé dans un matériau dit « Composite Verre-Résine », en abrégé « CVR », au sein duquel le ou les câbles de renfort sont réalisés en fibre de verre, et noyés dans une résine, par exemple une résine de type vinylester.

Ledit composite verre-résine pourra être utilisé tel quel, sous une forme nue, non revêtue de caoutchouc, ou bien sous une forme revêtue, selon laquelle ledit composite verre-résine est noyé au sein d'une couche de caoutchouc cru pour former un câble de renfort revêtu ou, respectivement, une bande de renfort revêtue. On notera que, dans un cas comme dans l'autre, le câble de renfort en composite verre-résine aura de préférence reçu un traitement préalable, qui favorisera l'adhésion du caoutchouc à la surface dudit câble de renfort.

Lorsque l'on utilisera la forme nue du composite verre-résine, la pose dudit composite verre-résine sera précédée, et le cas échéant suivie, de la pose d'une couche de caoutchouc cru, qui sera préférentiellement obtenue en enroulant sur le noyau, en spires hélicoïdales, une bande de caoutchouc cru.

Que l'on utilise un composé verre-résine sous forme revêtue ou sous forme nue, on pourra procéder à la pose successive de plusieurs frettes superposées, en répétant à plusieurs reprise l'opération d'enroulement du composite sous forme revêtue, ou, respectivement, en répétant l'alternance d'un enroulement d'une bande de caoutchouc cru suivi d'un l'enroulement du composite sous forme nue, de sorte à obtenir, dans tous les cas, une sous-couche de renfort stratifiée.

Parmi les composants de renfort, on trouvera également de préférence des nappes de renfort, dites « nappes de sommet ». Ces nappes de renfort viendront de préférence se superposer à une sous-couche formée d'au moins une frette, et de préférence de plusieurs frettes superposées, lesdites frettes étant obtenues comme cela a été décrit ci-dessus.

Chaque nappe de renfort comprendra une pluralité de fils de renfort qui joignent une lisière de la nappe à l'autre lisière de ladite nappe et qui sont disposés parallèlement les uns aux autres, selon un angle prédéterminé non nul par rapport à la direction longitudinale de la nappe, dit « angle de nappe ». A titre indicatif, ledit angle de nappe peut être de préférence compris entre 15 degrés et 35 degrés. Les fils de renforts peuvent être en métal, en fibres polymère, par exemple en polyamide (« Nylon ») ou en aramide (« Kevlar »), en fibre textile naturelle, par exemple en coton, en composite verre-résine à base de fibres de verre, ou en fibres de carbone.

De préférence, on superposera au sein d'un même bandage 2 deux nappes de renfort présentant des angles de nappe différents, le cas échéant de signes opposés, de sorte à créer une armature à renforts croisés, qui présente ainsi une grande rigidité.

Chaque nappe de renfort formera de préférence un tour complet et unique autour de l'axe central X4, en se refermant sur elle-même, au niveau d'une jonction dite « soudure ».

Une fois l'armature constituée au moyen des composants de renfort, on posera ensuite la bande de roulement en caoutchouc cru par-dessus ladite armature.

Les composants de bandage seront acheminés jusqu'au noyau 4 et positionnés sur ledit noyau au moyen de têtes de pose 5, 7, 12 adaptées, qui sont visibles sur les figures 1 et 2.

Ainsi, on pourra prévoir que la, ou chaque, bande de caoutchouc mentionnée plus haut soit posée par une première tête de pose 5 pourvue d'un générateur de type pompe 6 qui extrude ladite bande de caoutchouc au fur et à mesure que ladite bande de caoutchouc est utilisée et enroulée sur le noyau 4. Le cas échéant, plusieurs premières têtes de pose 5 pourront être prévues, tel que cela est visible sur les figures 1 et 2, pour pouvoir délivrer sélectivement diverses bandes de caoutchouc de différents formats ou de différentes compositions.

Le câble de renfort ou respectivement la bande de renfort, ici de préférence en Composite Verre-Résine, pourra être appliqué sur le noyau 4 au moyen d'une seconde tête de pose 7 comprenant un rouleau applicateur 8 qui presse ledit câble de renfort, respectivement ladite bande de renfort, contre le noyau 4.

Ladite seconde tête de pose 7 sera de préférence alimentée par un système de déroulage 9 agencé pour recevoir une bobine 10 qui contient une réserve de câble de renfort, respectivement une réserve de bande de renfort. Le système de déroulage 9 pourra comprendre un accumulateur 11 utilisant une pluralité de poulies qui définissent, au moyen d'un entraxe prédéterminé, une série de zig-zags formant un chemin de stockage contenant un stock-tampon de câble de renfort, respectivement de bande de renfort, et dont ledit entraxe sera ajusté dynamiquement, et plus particulièrement dont l'entraxe sera diminué, au fur et à mesure que le câble de renfort, respectivement la bande de renfort, est consommé par le noyau 4, afin de raccourcir en temps réel le chemin de stockage, et donc le stock-tampon de câble de renfort, respectivement de bande de renfort, au sein dudit accumulateur 11, de manière à pouvoir compenser une différence éventuelle entre la vitesse à laquelle la bobine 10 déroule le câble de renfort, respectivement la bande de renfort, et la vitesse à laquelle ledit câble de renfort, respectivement ladite bande de renfort, s'enroule sur le noyau 4. Ainsi, on peut ajuster en temps réel la vitesse de délivrance du câble de renfort, respectivement de la bande de renfort, à la vitesse effective de consommation, qui correspond à la vitesse de rotation du noyau 4.

Ici encore, plusieurs secondes têtes de pose 7 pourront être prévues pour pouvoir délivrer différents câbles de renfort ou bandes de renfort de plusieurs formats ou plusieurs compositions, ou pour assurer la continuité de la production en permettant, lorsqu'une première bobine 10 associée à l'une des secondes têtes de pose 7 arrive à épuisement, de mettre en œuvre une autre seconde tête de pose 7 associée à une seconde bobine 10 pleine, tandis que l'on procède, en temps masqué, au remplacement de la première bobine 10 épuisée.

Les éventuelles nappes de renfort, destinées à s'enrouler selon un unique tour complet sur le noyau 4, et à se refermer ainsi sur elles-mêmes au terme dudit tour complet, pourront être acheminées par une troisième tête de pose 12 qui comprendra de préférence à cet effet un convoyeur, par exemple un convoyeur à bande 13.

Pour simplifier l'organisation de l'installation 1 et faciliter la mise en œuvre des différents composants de bandage, les différentes têtes de pose 5, 7, 12 pourront équiper, individuellement ou par groupe, des sous-stations d'assemblage 3_1, 3_2 distinctes.

Plus particulièrement, tel que cela est visible sur la figure 1, on pourra prévoir d'une part une première sous-station d'assemblage 3_1 qui comprend la première tête de pose 5, ou un ensemble de premières têtes de pose 5, destinées à poser des bandes de caoutchouc cru, et d'autre part une seconde sous-station d'assemblage 3_2 qui comprend au moins une seconde tête de pose 7, préférentiellement deux secondes têtes de pose 7, destinées à poser une bande de renfort, de préférence en composite verre-résine nu ou revêtu de caoutchouc, ainsi qu'au moins une troisième tête de pose 12 pour poser des nappes de renfort.

Les têtes de pose 5, 7, 12 seront bien entendu pourvues de mécanismes de déplacement 14, 15, 16 pour pouvoir se positionner convenablement par rapport au noyau 4 présent dans la station d'assemblage 3, et plus particulièrement dans la sous-station 3_1, 3_2 considérée.

La première tête de pose 5 sera ainsi de préférence portée par un premier mécanisme de positionnement 14 permettant, lorsque le noyau 4 se trouve dans la première sous-station d'assemblage 3_1, au moins un déplacement parallèlement à l'axe central X4 du noyau 4 et un déplacement selon une autre direction, dite « axe transverse » Y, qui est perpendiculaire audit axe central X4, et ici de préférence horizontale.

Un second mécanisme de positionnement 15 permettra à la seconde tête de pose 7 dédiée au câble de renfort ou à la bande de renfort de se déplacer parallèlement à l'axe central X4 et transversalement à l'axe central X4 du noyau 4 présent dans la seconde sous-station d'assemblage 3_2.

De même, un troisième mécanisme de positionnement 16 permettra à la troisième tête de pose 12 dédiée aux nappes de renfort de se déplacer au moins transversalement à l'axe central X4 du noyau présent dans la seconde sous-station d'assemblage 3_2, de préférence d'une part selon l'axe transverse Y, ici horizontal, et d'autre part selon un axe vertical Z, et ce notamment afin de pouvoir adapter la position de la troisième tête de pose 12 au diamètre du noyau 4.

De préférence, le second et le troisième mécanisme de positionnement 15, 16 seront conçus pour permettre à la seconde tête de pose 7 et à la troisième tête de pose 12 de se présenter alternativement en vis-à-vis du noyau 4 présent dans la station d'assemblage 3, ici dans la seconde sous-station d'assemblage 3_2. A ce titre, tel que cela est visible sur la figure 1, le second mécanisme de positionnement 15 pourra notamment comprendre un rail 15_R horizontal et parallèle à l'axe central X4 du noyau, afin de pouvoir alternativement dégager puis engager la seconde tête de pose 7 en vis-à-vis du noyau 4, tandis que le troisième mécanisme de positionnement 16 pourra comprendre un rail 16_R horizontal et orthogonal à l'axe central X4 afin de pouvoir alternativement dégager puis engager la troisième tête de pose 12 en vis-à-vis du noyau 4 présent dans la seconde sous-station d'assemblage 3_2.

L'installation 1, et plus particulièrement la station d'assemblage 3, pourra en outre comporter un dispositif de permutation 17 agencé pour positionner le noyau 4 en vis-à-vis de la sous-station d'assemblage 3_1, 3_2 adéquate. Ledit dispositif de permutation 17 pourra par exemple utiliser deux broches 18 qui sont aptes à recevoir chacune un noyau 4, et qui matérialisent chacune l'axe central X4 du noyau 4 concerné, lesdites broches 18 étant montées sur une tête rotative 19, ici à axe horizontal, pour pouvoir échanger leur place respectivement en vis-à-vis de la première sous-station d'assemblage 3_1 et de la seconde sous-station d'assemblage 3_2. De préférence, les broches 18 s'étendent à l'horizontale, selon des directions parallèles l'une à l'autre, et sont décalées verticalement l'une par rapport à l'autre. Ainsi, le dispositif de permutation 17 permet de conserver l'orientation générale de l'axe central X4 du noyau 4, quelle que soit la sous-station, à savoir la première sous-station d'assemblage 3_1 ou la seconde sous-station d'assemblage 3_2, dans laquelle ledit noyau 4 est placé par le dispositif de permutation 17.

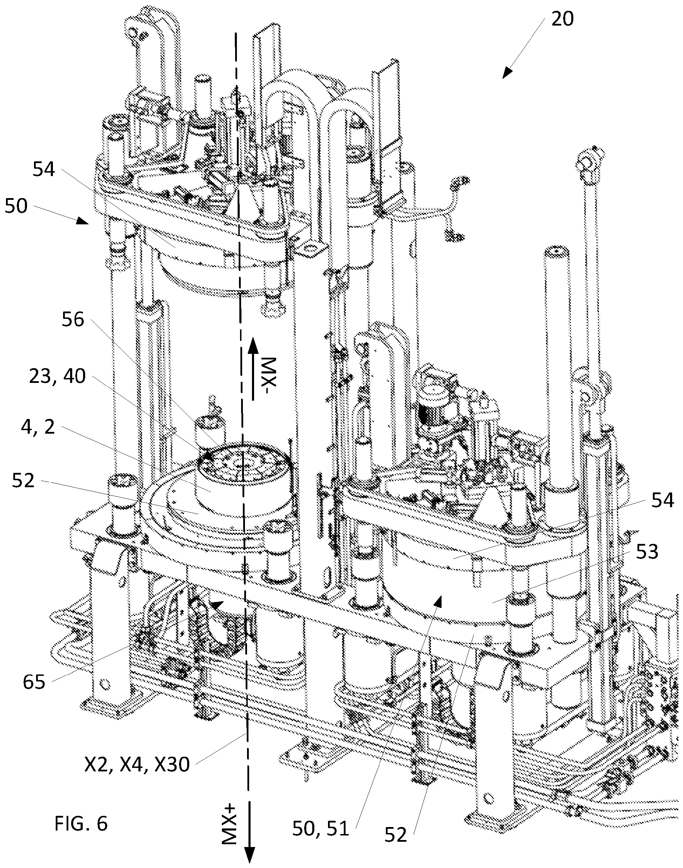

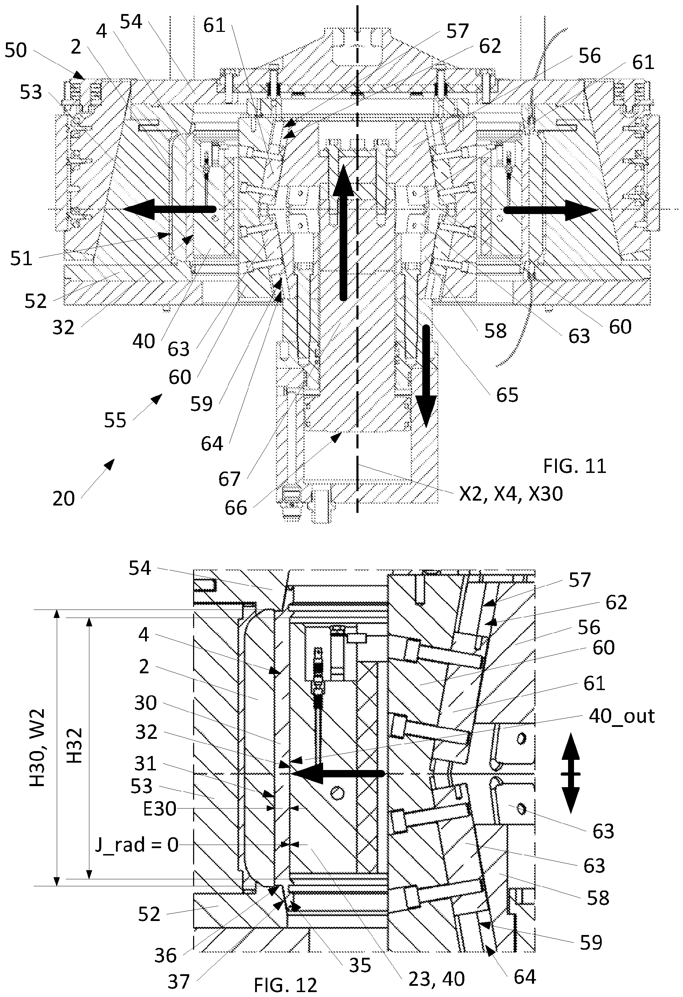

L'installation 1 comprend également une station de cuisson 20 agencée pour recevoir l'ensemble formé par le noyau 4 et le bandage annulaire cru 2A porté par ledit noyau 4, et pour chauffer ledit ensemble lors d'une opération de cuisson, tel que cela est illustré sur les figures 6 et 11, afin d'obtenir un bandage annulaire cuit 2B.

On notera que, par commodité de description, les références 2, 2A et 2B désignent globalement le même objet, à savoir le bandage annulaire 2, les références 2A et 2B étant utilisée simplement pour différencier, lorsque cela est utile à une bonne compréhension, ledit bandage annulaire 2 dans son état cru, avant l'opération de cuisson, et respectivement ledit bandage annulaire 2 dans son état cuit, après l'opération de cuisson.

L'opération de cuisson a ici pour but de vulcaniser le ou les composants de bandage qui contiennent initialement du caoutchouc cru, tels que par exemple la ou les bandes de caoutchouc cru qui sont associées au renfort nu en composite verre-résine sous sa forme nue pour former un stratifié, ou bien le revêtement en caoutchouc du renfort en composite verre-résine sous sa forme revêtue, ou encore la bande de roulement.

Ladite opération de cuisson est réalisée à une température adaptée, de préférence supérieure à 120°C, plus préférentiellement supérieure ou égale à 140°C, voire supérieure ou égale à 150°C, et qui peut être par exemple comprise entre 140°C et 300°C, et notamment comprise entre 150°C et 180°C.

L'installation 1 comprend également une station d'extraction 21 qui est agencée pour, après l'opération de cuisson, séparer le bandage annulaire cuit 2B du noyau 4, tel que cela est notamment illustré sur les figures 14 à 18.

Cette opération de séparation sera décrite plus en détail dans ce qui suit.

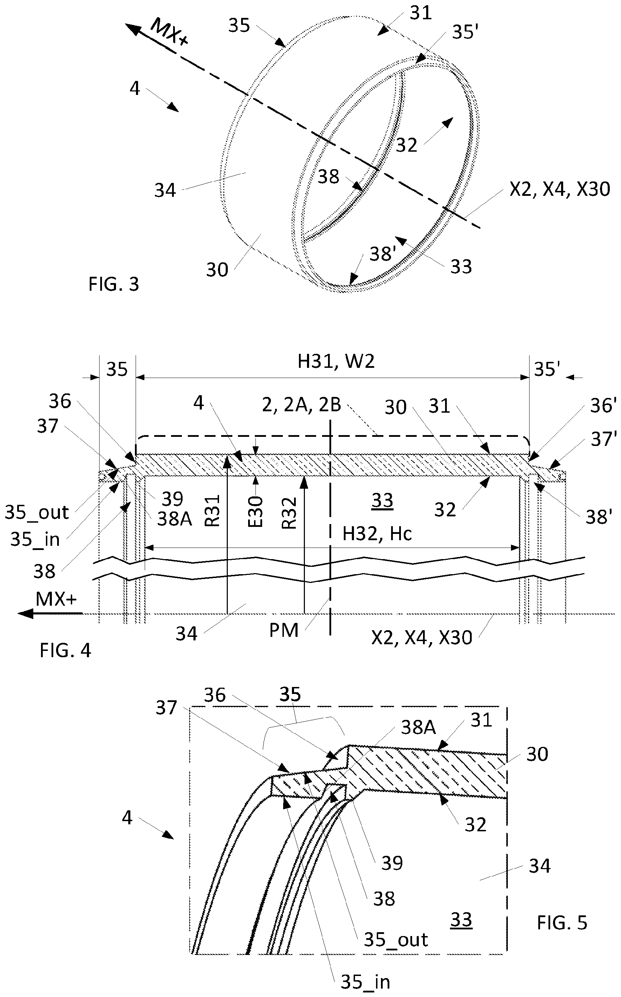

Selon l'invention, et tel que cela est notamment bien visible sur les figures 3, 4 et 5, le noyau 4 possède une paroi tubulaire 30 qui s'étend le long et autour d'un axe central X30. Ladite paroi tubulaire 30 s'étend en épaisseur E30, radialement audit axe central X30, depuis une première face annulaire radialement externe 31, dite « face réceptrice » 31, qui est destinée à recevoir le ou les composants de bandage, jusqu'à une seconde face annulaire 32, radialement interne, dite « face d'échange » 32, qui entoure l'axe central X30 et qui est destinée à permettre des échanges thermiques entre la paroi tubulaire 30 du noyau 4 et des sources thermiques 23, 24 extérieures audit noyau 4.

L'axe central X30 de la paroi tubulaire 30 se confond en pratique avec l'axe central X4 global du noyau 4, de sorte que l'on pourra assimiler ces deux références l'une à l'autre dans ce qui suit.

Par « axiale » ou « axialement », on désignera une direction qui est parallèle à (et plus précisément colinéaire à, si l'on raisonne en trois dimensions), ou même confondue, avec ledit axe central X30, respectivement X4.

Par « radiale », ou « radialement », on désignera une direction qui est perpendiculaire audit axe central X30, respectivement X4.

Par « circonférentiel », on désignera une direction ou un élément qui, au point considéré, s'étend perpendiculairement à un rayon, et orthogonalement à l'axe central, et donc tangentiellement à la surface cylindrique de base circulaire qui est centrée sur l'axe central et qui passe par le point considéré.

La face réceptrice 31 formera de préférence un cylindre droit, et plus préférentiellement un cylindre droit de base circulaire, ledit cylindre étant centré sur l'axe central X30 et généré par des lignes génératrices parallèles à l'axe central X30.

Bien qu'il ne soit pas exclu, dans l'absolu, que la face d'échange 32 présente une forme annulaire non strictement cylindrique, par exemple une forme légèrement tronconique, ladite face d'échange 32 formera de préférence un cylindre droit, préférentiellement un cylindre droit de base circulaire, et sera de préférence concentrique à la face réceptrice 31.

De préférence, la distance radiale de la face réceptrice 31 à l'axe central X30, distance qui correspond ici en pratique au rayon R31 du cylindre droit que forme ladite face réceptrice 31, c'est-à-dire au rayon externe de la paroi tubulaire 30 et donc au rayon interne du bandage annulaire 2, est égale ou supérieure à 175 mm, de préférence comprise entre 200 mm et 500 mm.

Les valeurs préférées de dimensionnement indiquées ci-dessus permettent avantageusement, en pratique, d'obtenir un bandage annuaire 2 dont les dimensions hors-tout équivalent aux dimensions que l'on rencontre de manière usuelle au sein des bandages pneumatiques connus qui sont destinés à être montés sur des jantes présentant un diamètre d'accrochage, sur lequel vient en appui le bourrelet du bandage, qui est compris entre 13 pouces et 24 pouces, ce qui permet de remplacer aisément des bandages existants, notamment des bandages pneumatiques existants, par des bandages 2 obtenus selon l'invention, en conservant les mêmes standards dimensionnels.

Par ailleurs, la hauteur axiale H31 de la face réceptrice 31, qui correspondra en pratique à la largeur W2 du bandage annulaire 2, sera de préférence comprise entre 80 mm et 400 mm.

Les sources thermiques 23, 24 seront quant à elles destinées à apporter de la chaleur au noyau 4, pour chauffer ce dernier, ou au contraire à évacuer de la chaleur afin de forcer le refroidissement dudit noyau 4.

Par « extérieures au noyau », on indique que lesdites sources thermiques 23, 24 ne font pas partie du noyau 4, et ne sont donc pas intégrées au noyau 4, de sorte qu'elles ne sont pas, ni l'une, ni l'autre, transportées avec le noyau 4 lorsque ce dernier est transféré d'une station à une autre station. De préférence, chaque source thermique 23, 24 est attachée à une station 20, 21 spécifique, et n'est pas déplacée d'une station à une autre station.

Selon l'invention, la station de cuisson 20 comprend une première source thermique 23, chauffante, qui est conçue pour venir s'appliquer contre la face d'échange 32 du noyau lorsque ledit noyau 4 se trouve dans ladite station de cuisson 20, tel que cela est visible sur les figures 11, 12 et 13, afin de chauffer ledit noyau 4 et le bandage annulaire 2 lors de l'opération de cuisson, puis pour se dissocier du noyau 4 afin de laisser à nouveau libre la face d'échange 32, tel que cela est visible sur les figures 8, 9, 10 et 14, lorsque le noyau 4 et le bandage annulaire cuit 2B quittent ladite station de cuisson 20 et sont transférés à la station d'extraction 21 après l'opération de cuisson.

En outre, selon l'invention, la station d'extraction 21 comprend une seconde source thermique 24, réfrigérante, qui est conçue pour, lorsque le noyau 4 et le bandage annulaire cuit 2B se retrouvent dans ladite station d'extraction 21, venir succéder à la première source thermique 23 au contact de la face d'échange 32 du noyau, afin de refroidir ledit noyau 4, tel que cela est visible sur les figures 14, 15 et 17.

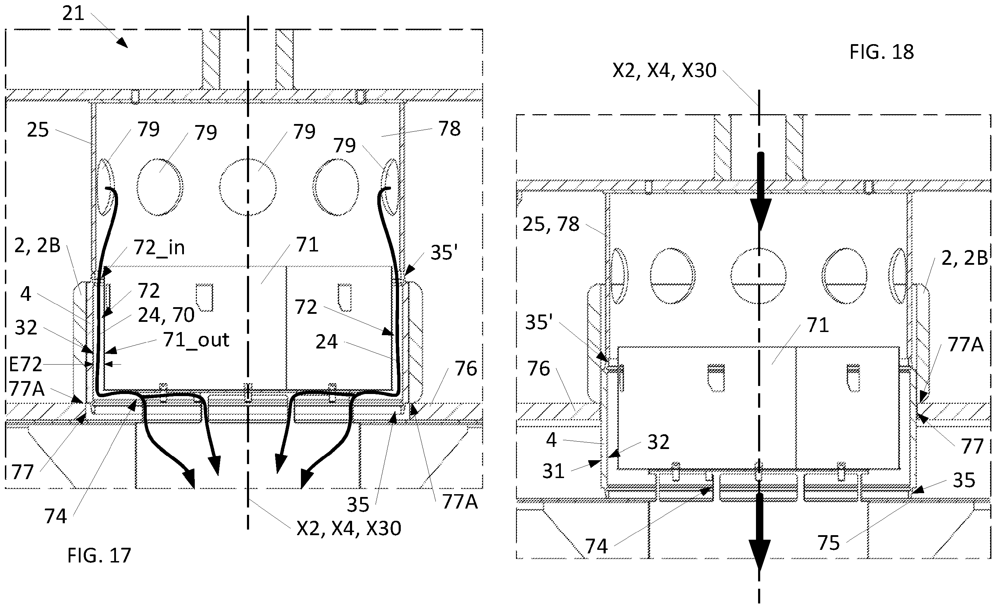

Cette opération de refroidissement est réalisée de manière à créer un jeu radial entre la face réceptrice 31 du noyau 4 et le bandage annulaire cuit 2B, par contraction radiale différentielle de la paroi tubulaire 30 du noyau 4 par rapport au bandage annulaire cuit 2B, et ainsi permettre à un organe éjecteur 25 équipant la station d'extraction 21 de dégager axialement le bandage annulaire cuit 2B du noyau 4, tel que cela est visible sur les figures 16 et 18.

La paroi tubulaire 30 du noyau 40 se contracte avantageusement davantage que le bandage annulaire cuit 2B, et donc le rayon R31 de la face réceptrice 31, qui constitue le rayon externe de ladite paroi tubulaire 30, se réduit par rapport au rayon interne du bandage annulaire cuit 2B, du fait que l'on refroidit plus rapidement le noyau 40 que le bandage annulaire cuit 2B qui conserve en partie sa chaleur, puisque ledit bandage annulaire cuit 2B n'est pas directement exposé à la seconde source thermique 24 réfrigérante.

Comme indiqué plus haut, le noyau 4 selon l'invention offre avantageusement une même face d'échange 32 successivement à la première source thermique chauffante 23 puis à la seconde source thermique réfrigérante 24, qui se substituent l'une à l'autre pour coopérer alternativement, et exclusivement l'une de l'autre, avec ladite face d'échange 32, chacune au sein de la station 20, 21 qui lui correspond, et, avantageusement, directement contre la paroi tubulaire 30, donc directement au dos de la face réceptrice 31, et par conséquent à proximité immédiate du bandage 2 qui est séparé de ladite face d'échange 32 uniquement par l'épaisseur E30 de ladite paroi tubulaire 30.

Avantageusement, le noyau 4 peut donc, par rapport aux noyaux utilisés dans l'état de la technique, être allégé de la masse, et du volume, des sources thermiques, et plus particulièrement des sources chauffantes, qui étaient jusqu'ici embarquées.

En outre, l'action de la seconde source thermique 24 réfrigérante n'est ainsi ni ralentie ni gênée par une présence résiduelle de la première source thermique 23 chauffante, puisque ladite première source thermique 23 est absente du noyau 4 lorsque la seconde source thermique 24 entre en action, et réciproquement, l'action de la première source thermique chauffante 23 n'est pas pénalisée par une présence résiduelle de la seconde source thermique 24 réfrigérante, puisque celle-ci est absente du noyau 4 lorsque la première source thermique 23 chauffante entre en action. Les sources thermiques 23, 24 de l'invention, bien qu'assurant des fonctions antagonistes, l'une consistant à chauffer et l'autre à refroidir, ne se gênent donc pas mutuellement, et en particulier ne ralentissent pas mutuellement leurs actions respectives.

De la sorte, le noyau 4 peut présenter une structure légère, fine, qui optimise les échanges thermiques, et permet donc de réduire significativement la quantité d'énergie nécessaire à un cycle de fabrication, ainsi que la durée dudit cycle de fabrication.

A titre indicatif, l'épaisseur E30 de la paroi tubulaire 30 du noyau 4, qui sépare radialement la face d'échange 32 de la face réceptrice 31, sera préférentiellement inférieure ou égale à 40 mm, de préférence inférieure ou égale à 25 mm, préférentiellement inférieure ou égale à 20 mm, voire inférieure ou égale à 15 mm, et par exemple égale à 12 mm.

Plus préférentiellement, l'épaisseur E30 sera comprise entre 6 mm et 40 mm, ou entre 6 mm et 30 mm, encore plus préférentiellement entre 8 mm et 25 mm, entre 8 mm et 20 mm, ou même entre 10 mm et 15 mm.

Une telle gamme d'épaisseur E30 de paroi tubulaire présente avantageusement un bon compromis entre une faible résistance thermique, qui est d'autant moindre que la paroi tubulaire 30 est fine, et une rigidité structurelle suffisante de la paroi tubulaire 30, et plus globalement une rigidité structurelle suffisante du noyau 4, qui est d'autant plus élevée que ladite paroi tubulaire 30 est épaisse.

A ce titre, on notera que, avantageusement, la rigidité intrinsèque de la paroi tubulaire 30 est suffisante pour qu'il ne soit pas nécessaire de prévoir des raidisseurs internes dans l'alésage 33 que délimite la face d'échange 32, ce qui permet de laisser ledit alésage 33 totalement dégagé, et ainsi d'avoir un accès optimal à une face d'échange 32 dont l'étendue est maximisée.

Bien entendu, les caractéristiques dimensionnelles ci-dessus concernant l'épaisseur E30 de la paroi tubulaire 30 se combinent de préférence au choix mentionné plus haut quant à la distance radiale R31 de la face réceptrice 31 à l'axe central X30, qui est de préférence égale ou supérieure à 175 mm, et de préférence comprise entre 200 mm et 500 mm.

Les différentes dimensions d'épaisseur et de rayon mentionnées ci-dessus correspondent de préférence à des dimensions considérées au repos et « à froid », c'est-à-dire lorsque le noyau 4 se trouve libre de contraintes et à température ambiante, typiquement entre 20°C et 25°C.

De préférence, et toujours dans le but de maintenir un bon compromis entre une rigidité structurelle suffisante et une minimisation de l'épaisseur E30 et donc une minimisation de la résistance thermique de ladite paroi tubulaire 30, le rapport R32/R31 entre d'une part le rayon interne R32, c'est-à-dire le rayon de la face d'échange 32 considéré par rapport à l'axe central X30, X4, et d'autre part le rayon externe R31, c'est-à-dire le rayon de la face réceptrice 31 par rapport audit axe central X30, X4, sera égal ou supérieur à 80%, de préférence égal ou supérieur à 85%, voire égal ou supérieur à 90%, et par exemple compris entre 91% et 97%, voire compris entre 95% et 97%.

Si la face 31, 32 concernée présente une forme cylindrique de base circulaire et de rayon constant, alors le rayon R31, R32 considéré sera ledit rayon constant de la base circulaire. Dans le cas contraire, par exemple si la face interne 32 présente des reliefs de sorte que sa distance à l'axe central X30 varie en fonction de la position azimutale considérée autour dudit axe central X30, alors on pourra de préférence considérer, pour établir le rapport R32/R31 ci-dessus, le rayon moyen de ladite face 31, 32, c'est-à-dire la moyenne des distances à l'axe central X30 de tous les points de la face 31, 32 concernée.

Par ailleurs, afin de permettre une maximisation de la superficie de la face d'échange 32 au dos de la face réceptrice 31, et ainsi afin de tirer le meilleur parti de la puissance des sources thermiques 23, 24 qui exploitent tour à tour cette face d'échange 32, le noyau 4 sera de préférence agencé de sorte que la face d'échange 32, effectivement disponible pour l'application des sources thermiques 23, 24, chevauche axialement la face réceptrice 31 sur une hauteur axiale, dite « hauteur commune » Hc, qui représente au moins 85 %, de préférence au moins 90 %, voire au moins 95 %, de la hauteur axiale H31 de la face réceptrice 31, tel que cela est visible sur la figure 4.

Cette hauteur commune Hc est ici égale à la hauteur axiale H32 de la face d'échange 32, et plus particulièrement à la hauteur axiale H32 de la portion cylindrique droite de base circulaire et de rayon R32 constant de la face d'échange 32, libre, accessible et réservée pour les sources thermiques 23, 24, tel que cela est visible sur la figure 4.

Par ailleurs, tel que cela est notamment visible sur les figures 3, 4, 5, 10, 13, ou 19, la face réceptrice 31 du noyau 4 est de préférence formée d'un seul tenant de sorte à présenter une continuité de matière tout autour de l'axe central X30, X4.

En d'autres termes, la face réceptrice 31 est de préférence continue sur 360 degrés autour de l'axe central X30, de sorte à ne pas présenter de fractionnement ni par conséquent de plan de joint lorsqu'on parcourt ladite face réceptrice 31 en faisant le tour dudit axe central X30.

On obtiendra ainsi, après extraction du bandage annulaire cuit 2B hors du noyau 4, une face interne du bandage annulaire 2 qui présente un excellent état de surface, sans bavures ou autres défauts de régularité indésirables, ce qui permettra ensuite d'accoupler et de fixer directement des rayons contre ladite face interne du bandage annulaire, sans qu'il soit nécessaire d'effectuer au préalable une reprise d'usinage du genre ébarbage ou polissage sur ladite face interne du bandage annulaire 2.

De préférence, la paroi tubulaire 30, et plus globalement le noyau 4, peut former une pièce de révolution d'un seul tenant, qui forme un contour fermé ininterrompu autour de l'axe central X30, X4.

Préférentiellement, et tel que cela est visible sur les figures 3, 4, 10, 19 et 20, le noyau 4 est constitué pour plus de 90 % de sa masse, de préférence pour plus de 95 % de sa masse, plus préférentiellement pour plus de 98 % de sa masse, voire pour la totalité - soit 100% - de sa masse, d'une unique virole 34 monobloc, de base circulaire, centrée sur l'axe central X30, X4, et qui comprend au moins la paroi tubulaire 30.

Le noyau 4 présentera ainsi une structure particulièrement simple, robuste et peu coûteuse à fabriquer.

La paroi tubulaire 30 présente de préférence une épaisseur E30 pleine, c'est-à-dire que le ratio entre le volume éventuel de vide (cavités) et le volume de matériau plein, dans la région de l'espace qui s'étend entre la face d'échange 32 et la face réceptrice 31, est nul, ou sensiblement nul, c'est-à-dire ici au moins inférieur à 5%, voire inférieur à 1%. Ceci permettra notamment d'assurer des transferts thermiques efficaces, et notamment un apport de chaleur efficace, par conduction à travers l'épaisseur E30 de la paroi tubulaire 30.

Selon une variante de réalisation préférentielle, ladite épaisseur E30 de la paroi tubulaire 30 sera constante, le profil de la face d'échange 32, considéré dans un plan fictif normal à l'axe central X30, X4, présentant la même forme que le profil de la face réceptrice 31, de préférence un profil circulaire de rayon constant.

L'alésage 33 de la virole 34 sera de préférence totalement dégagé, et notamment dépourvu de raidisseurs rapportés et fixés sur la face interne de la virole 34, et plus particulièrement dépourvu de raidisseurs rapportés sur la face interne de la paroi tubulaire 30.

De préférence, tel que cela est bien visible sur les figures 3 et 4, ledit alésage 33 traversera axialement le noyau 4 de part en part, en étant ainsi ouvert aux deux extrémités axiales dudit noyau 4. Ceci rendra particulièrement aisé l'accès des sources thermiques 23, 24 à la face d'échange 32, par l'intérieur du noyau 4.

A titre indicatif, eu égard à la finesse de la paroi tubulaire 30, et plus globalement eu égard à la finesse de la virole 34, le volume libre de l'alésage 33 à l'intérieur du noyau 4 pourra de préférence représenter plus de 85%, de préférence au moins 90% du volume total hors-tout occupé par le noyau 4. Ledit volume hors-tout correspond ici au volume du cylindre qui est délimité radialement par la paroi radialement externe du noyau 4, ici donc de la virole 34, et qui s'étend axialement depuis un premier plan de base fictif normal à l'axe central X4 et tangent à la première extrémité axiale du noyau 4, ici de la virole 34, jusqu'à un second plan de base fictif normal à l'axe central X4 et tangent à la seconde extrémité axiale du noyau 4, ici de la virole 34, opposée axialement à la première extrémité .

La paroi tubulaire 30, et de préférence plus globalement la virole 34, sera réalisée dans un matériau choisi de sorte à présenter une bonne conductivité thermique, typiquement égale ou supérieure à 20 W m⁻¹ K⁻¹ à 20°C, de préférence égale ou supérieure à 40 W m⁻¹ K⁻¹ à 20°C, voire égale ou supérieure à 100 W m⁻¹ K⁻¹ à 20°C, et par exemple comprise entre 150 W m⁻¹ K⁻¹ et 200 W m⁻¹ K⁻¹ à 20°C.

Par ailleurs, afin de présenter une bonne rigidité structurelle, le matériau constitutif de la paroi tubulaire 30, et plus globalement le matériau constitutif de la virole 34, présentera de préférence un module d'Young en traction égal ou supérieur à 70 000 MPa.

De préférence, la paroi tubulaire 30, préférentiellement la virole 34, et ce en particulier si la virole 34 forme d'un seul tenant le noyau 4 dans son ensemble, sera réalisée dans un alliage métallique, par exemple un alliage d'aluminium.

Préférentiellement, et tel que cela est visible notamment sur les figures 3, 4, 5, 9 et 12, le noyau 4 possède, dans le prolongement axial de la face réceptrice 31, en saillie axiale de ladite face réceptrice 31, un tronçon annulaire d'accouplement 35 qui présente au moins l'un des deux agencements suivants, et de préférence chacun des deux agencements suivants : (i) un premier agencement selon lequel le tronçon d'accouplement 35 présente, sur sa face radialement externe 35_out, d'une part un épaulement 36 qui est radialement rentrant par rapport à la face réceptrice 31, lequel épaulement 36 forme ainsi une limite axiale de la face réceptrice 31 et une butée axiale apte à stopper un mouvement d'introduction MX+ axial du noyau 4 dans au moins l'une des stations 3, 20, 21, et d'autre part une portion tronconique 37 qui précède axialement l'épaulement 36, à l'opposé de la face réceptrice 31, pour assurer un centrage du noyau 4 par rapport à la station lors dudit mouvement d'introduction MX+, et (ii) un second agencement selon lequel le tronçon d'accouplement 35 comporte, sur sa face radialement interne 35_in qui prolonge axialement la face d'échange 32, hors de ladite face d'échange 32, un ou des renfoncements de préhension 38, tels qu'une gorge annulaire 38, prévus pour permettre la saisie dudit noyau 4 par un outil de préhension 108 qui est embarqué sur un dispositif de transfert 100 permettant de transporter le noyau 4 d'une station à l'autre.

De préférence, le tronçon annulaire d'accouplement 35 est formé d'un seul tenant avec la paroi tubulaire 30. Par conséquent, ledit tronçon d'accouplement 35 fait de préférence partie intégrante de la virole 34.

Tel que cela est bien visible sur les figures 4, 5 et 9, la portion tronconique 37 est raccordée à la paroi tubulaire 30 par sa base large, de sorte que la face radialement externe 35_out du tronçon d'accouplement présente une forme qui converge vers l'axe central X30, X4 au fur et à mesure que l'on s'éloigne de la face réceptrice 31 et de l'épaulement 36 correspondant pour aller en direction de l'extrémité axiale du noyau 4 qui est la plus proche de ladite face réceptrice 31, et donc la plus proche dudit épaulement 36.

On notera que le premier agencement, qui prévoit une portion tronconique 37 associée à un épaulement 36, est de préférence utilisé notamment pour positionner convenablement le noyau 4 au sein de la station de cuisson 20.

De préférence, la gorge annulaire 38 sera située axialement hors et au-delà de la face réceptrice 31, de sorte à ne pas empiéter sur la surface utile qui est située radialement au dos de ladite face réceptrice 31, et qui est réservée à la face d'échange 32. Selon une possibilité d'agencement, la gorge annulaire 38 pourra débuter à l'aplomb radial de l'épaulement 36, et plus particulièrement à l'aplomb radial de l'intersection entre ledit épaulement et la portion tronconique 37. Ainsi, plus globalement, on notera que le tronçon d'accouplement 35 n'interfère avantageusement pas avec l'espace axial du noyau 4 qui correspond avec la paroi tubulaire 30, afin de ne pas empiéter sur les faces réceptrice 31 et d'échange 32, ni par conséquent réduire la superficie desdites faces 31, 32 ou interférer dans leur fonctionnement.

Par ailleurs, la face interne de la virole 34 pourra également présenter, de préférence à la transition entre la face d'échange 32 et la gorge annulaire 38, un collet 39 qui fait radialement saillie dans l'intérieur de l'alésage 33. La présence dudit collet 39 permet notamment d'éviter un affaiblissement du noyau 4 à l'aplomb radial du décrochement formé par l'épaulement 36. Ledit collet 39 peut également contribuer à faciliter l'accostage de l'outil de préhension 108 dans ladite gorge annulaire 38, en matérialisant une paroi de la gorge annulaire 38. Toujours dans le but de faciliter l'accostage et l'engagement de l'outil de préhension 108 dans la gorge annulaire 38, la paroi de la gorge annulaire 38 qui est située axialement à l'opposé du collet 39 pourra de préférence former une pente 38A qui converge vers le fond de ladite gorge annulaire 38, en direction du collet 39.

Selon une possibilité de réalisation particulièrement préférée, la virole 34, et plus globalement le noyau 4, présente une forme symétrique par rapport à un plan médian PM qui est normal à l'axe central X4, X30 et qui coupe la face réceptrice 31 à la moitié de la hauteur axiale H31 de celle-ci, c'est-à-dire en pratique un plan médian qui correspond au plan équatorial du bandage annulaire 2. Ceci étant, on pourrait également envisager, dans l'absolu, une variante de virole 34 qui ne soit pas symétrique par rapport au plan médian PM.

En tout état de cause, on notera que la virole 34 comprend de préférence, tel que cela est visible sur les figures 3 et 4, deux tronçons d'accouplement 35, 35', situés chacun à l'une des extrémités axiales du noyau 4, de part et d'autre axialement de la paroi tubulaire 30.

Chacun desdits tronçons d'accouplement 35, 35' sera de préférence pourvu, comme indiqué ci-dessus, d'un épaulement 36, 36', d'une portion tronconique 37, 37' et d'un renfoncement de préhension tel qu'une gorge annulaire 38, 38'.

De façon particulièrement préférentielle, le second tronçon d'accouplement 35' présentera un agencement qui est symétrique de l'agencement du premier tronçon d'accouplement 35 par rapport à un plan normal à l'axe central X4, de préférence par rapport au plan médian PM.

Avantageusement, le choix d'une disposition symétrique de la virole 34, et plus particulièrement des tronçons d'accouplement 35, 35' permettra de réaliser le noyau 4 selon une forme particulièrement simple, mais également permettra de saisir, de manipuler et d'utiliser le noyau 4 indifféremment dans un sens ou dans l'autre selon l'axe central X4, X30, ce qui simplifiera la mise en œuvre dudit noyau 4, et plus globalement du procédé de fabrication selon l'invention.

De préférence, l'épaisseur radiale maximale de chaque tronçon d'accouplement 35, 35' ne dépassera pas l'épaisseur E30 de la paroi tubulaire 30. Plus préférentiellement, et plus globalement, la virole 34 présentera en tout point, sur toute la longueur axiale occupée par la virole 34, une épaisseur de paroi qui est égale ou inférieure à l'épaisseur E30 de la paroi tubulaire 30, c'est-à-dire une épaisseur qui sera égale ou inférieure à 40 mm, de préférence égale ou inférieure à 25 mm, voire égale ou inférieure à 15 mm. Ainsi, la virole 34 formant le noyau 4 sera particulièrement fine et légère.

Selon un possible critère de dimensionnement préférentiel, la virole 34, voire préférentiellement le noyau 4 dans son intégralité, sera intégralement contenue dans une enveloppe de jauge, fictive, qui est formée par une portion de cylindre droit de base circulaire, centré sur l'axe central X4, X30, et qui s'étend depuis un premier rayon interne de jauge dont la valeur est comprise entre 135 mm et 480 mm, premier rayon interne qui correspond en pratique au rayon du passage le plus étroit de l'alésage 33, et donc préférentiellement au rayon interne du tronçon d'accouplement 35 (le cas échéant, le plus petit rayon interne du tronçon d'accouplement si le rayon interne du tronçon d'accouplement varie le long ou autour de l'axe), jusqu'à un second rayon externe de jauge dont la valeur est égale à la valeur du rayon interne de jauge majorée d'une valeur dite « épaisseur radiale de jauge » qui est non nulle, de préférence supérieure ou égale à 8 mm, voire égale ou supérieure à 10 mm, et en tout état de cause inférieure ou égale à 50 mm, préférentiellement inférieure ou égale à 30 mm, voire inférieure ou égale à 20 mm.

De préférence, la première source thermique 23, utilisée par la station de cuisson 20, comprend une pluralité de secteurs chauffants 40, lesdits secteurs chauffants 40 étant conçus de manière à venir s'appliquer contre la face d'échange 32, par l'intérieur du noyau 4.

Chaque secteur chauffant 40 forme avantageusement un bloc solide, qui couvre un secteur angulaire représentant une portion de la circonférence de la face d'échange 32, et dont la face radialement externe 40_out, qui vient au contact de la face d'échange 32, en appui radial centrifuge, présente de préférence une forme incurvée, ici globalement concave et par exemple en arc de cylindre, qui est conjuguée à ladite face d'échange 32, ici globalement concave, afin d'épouser ladite face d'échange 32. A ce titre, le rayon de courbure de la face radialement externe 40_out du secteur chauffant, considéré dans un plan normal à l'axe central X4, est de préférence égal au rayon R32 de la face d'échange 32.

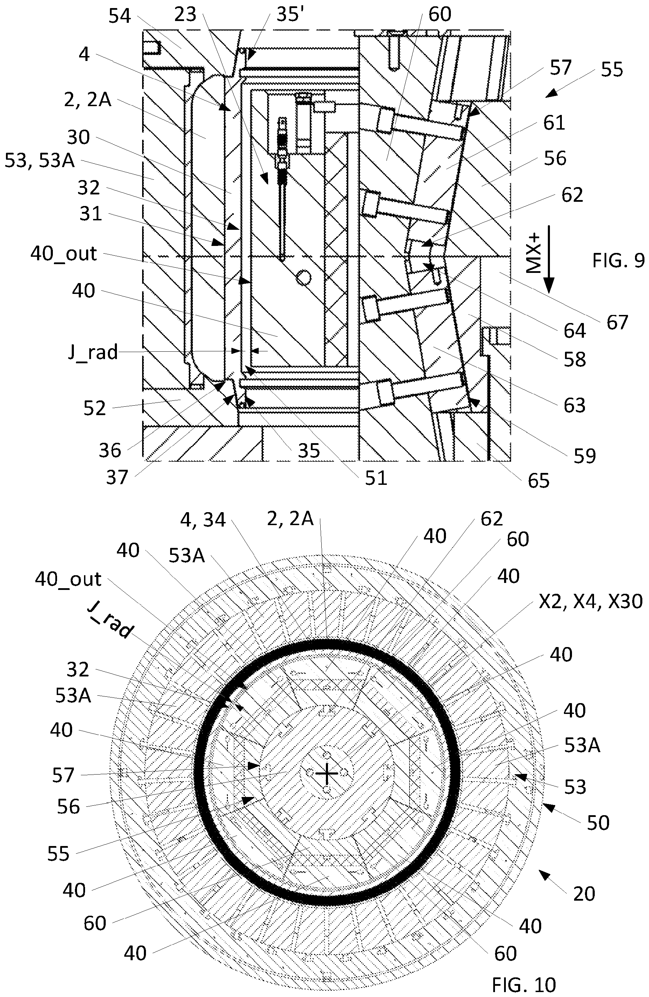

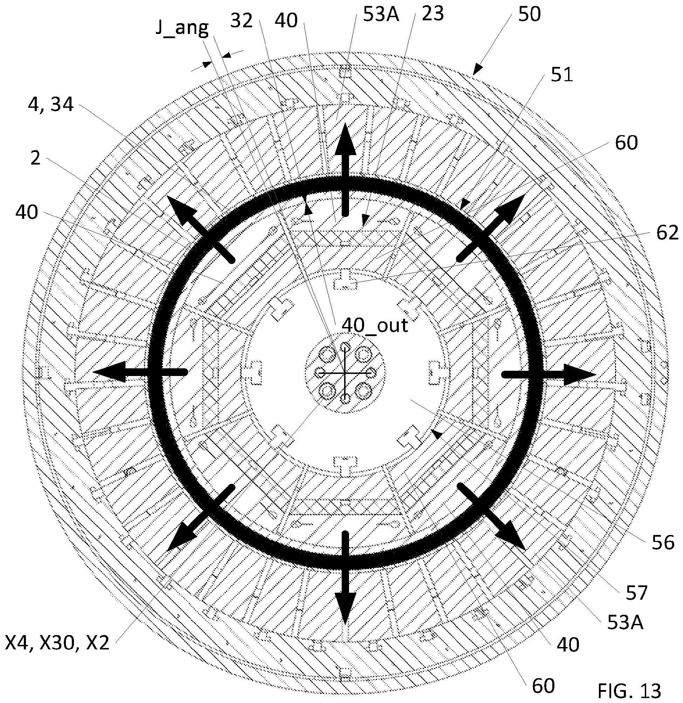

De préférence, la première source thermique comprendra de six à douze secteurs chauffants 40, de préférence huit secteurs chauffants 40, répartis en azimut, préférentiellement équirépartis en azimut, autour de l'axe central X4, X30, en vis-à-vis de la circonférence de la face d'échange 32, tel que cela est visible sur les figures 10 et 13.

De préférence, lesdits secteurs chauffants 40 seront identiques les uns aux autres, par commodité de réalisation et dans un but d'interchangeabilité.

De préférence, lesdits secteurs chauffants 40 sont porteurs chacun d'au moins une résistance électrique chauffante 41, tel que cela est notamment visible par transparence sur la figure 7.

La résistance électrique chauffante 41 sera conçue et dimensionnée pour pouvoir porter et maintenir le secteur chauffant 40 à une température jugée adéquate pour obtenir la cuisson du bandage annulaire 2, typiquement dans une plage de température telle que mentionnée plus haut, et donc par exemple à une température comprise entre 150°C et 180°C.

De préférence, le cheminement de la résistance électrique chauffante 41 à travers le secteur chauffant 40 n'est pas rectiligne, mais suit une ligne sinueuse qui présente de préférence plusieurs lobes 42 de sorte à couvrir au mieux la surface radialement externe 40_out, et plus globalement le volume, du secteur chauffant 40.

Quelle que soit la forme de la première source thermique 23, et en particulier lorsque celle-ci comprend des secteurs chauffants 40 tels que décrits ci-dessus, ladite première source thermique 23, et plus particulièrement lesdits secteurs chauffants 40, sont conçus de manière à occuper pendant l'opération de cuisson, puis à libérer après l'opération de cuisson, une superficie de contact sur la face d'échange 32, dite « superficie chauffante utile », qui représente axialement au moins 80%, de préférence au moins 85%, préférentiellement au moins 90%, voire au moins 95% de la hauteur axiale H31 de la face réceptrice 31 couverte par le bandage annulaire 2, et angulairement, en couverture azimutale autour de l'axe central X30, au moins 270 degrés, de préférence au moins 300 degrés, voire au moins 330 degrés.

Ainsi, la première source thermique 23, et plus particulièrement les secteurs chauffants 40, couvriront la quasi-totalité du dos de la face réceptrice 31, ce qui maximisera l'efficacité de l'apport de chaleur au bandage annulaire 2 par conduction à travers la paroi tubulaire 30.

On notera que la couverture angulaire cumulée des secteurs chauffants 40, considérés dans leur ensemble, autour de l'axe central X4, X30 sera avantageusement la plus étendue possible, et donc la plus proche possible d'une couverture totale sur 360 degrés. En effet, les seules interruptions de ladite couverture angulaire cumulée correspondront aux jeux de fractionnement J_ang qui séparent deux à deux les secteurs chauffants 40 adjacents, lorsque lesdits secteurs chauffants 40 sont au contact de la face d'échange 32, tel que cela est visible sur la figure 13. De préférence, lesdits jeux de fractionnement J_ang seront inférieurs chacun à 10 degrés, préférentiellement inférieurs chacun à 5 degrés, voire inférieurs chacun à 3 degrés, et par exemple égaux chacun à 2 degrés.

Avantageusement, l'invention permet d'exploiter au mieux la face d'échange 32, et ce aussi bien pour la cuisson que pour le refroidissement nécessaire à l'extraction.

De préférence, on dimensionnera à cet effet le noyau 4, ainsi que les première et seconde sources thermiques 23, 24 de sorte (i) d'une part à maximiser le ratio entre, au numérateur, la superficie de la face d'échange 32, considérée comme le cylindre dont le rayon vaut le rayon moyen R32 de la face d'échange 32 et la hauteur axiale vaut la hauteur commune Hc sur laquelle ladite face d'échange 32 chevauche axialement la face réceptrice 31, et, au dénominateur, la superficie de ladite face réceptrice 31, considérée comme le cylindre dont le rayon vaut le rayon moyen R31 de ladite face réceptrice, et la hauteur vaut la hauteur axiale H31 de ladite face réceptrice, et (ii) d'autre part à maximiser la proportion de la face d'échange 32 qui est effectivement exploitée par les sources thermiques 23, 24.

Ainsi, de préférence, le noyau 4, ainsi que les stations de cuisson 20 et d'extraction 21, et leurs sources thermiques 23, 24 respectives, sont agencés de manière à ce que, au cours d'un cycle de fabrication d'un bandage 2, la première source thermique 23 de la station de cuisson 20 vienne alternativement couvrir puis découvrir une première superficie de la face d'échange 32, dite « superficie chauffante utile », puis la seconde source thermique 24 de la station d'extraction 21 vienne alternativement couvrir puis découvrir une seconde superficie de la face d'échange 32, dite « superficie réfrigérante utile », et que le rapport entre d'une part la plus petite desdites première et seconde superficies utiles de la face d'échange et d'autre part la superficie de la face réceptrice 31 couverte par le bandage fabriqué est égal ou supérieur à 70 %, de préférence égal ou supérieur à 80 %, voire égal ou supérieur à 90 %. En pratique, pour respecter ce critère, il faudra notamment veiller cumulativement à ce que l'épaisseur E30 de la paroi tubulaire soit inférieure à un certain seuil, proportionnellement au rayon R31 de la face réceptrice 31, que la hauteur commune Hc sur laquelle la face d'échange 32 et la face réceptrice 31 se chevauchent axialement dépasse un pourcentage prédéterminé de la hauteur axiale H31 de la face réceptrice 31, et que chacune des première et seconde sources thermiques vienne coopérer avec une proportion de la superficie totale disponible de la face d'échange 32 qui soit supérieure à un seuil donné.

Selon une caractéristique préférentielle qui peut constituer une invention à part entière, la station de cuisson 20 comprend un moule de cuisson 50 qui est conçu pour délimiter une enceinte de cuisson 51 fermée à l'intérieur de laquelle on place l'ensemble formé par le noyau 4 et le bandage annulaire cru 2A pour réaliser l'opération de cuisson, et l'invention permet au noyau 4 de « larguer » la première source thermique chauffante 23 après l'opération de cuisson et de laisser, en quelque sorte « d'abandonner », ladite première source thermique chauffante 23 au sein de la station de cuisson 20, et plus particulièrement de stocker, après enlèvement du noyau 4, ladite première source thermique chauffante 23 dans l'enceinte de cuisson 51 fermée, à une température dite « température d'attente » qui est relativement élevée, de préférence voisine de la température de cuisson, par exemple comprise entre 150 °C et 180°C, et en tous cas à une température d'attente qui est strictement supérieure, ici très supérieure, à la température à laquelle le noyau 4 est refroidi dans la station d'extraction 21. Ainsi, la première source thermique chauffante 23, ici plus particulièrement les secteurs chauffants 40, pourront être maintenus à l'abri dans l'enceinte de cuisson 51 et ainsi conserver une température élevée sans apport notable d'énergie, dans l'attente de l'opération de cuisson suivante, tandis que par ailleurs le noyau 4 sera refroidi et séparé du bandage annulaire cuit 2B dans la station d'extraction 21. Ainsi, on évitera une déperdition d'énergie de la source thermique chauffante 23 entre deux opérations de cuisson successives.

Tel que cela est notamment visible sur les figures 6 et 8 à 13, la station de cuisson 20 comprend de préférence un moule de cuisson 50 conçu pour délimiter une enceinte de cuisson 51 qui est destinée à recevoir et contenir l'ensemble formé par le noyau 4 et le bandage annulaire cru 2A afin de réaliser l'opération de cuisson.

Ledit moule de cuisson 50 comporte à cet effet un plateau inférieur 52, sur lequel vient reposer le noyau 4, une couronne 53 externe conçue pour venir entourer la face radialement externe du bandage 2 à cuire, et un plateau supérieur 54 qui coopère avec la couronne externe 53, à l'opposé axialement du plateau inférieur 52, pour fermer l'enceinte de cuisson 51.

De préférence, le plateau supérieur 54 et la couronne 53 externe seront fixés l'un à l'autre de sorte à former un même équipage mobile, de type couvercle amovible, qui viendra se refermer sur le plateau inférieur 52, et, plus particulièrement, sur le noyau 4 préalablement placé sur ledit plateau inférieur 52, afin de couvrir le noyau 4 porteur du bandage annulaire 2 à cuire.

Ledit équipage mobile sera de préférence guidé en translation selon l'axe central X4, X2, ici préférentiellement en translation verticale tel que cela est visible sur la figure 3.

En variante, on pourrait prévoir que la couronne 53 externe reste sur le plateau inférieur 52 et que seul le plateau supérieur 54 forme le couvercle amovible, mobile axialement.

Quelle que soit la variante retenue, la couronne 53 externe comporte de préférence une pluralité de blocs 53A répartis en azimut tout autour de l'axe central X4, X30 et qui présentent, en vis-à-vis de la cavité du moule de cuisson 50 accueillant le bandage annulaire 2, l'empreinte en négatif des formes de sculptures que l'on souhaite conférer à la bande de roulement au sein du bandage annulaire cuit 2B.

Comme indiqué plus haut, la première source thermique 23 comprend une pluralité de secteurs chauffants 40, de préférence porteurs chacun d'au moins une résistance électrique chauffante 41.

Lesdits secteurs chauffants 40 sont de préférence disposés au centre de l'enceinte de cuisson 51 et placés sous la dépendance d'un mécanisme de déploiement 55 qui est conçu pour placer lesdits secteurs chauffants 40 alternativement dans une configuration déployée, dans laquelle lesdits secteurs chauffants 40 sont plaqués en compression radiale centrifuge contre la face d'échange 32 du noyau 4, tel que cela est illustré sur les figures 11, 12, 13, et une configuration rétractée, dans laquelle lesdits secteurs chauffants 40 sont placés en retrait radial de la face d'échange 32, tel que cela est illustré sur les figures 8, 9 et 10, de telle sorte que, après l'opération de cuisson, on puisse retirer le noyau 4 de ladite enceinte de cuisson 51 en opérant un déplacement axial dudit noyau 4 par rapport auxdits secteurs chauffants 40, et laisser lesdits secteurs chauffants 40 dans la station de cuisson 20, plus préférentiellement laisser lesdits secteurs chauffants 40 en attente à l'intérieur de l'enceinte de cuisson 51, tandis que le noyau 4 porteur du bandage annulaire cuit 2B, en provenance de l'enceinte de cuisson 51, est acheminé vers, puis refroidi par, la station d'extraction 21.

En configuration rétractée, on crée un jeu radial J_rad non nul, de préférence compris entre 5 mm et 8 mm, entre l'emplacement de la face d'échange 32 radialement interne du noyau 4 et les faces radialement externes 40_out des secteurs chauffants 40, tel que cela est bien visible sur la figure 9.

Ce jeu radial J_rad non nul est avantageusement suffisant pour permettre au noyau 4 porteur du bandage annulaire 2 de coulisser axialement par rapport aux secteurs chauffants 40, et de chevaucher axialement lesdits secteurs chauffants, sans accrocher lesdits secteurs chauffants.

Plus particulièrement, ce jeu radial J_rad non nul est suffisant pour permettre d'engager, avant l'opération de cuisson, le noyau 4, et le bandage annulaire cru 2A, autour de l'ensemble des secteurs chauffants 40, entre les faces radialement externes 40_out desdits secteurs chauffants 40 et l'emplacement de la face radialement interne de la couronne 53, en opérant un mouvement d'introduction MX+ axial qui s'arrête lorsque l'épaulement 36 du noyau 4 bute contre le plateau inférieur 52, de sorte que les secteurs chauffants 40 se retrouvent à l'intérieur de l'alésage 33 du noyau, en vis-à-vis de la face d'échange 32.

Ce même jeu radial J_rad non nul est également suffisant pour permettre ensuite, après l'opération de cuisson, de dégager le noyau 4, et le bandage annulaire cuit 2B, hors de l'ensemble des secteurs chauffants 40, selon un mouvement d'enlèvement MX- axial, ici de sens opposé au mouvement d'introduction MX+.

En configuration déployée, ce jeu radial J_rad est rattrapé pour devenir nul, tel que cela est visible sur la figure 12, de sorte que, pendant l'opération de cuisson, les secteurs chauffants 40 se trouvent au contact de la face d'échange 32, avantageusement par toute la superficie de leurs faces radialement externes 40_out.

On notera que, de préférence, l'enceinte de cuisson 51 est ouverte, ici préférentiellement en plaçant l'équipage mobile comprenant le plateau supérieur 54 et la couronne 53 externe en configuration d'ouverture tel que cela est illustré sur la partie gauche de la figure 3, uniquement lorsqu'il est nécessaire d'accéder à l'intérieur de l'enceinte de cuisson 51 pour introduire dans ladite enceinte de cuisson 51 un noyau 4 porteur d'un bandage annulaire cru 2A en vue de l'opération de cuisson ou au contraire pour extraire de ladite enceinte de cuisson 51 un noyau 4 porteur d'un bandage annulaire cuit 2B après l'opération de cuisson, tandis que ladite enceinte de cuisson 51 se trouvera sinon, le reste du temps, en configuration fermée, de manière à recouvrir tous les secteurs chauffants 40, ici préférentiellement en ramenant l'équipage mobile contre le plateau inférieur 52 tel que cela est illustré sur la partie droite de la figure 3.

Ainsi, l'enceinte de cuisson 51 est maintenue fermée aussi bien pendant l'opération de cuisson, au cours de laquelle ladite enceinte de cuisson 51 est dite « pleine » en ceci qu'elle contient non seulement les secteurs chauffants 40 mais également le noyau 4 porteur du bandage annulaire 2, que pendant les phases d'attente entre deux opérations de cuisson successives, au cours desquelles l'enceinte de cuisson 51 est dite « vide », et notamment « vide de noyau », en ceci qu'elle ne contient plus de noyau 4, mais contient toujours l'ensemble des secteurs chauffants 40. Ce maintien au chaud des secteurs chauffants 40 permet avantageusement d'éviter une déperdition thermique et donc une surconsommation inutile d'énergie.

De préférence, le mécanisme de déploiement 55 comprend un premier poussoir 56 monté mobile axialement et possédant une pluralité de premières rampes 57 qui sont inclinées selon un premier sens d'inclinaison par rapport à l'axe principal X4, X30 et qui coopèrent chacune avec un secteur chauffant 40, et un second poussoir 58 monté mobile axialement et possédant une pluralité de secondes rampes 59 qui sont inclinées par rapport à l'axe principal X4, X30 selon un second sens d'inclinaison de signe opposé au premier sens d'inclinaison et qui coopèrent chacune avec l'un desdits secteurs chauffants 40, de sorte que l'on commande le déplacement radial des secteurs chauffants 40, permettant de passer de la configuration rétractée à la configuration déployée et inversement, en éloignant axialement l'un de l'autre le premier poussoir 56 et le second poussoir 58, respectivement en rapprochant axialement l'un de l'autre le premier poussoir 56 et le second poussoir 58.

De façon particulièrement préférentielle, tel que cela est visible sur les figures 8 à 13, le premier poussoir 56 est tronconique, de sorte que la pluralité de premières rampes 57 est formée par la paroi conique radialement externe dudit premier poussoir 56.

De même, le second poussoir 58 est de préférence tronconique, de sorte que la pluralité de secondes rampes 59 est formée par la paroi conique radialement externe dudit second poussoir 58.

Tel que cela est bien visible sur les figures 8, 9 11 et 12, lesdits premier et second poussoirs 56, 58 tronconiques sont de préférence montés en opposition par leur base large, de sorte à former dans leur ensemble un bi-cône, dont les sommets (virtuels) pointent vers l'extérieur du moule 50, chacun du côté de leur poussoir 56, 58 respectif le long de l'axe principal X4, X30.

Lesdits premier et second poussoirs 56, 58 sont centrés sur l'axe central X4, X30, et présente de préférence sensiblement une forme de révolution, ou au moins une forme invariante par rotation d'ordre N autour de l'axe central X4, N étant le nombre entier de secteur chauffants 40 qui se répartissent angulairement autour de l'axe central X4 pour constituer la première source thermique 23.

Ici, dans l'agencement illustré sur les figures, le premier poussoir 56 forme un poussoir supérieur qui est placé verticalement au-dessus du second poussoir 58, qui forme un poussoir inférieur.

Par ailleurs, chaque secteur chauffant 40 est de préférence fixé sur une semelle 60 qui coopère d'une part avec l'une des premières rampes 57 du premier poussoir 56 et d'autre part avec l'une des secondes rampes 59 correspondantes du second poussoir 58.

A cet effet, ladite semelle 60 présente une forme concave à deux pentes sécantes, conjuguée aux formes inclinées des rampes 57, 59. Plus particulièrement, la semelle 60 formera un secteur angulaire, dont la couverture angulaire autour de l'axe central X2, X4 sera de préférence égale à la couverture angulaire du secteur chauffant 40 correspondant, et dont la face radialement interne sera creusée de sorte à former, sur le secteur angulaire considéré, la portion correspondante d'une double empreinte tronconique, conjuguée aux poussoirs 56, 58 tronconiques.

De préférence, la semelle 60, ici la moitié supérieure de ladite semelle 60, est liée au premier poussoir 56 au moyen d'un premier patin 61 qui coulisse dans une première rainure 62 qui s'étend selon la pente commune à la semelle 60 et au premier poussoir 56, c'est-à-dire selon la première rampe 57. Ladite première rainure 62 présente de préférence une section en T ou en queue d'aronde.

De même, la semelle 60 est également liée, ici dans sa moitié inférieure, au second poussoir 58, au moyen d'un second patin 63 qui coulisse dans une seconde rainure 64 qui s'étend selon la pente commune à la semelle 60 et au second poussoir 58, c'est-à-dire selon la seconde rampe 59. Ladite seconde rainure 64 présente de préférence une section en T ou en queue d'aronde.

Le système de patins 61, 63 et rainures 62, 64 permettra avantageusement de guider les secteurs chauffant 40 sur les poussoirs 56, 58, mais également d'assurer une liaison radiale assurant le rappel radial centripète des secteurs chauffants 40 lorsque les poussoirs 56, 58 se rapprochent l'un de l'autre pour passer de la configuration déployée à la configuration rétractée. Bien entendu, la forme de la section des première et seconde rainures 62, 64, ici en T, sera donc choisie de manière à ce que les patins 61, 63 restent radialement captifs de leur rainure 62, 64.

De préférence, tel que cela est visible sur les figures 8 et 11, le premier poussoir 56 et le second poussoir 58 sont montés sur un chariot 65 motorisé qui est monté mobile en translation axiale, ici verticale, le long de l'axe principal X4, X30, par rapport au plateau inférieur 52 du moule de cuisson 50, plateau inférieur 52 qui est lui-même de préférence monté fixe sur le bâti de la station de cuisson 20.

Le second poussoir 58 est de préférence fixé solidairement au chariot 65, de sorte à suivre les déplacements axiaux dudit chariot 65.

Le chariot 65 embarque de préférence un organe de déplacement différentiel 66, tel qu'un vérin 66, dont la tige 67 est montée mobile en translation axiale par rapport au chariot 65. Le premier poussoir 56 peut alors avantageusement être fixé à et porté par ladite tige 67, de sorte à pouvoir exécuter, par rapport au chariot 65, et donc par rapport au second poussoir 58, un déplacement axial différentiel.

Ainsi, il est possible d'écarter axialement l'un de l'autre les premier et second poussoirs 56, 58, et donc de déployer radialement les secteurs chauffant 40, en exécutant simultanément, tel que cela est visible sur la figure 11, d'une part un premier mouvement axial du chariot 65, ici descendant, vers l'extérieur du moule de cuisson 50, et d'autre part un second mouvement axial de la tige 67, de sens opposé, ici ascendant.

A l'inverse, on peut rappeler les poussoirs 56, 58 l'un vers l'autre, et donc rétracter radialement les secteurs chauffants 40, en remontant axialement le chariot 65, vers l'intérieur du moule de cuisson 50, tandis que l'on rappelle la tige 67 à l'intérieur dudit chariot 65 selon un mouvement axial de sens contraire, ici descendant.

On notera que, avantageusement, un tel mécanisme de déploiement 55 permet de compenser les composantes axiales d'effort antagonistes qu'exercent respectivement les premier et second poussoirs 56, 58 à l'encontre des secteurs chauffants 40, puisque chaque secteur chauffant 40 coopère simultanément, grâce à sa semelle 60, avec chacun des deux poussoirs 56, 58, et que la forme concave desdites semelles 60 fait que chaque secteur chauffant 40 reçoit donc simultanément d'une part, sur un premier pan incliné de la face radialement interne de la semelle 60, la composante axiale d'effort générée par le premier poussoir 56 dans un sens, et d'autre part, sur l'autre pan incliné de la face radialement interne de la semelle 60, la composante axiale d'effort générée par le second poussoir 58 dans le sens opposé, si bien que la résultante desdites composantes axiales, de signe opposé, s'annule sensiblement au sein de chaque semelle 60, et qu'il ne subsiste donc que la composante d'effort radiale, utile au déplacement radial des secteurs chauffants 40.

Ainsi, le mécanisme de déploiement 55, en équilibrant l'action des deux poussoirs 56, 58 antagonistes, n'exerce finalement sur les secteurs chauffants 40 aucun effort axial résultant, qui tendrait à modifier la position axiale desdits secteurs chauffant 40 au sein du moule de cuisson 50, à cisailler le bandage 2, voire à arracher lesdits secteurs chauffants 40 et/ou le noyau 4 hors du moule de cuisson 50.

La station de cuisson 20 est donc particulièrement respectueuse du noyau 4 et du bandage annulaire 2.

Par ailleurs, selon une caractéristique préférentielle qui peut constituer une invention en tant que telle, la station de cuisson 20 peut disposer d'un système de réglage 69 permettant d'ajuster la position verticale, le long de l'axe central X4, X30, de la première source thermique 23 chauffante, ici donc des secteurs chauffants 40, par rapport au plateau inférieur 52 du moule de cuisson 50, et plus particulièrement par rapport à une table 68 fixe, ici horizontale, qui reçoit le plateau inférieur 52 du moule de cuisson 50, et donc par rapport au noyau 4, et plus particulièrement par rapport au plan médian PM dudit noyau 4.

Ainsi, il sera avantageusement possible d'adapter au cas par cas la hauteur à laquelle on positionne, par rapport au plan médian PM du noyau 4, avant de déployer les secteurs chauffants 40, le plan médian PM60 horizontal qui est commun à toutes les semelles 60, et donc de définir au cas par cas, par rapport au plan médian PM du noyau 4, la position verticale de la plage axiale dans laquelle vont se déployer lesdites semelles 60, et par conséquent les secteurs chauffants 40.

Une telle capacité de réglage vertical permet avantageusement d'utiliser un même mécanisme de déploiement 55 et/ou un même jeu de secteurs chauffants 40, de hauteur axiale donnée, pour différents formats de noyaux 4, qui sont destinés à fabriquer des bandages de largeurs W2 différentes, et qui présentent par conséquent des faces réceptrices 31 de hauteurs axiales H31 différentes, et donc des faces d'échange 32 de hauteurs axiales H32 différentes.

Le système de réglage 69 peut de préférence être formé par un ascenseur 69 qui soutient les semelles 60 et permet de régler l'altitude de celles-ci, et donc plus globalement l'altitude d'ensemble du mécanisme de déploiement 55, par rapport à la table fixe 68, comme cela est schématisé sur la figure 8. A titre indicatif, la course utile de l'ascenseur 69, qui définit l'amplitude du réglage vertical disponible, pourra être comprise entre 50 mm et 200 mm, entre 80 mm et 150 mm, et par exemple égale à 100 mm.

Le chariot 65 pourra avantageusement être monté « flottant », c'est-à-dire en suspension verticale libre sur l'ascenseur 69, par l'intermédiaire de l'ensemble des semelles 60 qui sont soutenues par ledit ascenseur 69. Le chariot 65 n'aura ainsi pas à venir directement en prise sur la table 68 ou plus globalement sur le bâti de la station de cuisson 20. Selon un tel agencement, pour déployer radialement les secteurs chauffants 40, on déclenchera, simplement en activant le vérin 66, un déplacement axial, le long de l'axe principal X4, X30, ici un déplacement vertical descendant, du chariot 65 et du second poussoir 58 par rapport aux semelles 60, et donc simultanément un déplacement axial, ici vertical ascendant, de la tige 67 du vérin 66 et donc du premier poussoir 56 par rapport à ces mêmes semelles 60, tandis que lesdites semelles 60 sont, pendant qu'elles glissent radialement, soutenues par l'ascenseur 69 et donc maintenues à une altitude constante par rapport à la table 68 et donc par rapport au moule de cuisson 50 et au noyau 4 reposant sur ladite table 68, altitude qui correspond à la position axiale qui avait été préalablement définie par le système de réglage 69 et qui reste constante pendant le mouvement radial des semelles 60 et de leurs secteurs chauffants 40 associés.

La seconde source thermique 24, réfrigérante, utilisée par la station d'extraction 21, est quant à elle de préférence formée par un flux d'air forcé 70, qui s'écoule au contact de la face d'échange 32, tel que cela est visible sur les figures 14, 15 et 17.

Le flux d'air forcé 70 arrivant au contact de la face d'échange 32 pourra être de l'air à température ambiante, ou éventuellement de l'air qui aura été préalablement refroidi pour présenter une température inférieure à la température ambiante.

A titre indicatif, le flux d'air forcé 70 arrivant au contact de la face d'échange 32 pourra présenter ainsi une température comprise entre 15°C et 35°C.

Avantageusement, l'utilisation d'un flux d'air forcé 70, en particulier si l'air est simplement prélevé à température ambiante dans l'atelier où se trouve l'installation 1, permet de réaliser un refroidissement « sec » du noyau 4, qui ne nécessite en particulier pas de circuit hydraulique, et ne présente par conséquent aucun risque de projections d'eau ou de fuites de liquide caloporteur.

On notera à ce titre que, plus globalement, le chauffage comme le refroidissement du noyau 4 sont de préférence exécutés par des techniques « sèches », en utilisant d'une part une ou des techniques de chauffage électrique, au moyen de résistances électriques chauffantes, qui agissent ici par conduction pour les secteurs chauffants 40, et de préférence par rayonnement pour un préchauffage des noyaux 4 dans une station d'étuvage 91 comme cela sera détaillé plus bas, et d'autre part une technique de refroidissement par air.

En l'espèce, le refroidissement par air est d'autant plus adapté que le noyau 4 utilisé conformément à l'invention présente une épaisseur fine, et plus globalement une faible masse.

Tel que cela est visible notamment sur les figures 14, 15 et 17, la station d'extraction 21 comprend un fût central 71, sur lequel on enfile le noyau 4 porteur du bandage annulaire cuit 2B de manière à délimiter, entre la face radialement externe 71_out dudit fût central 71 et la face d'échange 32 radialement interne de la paroi tubulaire 30 du noyau 4, un chemin d'écoulement 72 annulaire.

Le fût central 71 est de préférence centré sur l'axe central X4, X30, et donc coaxial au noyau 4 lorsque ledit noyau 4 se trouve dans la station d'extraction 21.

La face radialement externe 71_out du fût central 71 présente de préférence une forme conjuguée à celle de la face d'échange 32, et plus préférentiellement une forme cylindrique droite de base circulaire.

Ledit chemin d'écoulement 72 est raccordé à un dispositif d'aspiration 73 au moyen d'un collecteur 74, de sorte que, lorsque le dispositif d'aspiration 73 est activé, on crée un flux d'air forcé 70 qui pénètre dans le chemin d'écoulement 72 par une zone d'admission 72_in située à une première extrémité axiale du chemin d'écoulement annulaire, flux d'air forcé 70 qui parcourt ledit chemin d'écoulement 72 le long de la face d'échange 32, puis qui est évacué à travers le collecteur 74 au niveau d'une seconde extrémité axiale dudit chemin d'écoulement, située axialement à l'opposé de la première extrémité axiale.

A titre indicatif, la largeur radiale E72 du chemin d'écoulement 72, c'est-à-dire la distance qui sépare radialement la face d'échange 32 du noyau 4 de la face externe 71_out du fût central, est de préférence comprise entre 5 mm et 20 mm.

On obtient ainsi, grâce au fût central 71, une canalisation et une accélération efficaces du flux d'air forcé 70 dans le chemin d'écoulement 72, avec un bon compromis entre efficacité du refroidissement et modération des pertes de charge, et donc modération de la consommation d'énergie du dispositif d'aspiration 73. Avantageusement, la vitesse relativement élevée du flux d'air forcé 70 à travers le chemin d'écoulement 72, et donc au contact de la face d'échange, permet d'extraire rapidement la chaleur du noyau 4.

A titre indicatif, le débit du flux d'air forcé 70, généré par le dispositif d'aspiration 73, sera de préférence compris entre 4 000 m3/heure et 6 000 m3/heure.

De préférence, lorsque le noyau 4 est en position autour du fût central 71 pour l'opération de refroidissement, de sorte que le fût central 71 occupe l'alésage 33 du noyau 4, ledit fût central 71 chevauche axialement le noyau 4, et plus particulièrement la paroi tubulaire 30 dudit noyau, sur une hauteur axiale commune qui représente au moins 80%, de préférence au moins 85%, préférentiellement au moins 90%, voire au moins 95% de la hauteur axiale H31 de la face réceptrice 31 couverte par le bandage annulaire cuit 2B.

Ainsi, on maximisera l'étendue de la face d'échange 32 au contact de laquelle circulera le flux d'air forcé 70, c'est-à-dire la « superficie réfrigérante utile » mentionnée plus haut.

A titre indicatif, ladite superficie réfrigérante utile pourra ainsi représenter axialement au moins 80%, de préférence au moins 85%, préférentiellement au moins 90%, voire au moins 95% de la hauteur axiale H31 de la face réceptrice 31 couverte par le bandage annulaire 2, et angulairement, en couverture azimutale autour de l'axe central X4, X30, au moins 300 degrés, de préférence au moins 330 degrés, voire 360 degrés.

De préférence, tel que cela est visible sur les figures 14 à 18, la station d'extraction 21 comprend un plateau élévateur 75 qui porte le fût central 71 et qui est destiné à recevoir le noyau 4 lorsque ledit noyau 4 se retrouve séparé du bandage annulaire cuit 2B.

Ledit plateau élévateur 75 est monté mobile axialement, ici selon une direction verticale.

La station d'extraction 21 comprend en outre de préférence une table de réception 76 horizontale qui est percée d'une ouverture 77. Ladite ouverture 77 est agencée de manière d'une part à permettre le libre passage du fût central 71 et du noyau 4 à travers ladite table de réception 76, et d'autre part à présenter un rebord de retenue 77A annulaire qui forme une butée axiale à l'encontre du bandage annulaire cuit 2B.

Ainsi, lorsque l'on place le noyau 4 porteur du bandage cuit 2B en position dans la station d'extraction 21 pour procéder à l'opération de refroidissement, le noyau 4 se retrouve suspendu dans le vide de l'ouverture 77, au-dessus du plateau élévateur 75, en étant retenu seulement par le bandage annulaire cuit 2B qui repose sur la table de réception 76, en appui sur le rebord de retenue 77, tel que cela est notamment visible sur la figure 17.

Bien entendu, le diamètre de l'ouverture 77 devra être suffisamment large pour être strictement supérieur au diamètre externe du noyau 4, mais également suffisamment étroit pour offrir un appui stable et résistant au bandage annulaire cuit 2B. A ce titre, le diamètre de l'ouverture 77 sera de préférence supérieur d'une valeur comprise entre 2 mm et 6 mm au diamètre externe du noyau 4, c'est-à-dire ici à deux fois le rayon R31 de la face réceptrice 31.

La station d'extraction 21 comprend également une coiffe 78, qui est conçue pour venir en appui axial contre le noyau 4, de préférence sur le chant extrémal dudit noyau 4 qui se trouve axialement à l'opposé de la table de réception 76 et du plateau élévateur 75.

Plus particulièrement, ladite coiffe 78 est conçue pour venir en appui sur toute la circonférence du chant extrémal du noyau 4, formé ici, sur les figures 15, 16, 17 et 18, par l'extrémité libre et annulaire du second tronçon d'accouplement 35'.

De préférence, ladite coiffe 78 est de forme annulaire et plus préférentiellement de forme cylindrique de base circulaire.

La coiffe 78 est de préférence pourvue d'évents 79 qui permettent à l'air destiné au refroidissement de traverser ladite coiffe 78, ici plus préférentiellement qui permettent à l'air de traverser radialement l'épaisseur radiale de ladite coiffe 78, pour entrer dans le chemin d'écoulement 72 délimité entre le fût central 71 et la paroi tubulaire 30 du noyau 4.

Avantageusement, une telle coiffe 78 remplit la fonction d'un silencieux, en permettant d'atténuer le bruit de sifflement qui est généré par l'aspiration du flux d'air forcé 70 à travers le chemin d'écoulement 72. A cet effet, le contact, ici annulaire, entre la coiffe 78 et le chant extrémal du noyau 4 pourra être étanche ou sensiblement étanche à l'air.

Ensuite et surtout, ladite coiffe 78 forme de préférence l'organe éjecteur 25, qui permet ici de repousser axialement le noyau 4 à travers l'ouverture 77 de la table de réception 76, tandis que le bandage annulaire cuit 2B est retenu en appui sur le rebord de retenue 77A de ladite ouverture 77 de la table de réception, de manière à extraire, ici axialement, le noyau 4 hors du bandage annulaire cuit 2B.

La coiffe 78 pourra donc avantageusement remplir une double fonction, d'abord de silencieux, puis ensuite d'organe éjecteur.

Dans son mouvement axial par rapport au bandage annulaire cuit 2B et par rapport à la table de réception 76, sous la poussée de l'organe éjecteur 25, le noyau 4 est accompagné par le plateau élévateur 75 qui réceptionne et soutient ledit noyau 4, tel que cela est bien visible sur la figure 18.

Plus particulièrement, sitôt que l'opération de refroidissement a permis de créer un jeu radial suffisant entre la face réceptrice 31 du noyau 4 et la face radialement interne du bandage annulaire cuit 2B, la coiffe 78 force l'enfoncement axial du noyau 4 à travers le bandage annulaire 2, en direction du plateau élévateur 75, de sorte que le noyau 4 entre au contact dudit plateau élévateur 75, ici par l'extrémité libre de son premier tronçon d'accouplement 35, puis poursuit sa course axiale, sous la poussée de la coiffe 78, en repoussant au fur et à mesure le plateau élévateur 75, qui descend progressivement pour accompagner le mouvement du noyau 4, jusqu'à ce que le noyau 4 soit totalement dégagé du bandage annulaire 2.

Ainsi, le noyau 4 libéré se retrouve finalement sur le plateau élévateur 75 abaissé, tandis que le bandage annulaire cuit 2B libéré de son noyau 4 se trouve sur la table de réception 76 qui surplombe ledit plateau élévateur 75.

L'organe éjecteur 25, ici plus particulièrement la coiffe 78, peut être guidé en translation axiale par un portique 80 comprenant une pluralité de poteaux 81 verticaux, par exemple trois poteaux verticaux équirépartis à 120 degrés les uns des autres autour de l'axe central X4, X30.

L'organe éjecteur 25, ici la coiffe 78, peut être entraîné en translation axiale par tout système d'entraînement 82 motorisé approprié, de préférence un système d'entraînement 82 de type vis-écrou.

De préférence, l'organe éjecteur 25 et le plateau élévateur 75 seront asservis selon une relation maître/esclave, la descente du plateau 75, esclave, s'adaptant aux exigences de déplacement imposées par l'organe éjecteur 25, maître.

Les dimensions de la coiffe 78 seront bien entendues adaptées pour former l'organe éjecteur 25. A ce titre, pour permettre à la coiffe 78 de coulisser à l'intérieur du bandage annulaire 2 sans interférer avec ledit bandage annulaire ni endommager ce dernier, le rayon externe hors-tout de la coiffe 78 sera, légèrement mais strictement, inférieur au rayon R31 de la face réceptrice 31 du noyau 4 considéré à la température à laquelle on réalise l'opération d'extraction.

On notera en outre qu'il est à ce titre avantageux que le tronçon d'accouplement qui coopère avec l'éjecteur 25, ici le second tronçon d'accouplement 35', forme un resserrement radial par rapport à la paroi tubulaire 30 et donc par rapport à la face réceptrice 31 du noyau, puisque cela permet à l'organe éjecteur 25 de pousser le noyau 4 sans interférer avec le bandage annulaire 2, en prenant un appui, annulaire et donc bien équilibré, sur le chant libre dudit tronçon d'accouplement 35'.

De préférence, l'installation 1 comporte par ailleurs une station tampon 85 qui permet un stockage temporaire de noyaux 4, notamment de noyaux 4 de réserve qui sont vides de bandage annulaire et/ou de noyaux 4 porteurs d'un bandage annulaire cru 2A, ainsi qu'un stockage temporaire de bandages annulaires cuits 2B extraits de leur noyau 4.

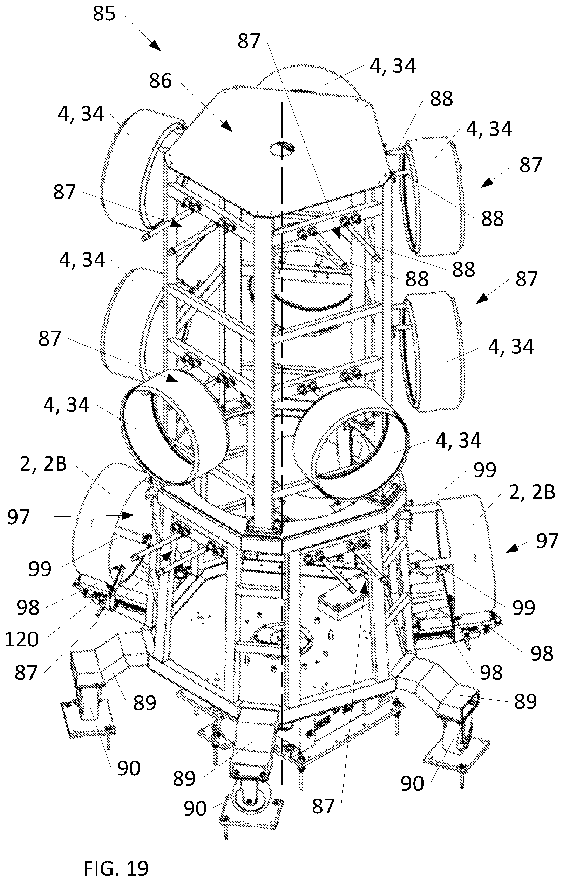

Ladite station tampon 85 comporte de préférence à cet effet, tel que cela est visible sur la figure 19, au moins un mât 86 qui est pourvu d'une pluralité d'emplacements de stockage 87, 97.

De préférence, parmi lesdits emplacements de stockage 87, 97, la station tampon 85 inclut au moins un premier type d'emplacements de stockage 87, dits « emplacements pour noyaux » 87, qui sont agencés pour recevoir chacun au moins un noyau 4, vide ou porteur d'un bandage annulaire cru 2A.

De préférence, lesdits emplacements pour noyaux 87 comprennent à cet effet chacun au moins une branche de suspension 88, de préférence au moins deux branches de suspension 88, qui sont agencées de manière à ce que l'on puisse suspendre le noyau 4 à stocker en engageant l'évidement central dudit noyau, c'est-à-dire ici l'alésage 33, sur ladite au moins une branche de suspension ou lesdites au moins deux branches de suspension 88.

Lesdites banches de suspension 88 font de préférence saillie radialement ou sensiblement radialement par rapport au mât 86, et s'étendent de préférence à l'horizontale, ou éventuellement selon une légère pente de 3 degrés à 10 degrés par rapport à l'horizontale, ici une pente ascendante qui va en montant lorsque l'on s'éloigne du mât 86.

Selon une caractéristique préférentielle qui peut constituer une invention à part entière, les branches de suspension 88 peuvent être pourvues d'un organe d'accrochage, du genre tenon ou collet, qui fait saillie radialement sur l'une et/ou l'autre desdites branches de suspension 88, transversalement à l'axe longitudinal de la branche de suspension 88 considérée, et qui est agencé de sorte à pouvoir s'introduire dans et coopérer avec la gorge annulaire 38 du noyau 4 qui est engagé dans l'emplacement de noyau 87, de manière à éviter un glissement et une chute du noyau 4 stocké.

De préférence, parmi les emplacements de stockage 87, 97, la station tampon 85 inclut un second type d'emplacements de stockage 97, dits « emplacements pour bandages » 97, qui sont agencés pour recevoir chacun au moins un bandage annulaire cuit 2B et, de façon particulièrement préférentielle, pour pouvoir entraîner en rotation le bandage annulaire cuit 2B afin d'éviter une ovalisation dudit bandage annulaire cuit 2B sous l'effet de la gravité.

De préférence, lesdits emplacements pour bandages 97 sont pourvus à cet effet de branches de support 98 rotatives, préférentiellement deux branches de support 98 rotatives, du genre rouleaux, qui sont conçues pour porter le bandage annulaire cuit 2B en soutenant la face radialement externe dudit bandage annulaire cuit 2B, et pour entraîner ledit bandage annulaire cuit 2B en rotation sur lui-même autour de son axe central (X2). Ici, le bandage annulaire cuit 2B étant stocké de manière à ce que son axe central X2 s'étende sensiblement à l'horizontale, lesdits branches de support 98 rotatives se situeront de préférence au moins dans la moitié inférieure dudit bandage par rapport à l'axe central X2, pour porter le bandage annulaire cuit 2B par le dessous.

De préférence, lesdits emplacements pour bandages 97 sont également pourvus d'au moins une branche de guidage 99, et de préférence d'au moins deux branches de guidage 99, de préférences également montées rotatives autour de leurs axes longitudinaux respectifs, branches de guidage 99 qui sont agencées pour s'engager dans l'évidement central dudit bandage annulaire cuit 2B et coopérer avec la face radialement interne du bandage annulaire cuit 2B, de préférence ici au moins dans la moitié supérieure dudit bandage annulaire cuit 2B par rapport à l'axe central X2, pour maintenir ledit bandage annulaire cuit 2B en place à l'emplacement de bandage 97 et guider ledit bandage annulaire cuit 2B pendant sa mise en rotation par les branches de support 98 rotatives, ici situées à une altitude inférieure auxdites branches de guidage 99.

Avantageusement, le bandage annulaire cuit 2B peut ainsi être stocké encore chaud au sein de la station tampon 85, typiquement à une température comprise entre 20°C et 120°C, et notamment à une température initialement supérieure à 50°C, voire supérieure à 80°C, directement en provenance de la station d'extraction 21 où ledit bandage annulaire cuit 2B a été dissocié de son noyau 4, et achever sa vulcanisation, et son refroidissement, à l'emplacement de stockage pour bandage 97, où ledit bandage annulaire 2 repose par sa face externe sur les deux lignes de contact procurées par les deux branches de support 98 rotatives, sans risque de se déformer, puisque ledit bandage annulaire 2 est entraîné aussi longtemps que nécessaire en rotation autour de son axe central X2 par lesdites branches de support 98 qui tournent chacune sur elle-même autour de leur axe longitudinal et engrènent par friction sur la face externe du bandage annulaire 2, tandis que les branches de guidage 99 guident la rotation dudit bandage annulaire 2 par l'intérieur de ce dernier.

De préférence, les branches de support 98 rotatives et/ou les branches de guidage 99 de l'emplacement pour bandage 97 pourront être légèrement inclinées, par exemples de 2 degrés à 10 degrés, par rapport à l'horizontale, de sorte à descendre en pente douce vers le mât 86, et ainsi permettre au bandage annulaire 2 de venir et de rester, pendant sa rotation, en appui stable contre une butée de référence 120.

Ladite butée de référence 120 pourra être par exemple formée par un doigt 120, éventuellement pourvu d'un rouleau, qui sait saillie transversalement par rapport à l'une et/ou l'autre desdites branches de support 98 et/ou de guidage 99, de préférence de sorte que le chant du bandage annulaire 2B puisse venir en appui, glissant ou préférentiellement roulant, contre ledit doigt 120.

En créant ainsi un emplacement pour bandage 97 de type puits, qui permet au bandage annulaire cuit 2B de se positionner spontanément, et de rester, dans le creux dudit emplacement pour bandage 97, on évitera avantageusement toute éjection accidentelle du bandage annulaire cuit 2B hors dudit emplacement pour bandage 97.

La rotation du bandage annulaire cuit 2B autour de son axe central X2 au sein de son emplacement de stockage pour bandage 97 est de préférence relativement lente, par exemple comprise entre 0,5 tr/min et 5 tr/min.

On notera que, globalement, la station tampon 85 est avantageusement agencée pour soutenir les noyaux 4 par l'intérieur, de sorte à ne pas endommager la face réceptrice 31 desdits noyaux 4, ni le cas échéant le bandage annulaire cru 2A porté par le noyau 4, et pour soutenir au contraire les bandages annulaires cuits 2B principalement voire exclusivement par l'extérieur, afin de ne pas altérer l'état de surface de la face interne desdits bandages annulaires cuits 2B, et ainsi préserver ladite face interne en vue de l'assemblage, par collage ou par moulage, des rayons du bandage.

Dans l'absolu, on pourrait dissocier les emplacements pour noyaux 87 des emplacements pour bandage 97 en répartissant ces emplacements par type sur deux mâts distincts. Ceci étant, les deux types d'emplacements de stockage 87, 97 seront de préférence présents et groupés sur un même mât 86, pour réduire l'encombrement et le coût de la station tampon 85.

De préférence, et notamment pour assurer une meilleure stabilité du mât 86 en plaçant au plus près du sol les organes mécaniques les plus complexes et les plus lourds, tels que les branches de support 98 rotatives motorisées, on pourra positionner les emplacements pour bandages 97 en partie basse du mât 86, typiquement dans la moitié voire le tiers inférieur du mât 86, et réserver la partie haute du mât 86, typiquement au moins la moitié ou les deux-tiers supérieurs du mât 86, aux emplacements pour noyaux 87, tel que cela est visible sur la figure 19.

De préférence, le mât 86 peut présenter plusieurs faces, portant chacune un ou plusieurs emplacements de stockage 87, 97, et être monté en rotation, ici autour de son axe vertical, de sorte à former un carrousel, tel que cela est illustré sur la figure 19.

De la sorte, la station tampon 85 pourra ainsi présenter alternativement ses différentes faces, et donc l'emplacement de stockage 87, 97 auquel on souhaite accéder parmi la pluralité d'emplacements de stockage 87, 97 existants, en vis-à-vis du dispositif de transfert 100 qui achemine les noyaux 4 et les bandages annulaires 2 jusqu'à la station tampon 85, puis qui les récupère pour les emmener vers une autre destination.

Afin d'éviter un fléchissement ou un basculement du mât 86 en tangage, ledit mât 86 pourra être soutenu par des jambes stabilisatrices 89, de préférence pourvue de roulettes 90 qui portent au sol et qui sont orientées de sorte à pouvoir rouler sur le sol pour accompagner la rotation du mât 86 autour de son axe vertical.

Par ailleurs, l'installation 1 comprend de préférence une station d'étuvage 91, du genre four électrique, qui permet de préchauffer au moins un, ou de préférence plusieurs noyau 4 vides de bandage, et de conserver ledit ou lesdits noyaux 4 à une température dite « température de préchauffage » qui est supérieure à la température ambiante et inférieure à la température de cuisson, ladite température de préchauffage étant de préférence comprise entre 50°C et 100°C.

Les noyaux 4 pourront ainsi être préchauffés avant d'être acheminés à la station d'assemblage 3 et d'y recevoir le bandage annulaire cru 2A.

Avantageusement, l'opération de préchauffage permettra à la station d'assemblage 3 de poser les composants de bandage constitutifs du bandage annulaire 2 sur un noyau 4 déjà chaud, et donc déjà partiellement dilaté, de sorte que, après l'opération d'assemblage des composants de bandage sur le noyau 4, l'opération de cuisson n'augmentera la température du noyau 4 que modérément par rapport à la température de préchauffage et d'assemblage, ce qui minimisera la tendance du noyau 4 à se dilater, et donc évitera de générer pendant l'opération de cuisson des contraintes de dilatation trop élevées à l'encontre du bandage 2, qui, en raison de la présence d'au moins un composant de renfort de type frette, est sensiblement inextensible selon la direction circonférentielle du noyau 4.

On préservera ainsi la qualité et l'intégrité du bandage 2 et du noyau 4.

En outre, la pose des composants de bandage sur un noyau 4 chaud améliore le collant (« tack », en anglais) desdits composants de bandage, et donc améliore l'adhérence desdits composants de bandage sur le noyau 4, ce qui permet de mieux contrôler la pose et l'enroulement desdits composants de bandage sur ledit noyau 4, et donc finalement la qualité et les performances du bandage annulaire 2 obtenu.

L'installation 1 comprendra de préférence également une station de finition et de contrôle 92 qui est agencée pour recevoir le bandage annulaire cuit 2B, après vulcanisation et refroidissement de ce dernier, pour permettre de contrôler le bandage annulaire, au besoin de le rectifier, puis de le faire sortir de l'installation 1.

A cet effet, ladite station de finition et de contrôle 92 pourra notamment comporter, tel que cela est visible sur les figures 1 et 2, une sous-station de pesée 93, permettant de vérifier, de préférence automatiquement, le poids du bandage annulaire 2.

La station de finition et de contrôle 92 pourra également comporter un sas 94 qui permettra à un opérateur 95 de récupérer le bandage annulaire 2 et de le sortir de l'installation 1, hors du périmètre fermé délimité par les cloisons de sécurité 96 qui entourent l'installation, et plus particulièrement qui entourent l'ensemble des stations de ladite installation 1.

Avantageusement, le sas 94 permettra également de vérifier l'aspect du bandage annulaire 2, et pourra être pourvu d'un équipement d'ébarbage permettant de rectifier au besoin la surface du bandage annulaire 2.

De préférence, l'installation 1 comprend un dispositif de transfert 100 pourvu d'un bras robotisé 101 qui permet de transporter le noyau 4 successivement d'une station à l'autre.

Ledit bras robotisé 101 est de préférence un robot anthropomorphe à six axes, qui, de façon connue en soi, comprend, tel que cela est visible sur les figures 20 et 22, une base 102, portant une première articulation 103 dite « épaule » formant une liaison à au moins deux axes de pivot orthogonaux, suivie d'un premier segment 104 dit « bras » qui porte une seconde articulation 105 dite « coude » comprenant de préférence au moins un axe de pivot pour assurer le débattement angulaire d'un second segment 106 dit « avant-bras » dont l'extrémité terminale porte une troisième articulation 107 dite « poignet » qui est mobile selon trois axes de pivot orthogonaux deux à deux, dont l'un est confondu avec l'axe longitudinal de l'avant-bras 106. Ledit poignet 107 est également pourvu d'une embase de fixation destinée à recevoir un outil 108, tel qu'un outil de préhension 108.

De préférence, ledit bras robotisé 101 dessert au moins la station d'assemblage 3, la station de cuisson 20 et la station d'extraction 21, et plus préférentiellement toutes les stations de l'installation 1, de sorte à pouvoir amener successivement le noyau 4 à chacune desdites stations.

Ainsi, en l'espèce, un seul et même bras robotisé 101 peut atteindre et desservir la station d'étuvage 91, la station d'assemblage 3, la station de cuisson 20, la station d'extraction 21, la station tampon 85 et la station de finition et de contrôle 92, et donc déposer ou récupérer un noyau 4 et/ou selon le cas un bandage annulaire 2 dans chacune desdites stations.

A cet effet, le bras robotisé 101 sera avantageusement implanté en position centrale dans l'installation 1, les différentes stations étant réparties en azimut, sensiblement en cercle, autour de la base dudit bras robotisé 101, tel que cela est bien visible sur la figure 1.

L'installation 1 sera ainsi particulièrement compacte, et permettra des transferts rapides des noyaux 4 et des bandages annulaires 2 entre les différentes stations, ce qui réduira le temps d'un cycle de fabrication. De même, on pourra ainsi engager et gérer plusieurs cycles de fabrication simultanés au sein d'une même installation 1 en mettant en œuvre simultanément plusieurs noyaux 4 répartis sur les différentes stations de l'installation qui sont desservies par le même bras robotisé 101.

Selon une caractéristique préférentielle qui peut constituer une invention à part entière, et tel que cela est illustré sur les figures 20 à 24, le bras robotisé 101 porte un outil de préhension 108 pourvu d'une pince 109 qui comporte une pluralité de mors 110 qui sont montés mobiles radialement selon des directions radiales distinctes d'un mors 110 à l'autre, et qui sont agencés de manière à pouvoir alternativement soit saisir le noyau 4 par l'intérieur, en exerçant un serrage centrifuge à l'encontre d'une face radialement interne dudit noyau 4, tel que cela est illustré sur les figures 20 et 21, soit saisir par l'extérieur le bandage annulaire cuit 2B, séparé de son noyau 4, en opérant un serrage centripète sur une face radialement externe dudit bandage annulaire cuit 2B, tel que cela est illustré sur les figures 22 et 23.

Ainsi, avantageusement, un seul et même outil de préhension 108 pourra être utilisé pour manipuler et transporter tantôt un noyau 4, tantôt un bandage annulaire cuit 2B, ce qui permettra notamment de récupérer successivement le noyau 4 puis le bandage annulaire 2, tels que séparés et rendus disponibles dans la station d'extraction 21, ou bien encore de gérer simultanément dans la même installation 1 plusieurs noyaux 4 - vides ou porteurs de bandage annulaire cru 2A - et bandages annulaires cuits 2B, sans avoir à effectuer de changement d'outil de préhension 108.

Les mors 110 pourront être guidés en translation radiale au moyen de coulisses 111, de préférence des coulisses 111 équiréparties en étoile autour de l'axe central X2, X4, et entraînés en déplacement par une courroie 112.

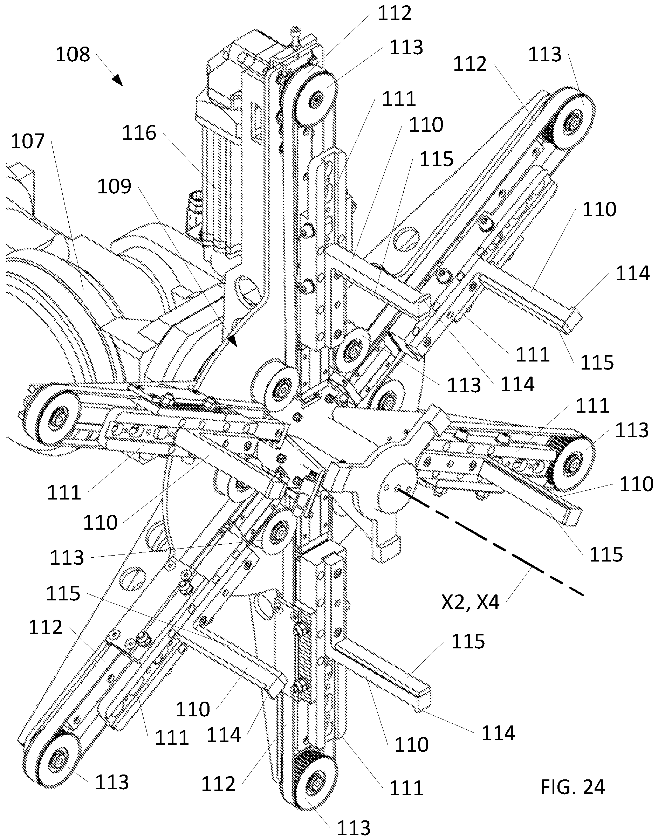

Pour synchroniser les mouvements radiaux des différents mors 110, et pour pouvoir entraîner les mors en déplacement radial au moyen d'un seul et même moteur de pince 116, lesdits mors 110 pourront être tous entraînés par une seule et même courroie 112, ici une courroie crantée pour éviter toute désynchronisation par glissement, courroie 112 qui cheminera successivement le long des différentes coulisses 111 en suivant un chemin en étoile défini par un jeu de poulies 113, ici notamment des poulies crantées 113, tel que cela est bien visible sur la figure 24.

Les mors 110 pourront par exemple être formés par des équerres en L, dont une branche, sensiblement parallèle à l'axe central X2, X4, viendra en appui contre l'objet à saisir, noyau 4 ou bandage annulaire 2, et l'autre branche, radiale, formera le chariot coulissant de la coulisse 111 ou à tout le moins sera solidaire du chariot coulissant de la coulisse 111.

Les mors 110 présenteront de préférence, sur leur face radialement externe, un tenon 114 radialement saillant agencé pour venir s'engager dans la gorge annulaire 38, 38' du tronçon d'accouplement 35, 35' du noyau 4, afin d'assurer une prise solide et d'empêcher le noyau 4 de glisser axialement hors de la pince 109, tel que cela est bien visible sur la figure 21. Le tenon 114 pourra avantageusement présenter une forme conjuguée à celle de la gorge annulaire 38, 38', et en particulier une contre-pente conjuguée à la pente 38A de ladite gorge.

Avantageusement, les mors 110 viendront en prise sur le tronçon d'accouplement 35, 35' formant l'extrémité axiale du noyau 4 par laquelle le bras robotisé 101, et plus particulièrement l'outil 108, approche, aborde et pénètre axialement dans le noyau 4, de sorte que même lorsque les mors 110 seront en prise sur l'intérieur du noyau 4, lesdits mors 110 resteront axialement hors de la zone couverte axialement par la paroi tubulaire 30 du noyau, et plus particulièrement hors de la zone de l'alésage 33 couverte par la face d'échange 32, de sorte notamment à maintenir ledit alésage 33 suffisamment dégagé pour ne pas interférer avec la mise en place du noyau 4 en vis-à-vis des secteurs chauffants 40 dans la station de cuisson 20, lors de l'exécution du mouvement d'introduction MX+ axial.

De même, les mors 110 en prise à l'intérieur du noyau 4, sur le tronçon d'accouplement 35, 35', n'interféreront pas avec la face réceptrice 31 du noyau 4, de sorte à ne pas endommager le bandage annulaire 2 porté par ledit noyau 4, lorsque le dispositif de transfert 100 transporte ledit noyau 4 porteur d'un bandage annulaire 2, par exemple entre la station d'assemblage 3 et la station de cuisson 20, entre la station de cuisson 20 et la station d'extraction 21, entre la station d'assemblage 3 et la station tampon 85, ou entre la station tampon 85 et la station de cuisson 20.

Par ailleurs, sur leur face opposée, c'est-à-dire sur leur face radialement interne, les mors 110 seront de préférence pourvus d'une garniture souple 115, par exemple en matériaux élastomère de type EPDM, de sorte à pouvoir exercer un appui centripète doux à l'encontre de la face radialement externe du bandage annulaire cuit 2B débarrassé de son noyau 4, tel que cela est visible sur la figure 23, afin de ne pas altérer la surface radialement externe, et plus particulièrement la bande de roulement, dudit bandage annulaire cuit 2B.

Bien entendu, l'invention concerne également un procédé de fabrication d'un bandage 2, et plus particulièrement un procédé de fabrication de bandage mettant en œuvre l'installation 1 décrite dans ce qui précède.

Ledit procédé de fabrication d'un bandage comprend une étape (S2) d'assemblage, au cours de laquelle on dispose un noyau 4 dans une station d'assemblage 3 et l'on pose, de préférence l'on enroule, un ou plusieurs composants de bandage sur ledit noyau 4 afin de former un bandage annulaire cru 2A, une première étape de transfert (S3) au cours de laquelle on transporte le noyau 4, porteur de son bandage annulaire cru 2A, de la station d'assemblage 3 jusqu'à une station de cuisson 20 distante de la station d'assemblage 3, une étape (S4) de cuisson au cours de laquelle on chauffe l'ensemble formé par ledit noyau 4 et le bandage annulaire cru 2A placé dans la station de cuisson 20 pour obtenir un bandage annulaire cuit 2B, une seconde étape de transfert (S5) au cours de laquelle on transporte le noyau 4 porteur du bandage annulaire cuit 2B de la station de cuisson 20 à une station d'extraction 21, distante de la station de cuisson 20, puis une étape (S6) d'extraction au cours de laquelle, au sein de la station d'extraction 21, on dissocie le bandage annulaire cuit 2B du noyau 4.

On notera que la première étape de transfert (S3) de la station d'assemblage 3 à la station de cuisson 20 peut éventuellement être exécutée en deux phases, en transférant d'abord le noyau 4 porteur du bandage annulaire cru 2A de la station d'assemblage 3 à la station tampon 85, puis, sur appel de la station de cuisson 20, de la station tampon 85 à la station de cuisson 20. Ce pourra notamment être le cas si le noyau 4 porteur du bandage annulaire cru 2A est mis à disposition par la station d'assemblage 3 alors que la station de cuisson 20 n'est pas encore prête, par exemple si ladite station de cuisson 20 est encore occupée par un autre noyau (ou ici, deux autres noyaux).

Selon l'invention, et comme déjà indiqué plus haut, le noyau 4 possède une paroi tubulaire 30 qui s'étend le long et autour d'un axe central X30, et qui s'étend en épaisseur E30, radialement audit axe central, depuis une première face annulaire radialement externe, dite « face réceptrice » 31, qui est destinée à recevoir le ou les composants de bandage, jusqu'à une seconde face annulaire, radialement interne, dite « face d'échange » 32, qui entoure l'axe central X30 et qui est destinée à permettre des échanges thermiques entre la paroi tubulaire du noyau 30 et des sources thermiques 23, 24 extérieures audit noyau.

Selon le procédé, lors de l'étape (S4) de cuisson, on applique contre la face d'échange 32 une première source thermique 23, chauffante, afin de réaliser l'opération de cuisson, puis l'on dissocie ladite première source thermique 23 du noyau 4 de sorte que la face d'échange 32 soit de nouveau libre lorsque l'on procède à la seconde étape de transfert (S5) vers la station d'extraction 21.

Toujours selon le procédé, lors de l'étape (S6) d'extraction, on place une seconde source thermique 24, réfrigérante, au contact de la face d'échange 32 ainsi libérée, afin de refroidir ledit noyau 4, de manière à créer un jeu radial entre la face réceptrice du noyau 31 et le bandage annulaire cuit 2B, par contraction radiale différentielle de la paroi tubulaire du noyau 30 par rapport au bandage annulaire cuit 2B, et l'on dégage axialement le bandage annulaire cuit 2B du noyau 4, ici préférentiellement en enfonçant axialement le noyau 4 au moyen d'un organe éjecteur 25 tandis que l'on retient axialement le bandage annulaire cuit 2B au moyen d'un rebord de retenue 77A prévu à cet effet..

Suite à l'étape (S6) d'extraction, on réalise une troisième étape de transfert (S7) au cours de laquelle on transporte successivement le bandage annulaire cuit 2B, séparé du noyau 4, puis le noyau 4, débarrassé du bandage annulaire cuit 2B, ou inversement, le noyau 4 puis le bandage annulaire cuit 2B, chacun depuis la station d'extraction 21 vers une autre station de l'installation.

Plus préférentiellement, lors de cette troisième étape de transfert (S7), le bandage annulaire cuit 2B est transféré vers un emplacement de stockage 97 libre de la station tampon 85, en attendant d'être envoyé à la station de finition et de contrôle 92, tandis que le noyau 4 est de préférence soit renvoyé directement en production dans la station d'assemblage 3, soit placé dans la station d'étuvage 91 en vue d'y être réchauffé et porté à une température de préchauffage adéquate avant d'être renvoyé à la station d'assemblage 3, soit enfin, dans le cas où l'on souhaite faire passer le noyau 4 par la station d'étuvage 91 mais que celle-ci n'est pas prête, placé dans la station tampon 85 en attente d'un appel de la station d'étuvage 91. En variante, et notamment lorsque l'on achève une série de fabrication, le noyau 4 pourra également, tout comme le bandage annulaire cuit 2B, être transféré vers un emplacement de stockage 87 libre de la station tampon 85 pour y être rangé.

Avantageusement, cette troisième étape de transfert (S7), et plus préférentiellement toutes les étapes de transfert (S3), (S5), (S7), sont réalisées au moyen d'un même dispositif de transfert 100 qui est équipé à cet effet d'un outil de préhension 108 agencé pour pouvoir saisir alternativement le bandage annulaire cuit 2B par l'extérieur dudit bandage annulaire cuit 2B et le noyau 4 par l'intérieur dudit noyau 4.

De préférence, l'étape (S2) d'assemblage est précédée d'une étape (S1) de préchauffage, au cours de laquelle on porte le noyau 4 destiné à l'assemblage, vide de bandage annulaire 2, à une température dite « température de préchauffage » qui est comprise entre 50°C et 100°C, par exemple égale à 80°C +/- 5°C, puis l'on transfère ledit noyau 4, ainsi porté à la température de préchauffage, dans la station d'assemblage 3 pour l'étape (S2) d'assemblage.

Selon une caractéristique particulièrement préférentielle qui peut constituer une invention à part entière, ladite étape (S1) de préchauffage est réalisée soit en recyclant un noyau 4 qui est transféré directement depuis la station d'extraction 21, si la température résiduelle du noyau issu de l'étape (S6) d'extraction, à la fin du cycle de fabrication précédent, correspond à une température de préchauffage jugée acceptable, soit en prélevant un autre noyau 4, vide de bandage annulaire, préalablement placé en attente et porté à une température de préchauffage adéquate dans une station d'étuvage 91 (la station d'étuvage 91 décrite plus haut), autre noyau 4 qui est ainsi immédiatement disponible à la température de préchauffage souhaitée.

En d'autres termes, à la fin d'un premier cycle de fabrication d'un bandage annulaire 2, on pourra avantageusement prévoir :
- une étape (S7') de recyclage à chaud, du noyau 4, au cours de laquelle on transfère directement le noyau 4 de la station d'extraction 21, dans laquelle le noyau 4 se trouve encore à une température strictement supérieure à la température ambiante et plus particulièrement à une température entrant dans la plage de température de préchauffage souhaitée mentionnée plus haut, à la station d'assemblage 3 pour recommencer immédiatement un cycle de fabrication avec le même noyau 4 ; un tel recyclage permettra de profiter pleinement de la chaleur résiduelle accumulée par le noyau au cours du cycle de fabrication précédent, et donc de réaliser des économies d'énergie ;
- ou bien une étape (S7") de substitution de noyau, au cours de laquelle on échange le noyau 4 en provenance de la station d'extraction 21, jugé trop froid, pour un noyau de réserve qui se trouve à température de préchauffage adéquate car préalablement préparé et mis à disposition dans la station d'étuvage 91.

Le processus de décision permettant de sélectionner l'étape (S7') de recyclage à chaud ou l'étape (S7'') de substitution de noyau pourra inclure une sous-étape de vérification de la température du noyau 4, au cours de laquelle on évalue, préférentiellement on mesure, la température du noyau 4 au sein de la station d'extraction 21, après l'expulsion dudit noyau 4 hors du bandage annulaire cuit 2B, puis l'on compare ladite température mesurée à un seuil de température correspondant à une température de préchauffage minimale requise.

On notera à ce titre qu'il peut être préférable de transférer d'abord le noyau 4, puis seulement ensuite le bandage annulaire cuit 2B, dans cet ordre, de sorte à profiter au maximum de la chaleur résiduelle du noyau au sortir de l'opération d'extraction, sans laisser inutilement le noyau 4 refroidir trop longtemps au sein de la station d'extraction 21. Ceci étant, si on le souhaite ou si la configuration de la station d'extraction 21 le requiert, on pourra évacuer de la station d'extraction 21 d'abord le bandage annulaire cuit 2B, puis ensuite le noyau 4 correspondant.

De préférence, on utilise, ici au sein de la même installation 1, au moins deux noyaux 4 dans un même cycle de fabrication, en appliquant l'étape (S4) de cuisson à un premier noyau 4 portant un bandage annulaire 2 et placé dans la station de cuisson 20 tandis que, en temps masqué, on applique l'étape (S6) d'extraction et/ou l'étape (S2) d'assemblage à un second noyau 4.

On pourra ainsi maximiser la productivité de l'installation 1.

On notera également que l'usage de deux moules de cuisson 50 au sein de la même station de cuisson 20 permettra d'accroître encore la productivité.

Bien entendu, chacun desdits noyaux 4 pourra avantageusement être géré et transféré par le même dispositif de transfert 100 unique.

Un exemple de cycle complet de fabrication de bandage 2 selon l'invention va maintenant être détaillé, en référence préférentielle à l'installation 1 et au procédé décrits ci-dessus.

Initialement, à froid, au démarrage de l'installation 1, le dispositif de transfert 100 prélève à un emplacement de stockage 87 de la station tampon 85 un noyau 4 froid, c'est-à-dire typiquement un noyau dont la température est égale à la température ambiante, et place ledit noyau 4 dans la station d'étuvage 91.

De préférence, il procède de même avec au moins un second noyau 4, afin de disposer d'une réserve de noyaux 4 dans ladite station d'étuvage 91.

Une fois les noyaux 4 parvenus à une température de préchauffage suffisante, le dispositif de transfert prélève le premier noyau 4 dans la station d'étuvage 91 et le dépose dans la station d'assemblage 3, plus précisément dans la première sous-station d'assemblage 3_1, sur la première broche 18 du dispositif de permutation 17.

Une première tête de pose 5 vient alors appliquer sur la face réceptrice 31 du noyau, de préférence sur toute la hauteur axiale H31 de la face réceptrice 31, une couche de caoutchouc cru. Pour ce faire, ladite première tête de pose 5 applique contre le noyau une bande de caoutchouc cru continue issue de la pompe 6 associée, et se déplace parallèlement à l'axe central X4 du noyau 4, tandis que le noyau 4 est entraîné en rotation par la broche 18 autour de son axe central X4.

Le dispositif de permutation 17 bascule ensuite le noyau 4 vers la seconde sous-station d'assemblage 3_2, en vis-à-vis de laquelle se trouve la seconde tête de pose 7 qui s'est approchée le long du rail 15_R.

La seconde tête de pose 7 vient alors appliquer sur le noyau 4, en l'espèce sur la couche de caoutchouc cru, le front d'une bande de renfort en Composite Verre Résine, ici par exemple une bande de renfort en composite verre-résine sous sa forme revêtue, c'est-à-dire déjà enrobé de caoutchouc. Le noyau 4 est mis en rotation par la broche 18, tandis que la seconde tête de pose 7 est déplacée en translation parallèlement à l'axe central X4 du noyau, de sorte à enrouler en continu la bande de renfort sur le noyau, en formant une succession de spires hélicoïdales jointives qui forment, dans leur ensemble, un renfort de type frette. L'opération peut être répétée au besoin.

Si l'on souhaite poser plutôt une bande de renfort en composite verre-résine sous sa forme nue, il faudra, après la pose de ladite bande de renfort, basculer de nouveau le noyau 4 vers la première sous-station d'assemblage 3_1, afin de recouvrir ladite bande de renfort d'une couche de caoutchouc cru, et répéter ainsi ces opérations alternées de pose de bande de renfort puis de pose de bande de caoutchouc cru, entrecoupées de basculements, autant de fois que nécessaire pour obtenir le renfort stratifié souhaité.

A l'issue de la pose de la ou des bandes de renfort, le noyau 4 reste, ou le cas échéant revient, dans la seconde sous-station d'assemblage 3_2.

La seconde tête de pose 7 est dégagée le long du rail 15_R, et la troisième tête de pose 12 vient prendre sa place, en vis-à-vis du noyau 4.

La troisième tête de pose 12 enroule alors successivement une première nappe de renfort puis une seconde nappe de renfort sur le noyau 4, par-dessus la frette. Lesdites nappes de renfort présentent avantageusement des renforts croisés, qui, en superposition avec les fils de renfort sensiblement circonférentiels contenus dans la frette, forment une armature à structures de renfort triangulaires, avantageusement indéformables axialement et circonférentiellement.

La troisième tête de pose 12 se dégage ensuite en retrait du noyau 4, et le dispositif de permutation 17 ramène, en basculant la tête rotative 19, le noyau 4 dans la première sous-station d'assemblage 3_1.

Une autre première tête de pose 5 vient alors recouvrir le noyau 4, par-dessus les nappes de renfort, d'une couche de caoutchouc cru destinée à former la bande de roulement du bandage 2, achevant ainsi la confection du bandage annulaire cru 2A sur le noyau 4.

Le dispositif de transfert 100 retire alors de la première sous-station d'assemblage 3_1 le noyau 4 porteur du bandage annulaire cru 2A pour amener ledit noyau 4 soit directement à la station de cuisson 20, si celle-ci est prête, soit à la station tampon 85, s'il est nécessaire d'attendre que la station de cuisson 20 signale qu'elle est prête par un signal d'appel.

La station de cuisson 20 ouvre son premier moule de cuisson 50, de sorte à dégager l'accès au plateau inférieur 52 et aux secteurs chauffants 40 qui font saillie axialement par rapport audit plateau inférieur 52, et se trouvent en configuration rétractée.

Le dispositif de transfert 100 exécute alors le mouvement d'introduction MX+ axial, afin d'enfiler le noyau 4 autour des secteurs chauffants 40. Avantageusement, la portion tronconique 37 du tronçon d'accouplement 35 qui pénètre en premier autour des secteurs chauffants 40 permet de guider et centrer le noyau par rapport au plateau inférieur 52. Le mouvement d'introduction MX+ stoppe lorsque l'épaulement 36 dudit tronçon d'accouplement 35 vient en butée contre le plateau inférieur 52, dans une position selon laquelle la face d'échange 32 coïncide axialement avec les secteurs chauffants 40.

Le moule de cuisson 50 est alors refermé, de manière à ce que le plateau supérieur 54 et la couronne 53 vienne recouvrir le plateau inférieur 52, les secteurs chauffants 40, et le bandage annulaire cru 2A porté par le noyau 4.

Les secteurs chauffants 40 sont alors déployés radialement par le mécanisme de déploiement 55, pour venir s'appliquer au contact de la face d'échange 32, comme cela est illustré sur les figures 11, 12 et 13. Ainsi, la première source thermique 23, chauffante, est couplée temporairement à la face d'échange 32, dont elle occupe la majorité voire la totalité de la superficie.

Grâce aux secteurs chauffants 40, le bandage annulaire est porté à la température de cuisson adéquate, et maintenu à cette température de cuisson pendant une durée appropriée prédéterminée, pour se transformer en bandage annulaire cuit 2B.

On notera que, de préférence, pendant que le premier noyau 4 et son bandage annulaire 2 sont soumis à l'opération de cuisson dans le premier moule de cuisson 50, voire même avant, sitôt que le premier noyau 4 est engagé dans la seconde sous-station d'assemblage 3_2 de sorte que le dispositif de permutation 17 présente une broche 18 libre dans la première sous-station d'assemblage 3_1, le dispositif de transfert 100 va, en temps masqué, prélever le second noyau 4 dans la station d'étuvage 91 et placer ledit second noyau 4 dans la station d'assemblage 3, où un second bandage annulaire cru 2A va pouvoir être confectionné sur ledit second noyau 4.

Si l'étape d'assemblage du second bandage annulaire cru 2A est terminée avant que le premier moule de la station de cuisson 20 n'ait achevé l'opération de cuisson du premier bandage annulaire 2, le dispositif de transfert 100 peut avantageusement, toujours en temps masqué, récupérer le second noyau 4 et son second bandage annulaire cru 2A dans la station d'assemblage 3 et placer ledit second noyau 4 dans le second moule de cuisson 50 de la station de cuisson 20, afin de lancer l'opération de cuisson dudit second bandage annulaire 2.

En tout état de cause, sitôt terminée l'opération de cuisson du premier bandage annulaire 2, les secteurs chauffants 40 (du premier moule de cuisson 50) sont rétractés par le mécanisme de déploiement 55, afin de se détacher de la face d'échange 32 et de libérer le noyau 4, comme cela est visible sur les figures 8, 9 et 10.

Le (premier) moule de cuisson 50 est ouvert, ici en soulevant le plateau supérieur 54 et la couronne 53, pour permettre au dispositif de transfert 100 d'accéder au (premier) noyau 4 et d'extraire ledit noyau 4 hors de la station de cuisson 20. On notera que, de préférence, l'ouverture du moule de cuisson 50 et la rétractation radiale des secteurs chauffants 40 sont opérés simultanément.

Le dispositif de transfert 100 saisit le noyau 4, ici par le second tronçon d'accouplement 35', accessible par le dessus, et exécute alors un mouvement axial d'enlèvement MX- qui dégage le noyau des secteurs chauffants 40, tandis que lesdits secteurs chauffants 40 restent en place dans la station de cuisson 20, dans une position axialement inchangée par rapport au plateau inférieur 52, position que lesdits secteurs chauffants 40 ont avantageusement conservée pendant tout le processus de mise en place du noyau, de cuisson, puis d'extraction du noyau.

La première source thermique chauffante 23, ainsi détachée et dégagée du noyau 4 pour rester dans la station de cuisson 20, libère de fait totalement la face d'échange 32, rendant ainsi ladite face d'échange 32 disponible pour la future opération de refroidissement et d'extraction.

Le dispositif de transfert 100 transfère le (premier) noyau 4 de la station de cuisson 20 jusqu'à la station d'extraction 21, où ledit dispositif de transfert 100 place le noyau 4 sur la table de réception 76, en enfilant l'alésage 33 du noyau sur le fût central 71, tout en ménageant un chemin d'écoulement 72 annulaire, et de manière à ce que le bandage annulaire 2 se retrouve en appui contre le rebord de retenue 77A de l'ouverture 77, tel que cela est visible sur la figure 14.

Le dispositif d'aspiration 73 est alors activé pour générer un flux d'air forcé 70 qui tient lieu de seconde source thermique réfrigérante 24, et qui balaie avantageusement toute la superficie de la surface d'échange 32 afin de refroidir le noyau 4, tel que cela est visible sur les figures 14, 15 et 17. Avantageusement, aucun mouvement d'air forcé n'est créé au niveau de la surface radialement externe du bandage annulaire cuit 2B, et ce afin de refroidir davantage et plus rapidement le noyau 4 que le bandage annulaire 2.

La coiffe 78 est abaissée contre le noyau 4 par le système d'entraînement 82, tandis que la ventilation forcée, et donc le refroidissement du noyau, se poursuivent, jusqu'à amener le noyau 4 à une température dite « température d'extraction » adaptée, à laquelle la rétractation thermique radiale du noyau 4 par rapport au bandage annulaire 2 est suffisante pour permettre de forcer la séparation du noyau 4 et du bandage annulaire 2 par cisaillement axial. De préférence, le dispositif d'aspiration 73 est éteint, et donc le flux d'air forcé 70 est stoppé, dès lors que le noyau 4 atteint la température d'extraction souhaitée, et/ou, de manière équivalente, le degré de contraction radiale souhaité.

A titre indicatif, le retrait radial de la face réceptrice 31 du noyau obtenu par l'opération de refroidissement différencié peut être de l'ordre de 0,2 mm à 1 mm.

Le cisaillement axial est généré par la coiffe 78, formant organe éjecteur 25, qui pousse le noyau 4 et force ainsi le déplacement axial du noyau 4 à travers le bandage annulaire cuit 2B qui est quant à lui retenu en butée contre la table de réception 76, comme cela est illustré sur les figures 16 et 18.

Le noyau 4 est ainsi dissocié et sorti progressivement, et totalement, du bandage annulaire cuit 2B, et recueilli sur le plateau élévateur 75.

Le dispositif de transfert 100 peut alors récupérer le bandage annulaire cuit 2B et le stocker dans un emplacement de stockage pour bandage 97 de la station tampon 85, où ledit bandage annulaire cuit 2B achève passivement sa vulcanisation, au fur et à mesure de son refroidissement.

Le dispositif de transfert 100 récupère également, séparément du bandage annulaire 2 mais avantageusement avec le même outil de préhension 108 polyvalent, le noyau 4 débarrassé du bandage, et achemine ledit noyau 4 vers une autre station.

Si l'on se trouve à la fin d'une série de fabrication, de sorte que l'on doit mettre l'installation au repos 1 ou, plus communément, que l'on doit changer de type de noyau 4 pour produire une gamme de bandage 2 de dimensions différentes, on pourra transférer le noyau 4 de la station d'extraction 21 à un emplacement de stockage pour noyau 87 de la station tampon 85.

Si, plus communément, on poursuit la série de fabrication en cours, de sorte que l'on aura l'utilité de réutiliser le même (premier) noyau 4 dans un nouveau cycle de confection et de cuisson d'un même type de bandage annulaire 2, alors on pourra envisager l'une et/ou l'autre des deux options suivantes.

Selon une première option, on pourra transférer le (premier) noyau 4 de la station d'extraction 21 à la station d'étuvage 91, prélever un autre noyau 4 de réserve qui est présent dans ladite station d'étuvage 91 (ici par exemple un troisième noyau 4), et amener cet autre noyau, immédiatement disponible à la température de préchauffage, jusqu'à la station d'assemblage 3 pour débuter un nouveau cycle de fabrication. Une telle première option, qui procède à un remplacement du noyau 4 entre deux cycles de fabrication successifs, sera notamment indiquée si le premier noyau 4 en provenance de la station d'extraction 21 est jugé trop froid pour pouvoir être réutilisé directement en l'état dans la station d'assemblage 3. Selon une possible sous-option, si la station d'étuvage 91 contient déjà un nombre de noyaux 4 correspondant à sa capacité d'accueil maximale, on pourra d'abord diriger vers la station tampon 85 le (premier) noyau 4 en provenance de la station d'extraction 21, puis prélever un autre noyau dans la station d'étuvage 91 pour l'amener à la station d'assemblage 3, et enfin transférer un noyau, à savoir le premier noyau ou bien un autre noyau se trouvant dans la station tampon 85, de la station tampon 85 à la station d'étuvage 91.

Selon une seconde option, on pourra, si le noyau 4 issu de la station d'extraction 21 est encore suffisamment chaud, en ceci que ledit noyau 4 présente une température comprise dans la plage de températures de préchauffage acceptables, de sorte que ledit noyau est directement compatible avec une nouvelle opération d'assemblage, transférer le noyau 4 directement de la station d'extraction 21 à la station d'assemblage 3 pour débuter un nouveau cycle, sans passer par une nouvelle étape de préchauffage. On réalisera ainsi de substantielles économies d'énergie.

L'évaluation de la température du noyau 4 en sortie de l'étape d'extraction pourra être réalisée par tout moyen approprié, soit par une mesure directe par exemple au moyen d'un pyromètre mesurant la température de la face réceptrice 31 du noyau, soit par exemple au moyen d'un abaque permettant d'estimer la température dudit noyau en fonction de la température de cuisson, des paramètres du flux d'air forcé 70 (température, débit...) et de la durée de séjour du noyau dans la station d'extraction 21.

Les opérations ci-dessus se répètent avantageusement de manière automatique, pour toute la série de fabrication, le ou les noyaux 4 étant avantageusement recyclés, directement ou par binôme avec passage intermédiaire par la station d'étuvage 91, au fur et à mesure de la fabrication des bandages annulaires 2.

Le pilotage et la coordination des différents organes et des différentes stations de l'installation 1, notamment des sources thermiques 23, 24, du dispositif de transfert 100, et des différents organes motorisés des stations, tels que le mécanisme de déploiement 55 des secteurs chauffants, le système de fermeture des moules de cuisson 50, le système d'entraînement 82 de la coiffe 78, ou les branches de support 98 rotatives, seront avantageusement assurés par une unité de commande appropriée, du genre automate programmable ou ordinateur.

## Revendications

1. Installation (1) de fabrication de bandages (2), ladite installation comprenant une station d'assemblage (3) agencée pour poser un ou plusieurs composants de bandage sur un noyau afin de former un bandage annulaire cru (2A), une station de cuisson (20) agencée pour recevoir l'ensemble formé par ledit noyau (4) et le bandage annulaire cru (2A) et pour chauffer ledit ensemble lors d'une opération de cuisson afin d'obtenir un bandage annulaire cuit (2B), et une station d'extraction (21) agencée pour, après l'opération de cuisson, séparer le bandage annulaire cuit (2B) du noyau (4), ladite installation (1) étant **caractérisée en ce que** le noyau (4) possède une paroi tubulaire (30) qui s'étend le long et autour d'un axe central (X30), et qui s'étend en épaisseur (E30), radialement audit axe central (X30), depuis une première face annulaire (31) radialement externe, dite « face réceptrice » (31), qui est destinée à recevoir le ou les composants de bandage, jusqu'à une seconde face annulaire (32) radialement interne, dite « face d'échange » (32), qui entoure l'axe central (X30) et qui est destinée à permettre des échanges thermiques entre la paroi tubulaire (30) du noyau et des sources thermiques (23, 24) extérieures audit noyau (4), **en ce que** la station de cuisson (20) comprend une première source thermique (23), chauffante, qui est conçue pour venir s'appliquer contre la face d'échange (32) du noyau lorsque ledit noyau (4) se trouve dans ladite station de cuisson (20), afin de chauffer ledit noyau (4) et le bandage annulaire (2) lors de l'opération de cuisson, puis pour se dissocier du noyau (4) afin de laisser à nouveau libre la face d'échange (32) lorsque le noyau (4) et le bandage annulaire cuit (2B) quittent ladite station de cuisson (20) et sont transférés à la station d'extraction (21) après l'opération de cuisson, et **en ce que** ladite station d'extraction (21) comprend une seconde source thermique (24), réfrigérante, qui est conçue pour, lorsque le noyau (4) et le bandage annulaire cuit (2B) se retrouvent dans la station d'extraction (21), venir succéder à la première source thermique (23) au contact de ladite face d'échange (32) du noyau, afin de refroidir ledit noyau (4), de manière à créer un jeu radial entre la face réceptrice (31) du noyau et le bandage annulaire cuit (2B), par contraction radiale différentielle de la paroi tubulaire (30) du noyau (4) par rapport au bandage annulaire cuit (2B), et ainsi permettre à un organe éjecteur (25) équipant la station d'extraction (21) de dégager axialement le bandage annulaire cuit (2B) du noyau (4).

2. Installation selon la revendication 1 **caractérisée en ce que** la distance radiale (R31) de la face réceptrice (31) à l'axe central (X30) est égale ou supérieure à 175 mm, de préférence comprise entre 200 mm et 500 mm, et **en ce que** l'épaisseur (E30) de la paroi tubulaire (30) du noyau, qui sépare radialement la face d'échange (32) de la face réceptrice (31), est inférieure ou égale à 40 mm, de préférence inférieure ou égale à 25 mm, préférentiellement inférieure ou égale à 20 mm, voire inférieure ou égale à 15 mm, et par exemple égale à 12 mm.

3. Installation selon la revendication 1 ou 2 **caractérisée en ce que** la première source thermique (23), utilisée par la station de cuisson (20), comprend une pluralité de secteurs chauffants (40), de préférence porteurs chacun d'au moins une résistance électrique chauffante (41), lesdits secteurs chauffants (40) étant conçus de manière à venir s'appliquer contre la face d'échange (32), par l'intérieur du noyau (4), de manière à occuper pendant l'opération de cuisson, puis à libérer après l'opération de cuisson, une superficie de contact sur la face d'échange (32), dite « superficie chauffante utile », qui représente axialement au moins 80%, de préférence au moins 85%, préférentiellement au moins 90%, voire au moins 95% de la hauteur axiale (H31) de la face réceptrice (31) couverte par le bandage annulaire (2), et angulairement, en couverture azimutale autour de l'axe central (X30), au moins 270 degrés, de préférence au moins 300 degrés, voire au moins 330 degrés.

4. Installation selon l'une des revendications précédentes **caractérisée en ce que** la station de cuisson (20) comprend un moule de cuisson (50) conçu pour délimiter une enceinte de cuisson (51) destinée à recevoir et contenir l'ensemble formé par le noyau (4) et le bandage annulaire cru (2A) pour réaliser l'opération de cuisson, ledit moule de cuisson (50) comportant à cet effet un plateau inférieur (52), sur lequel vient reposer le noyau (4), une couronne (53) externe conçue pour venir entourer la face radialement externe du bandage (2) à cuire, et un plateau supérieur (54) qui coopère avec la couronne externe (53), à l'opposé axialement du plateau inférieur (52), pour fermer l'enceinte de cuisson (51), et **en ce que** la première source thermique (23) comprend une pluralité de secteurs chauffants (40), de préférence porteurs chacun d'au moins une résistance électrique chauffante (41), secteurs chauffants (40) qui sont disposés au centre de l'enceinte de cuisson (51) et placés sous la dépendance d'un mécanisme de déploiement (55) qui est conçu pour placer lesdits secteurs chauffants (40) alternativement dans une configuration déployée, dans laquelle lesdits secteurs chauffants (40) sont plaqués en compression radiale centrifuge contre la face d'échange (32) du noyau (4), et une configuration rétractée, dans laquelle lesdits secteurs chauffants (40) sont placés en retrait radial de la face d'échange (32), de telle sorte que, après l'opération de cuisson, on puisse retirer le noyau (4) de ladite enceinte de cuisson (51) en opérant un déplacement axial dudit noyau (4) par rapport auxdits secteurs chauffants (40), et laisser lesdits secteurs chauffants (40) dans la station de cuisson (20), en attente à l'intérieur de l'enceinte de cuisson (51), tandis que le noyau (4) porteur du bandage annulaire cuit (2B) en provenance de l'enceinte de cuisson (51) est acheminé vers la station d'extraction (21).

5. Installation selon la revendication 4 **caractérisée en ce que** le mécanisme de déploiement (55) comprend un premier poussoir (56) monté mobile axialement et possédant une pluralité de premières rampes (57) qui sont inclinées selon un premier sens d'inclinaison par rapport à l'axe principal (X4, X30) et qui coopèrent chacune avec un secteur chauffant (40), et un second poussoir (58) monté mobile axialement et possédant une pluralité de secondes rampes (59) qui sont inclinées par rapport à l'axe principal (X4, X30) selon un second sens d'inclinaison de signe opposé au premier sens d'inclinaison et qui coopèrent chacune avec l'un desdits secteurs chauffants (40), de sorte que l'on commande le déplacement radial des secteurs chauffants (40), permettant de passer de la configuration rétractée à la configuration déployée et inversement, en éloignant axialement l'un de l'autre le premier poussoir (56) et le second poussoir (58), respectivement en rapprochant axialement l'un de l'autre le premier poussoir (56) et le second poussoir (58).

6. Installation selon l'une des revendications précédentes **caractérisée en ce que** la seconde source thermique (24), réfrigérante, utilisée par la station d'extraction (21), est formée par un flux d'air forcé (70), qui s'écoule au contact de la face d'échange (32), et **en ce que** la station d'extraction (21) comprend un fût central (71), sur lequel on enfile le noyau (4) porteur du bandage annulaire cuit (2B) de manière à délimiter, entre la face radialement externe dudit fût central (71_out) et la face d'échange (32) radialement interne de la paroi tubulaire (30) du noyau (4), un chemin d'écoulement (72) annulaire, dont la largeur radiale (E72) est de préférence comprise entre 5 mm et 20 mm, chemin d'écoulement (72) qui est raccordé à un dispositif d' aspiration (73) au moyen d'un collecteur (74), de sorte que, lorsque le dispositif d'aspiration (73) est activé, on crée un flux d'air forcé (70) qui pénètre dans le chemin d'écoulement (72) par une zone d'admission (72_in) située à une première extrémité axiale du chemin d'écoulement (72) annulaire, qui parcourt ledit chemin d'écoulement (72) le long de la face d'échange (32), puis qui est évacué à travers le collecteur (74) au niveau d'une seconde extrémité axiale dudit chemin d'écoulement (72), située axialement à l'opposé de la première extrémité axiale.

7. Installation selon la revendication 6 **caractérisée en ce que** la station d'extraction (21) comprend un plateau élévateur (75) qui porte le fût central (71) et qui est destiné à recevoir le noyau (4) lorsque ledit noyau (4) se retrouve séparé du bandage annulaire cuit (2B), ledit plateau élévateur (75) étant monté mobile axialement selon une direction verticale, ladite station d'extraction (21) comprenant en outre une table de réception (76) horizontale qui est percée d'une ouverture (77) qui est agencée de manière d'une part à permettre le libre passage du fût central (71) et du noyau (4) à travers ladite table de réception (76), et d'autre part à présenter un rebord de retenue (77A) annulaire qui forme une butée axiale à l'encontre du bandage annulaire cuit (2B), ladite station d'extraction comprenant également une coiffe (78) qui est conçue pour venir en appui axial contre le noyau (4), de préférence sur le chant extrémal dudit noyau qui se trouve axialement à l'opposé de la table de réception (76) et du plateau élévateur (75), ladite coiffe (78) étant pourvue d'évents (79) permettant à l'air de traverser ladite coiffe (78) pour entrer dans le chemin d'écoulement (72) délimité entre le fût central (71) et la paroi tubulaire (30) du noyau, et ladite coiffe (78) formant l'organe éjecteur (25) qui permet de repousser axialement le noyau (4), accompagné dans son mouvement par le plateau élévateur (75) qui réceptionne et soutient ledit noyau (4), à travers l'ouverture (77) de la table de réception (76), tandis que le bandage annulaire cuit (2B) est retenu en appui sur le rebord de retenue (77A) de ladite ouverture (77) de la table de réception (76), de manière à extraire le noyau (4) hors du bandage annulaire cuit (2B).

8. Installation selon l'une des revendications précédentes **caractérisée en ce que** la face réceptrice (31) est formée d'un seul tenant de sorte à présenter une continuité de matière tout autour de l'axe central (X30).

9. Installation selon l'une des revendications précédentes **caractérisée en ce que** le noyau (4) est constitué, pour plus de 90 % de sa masse, de préférence pour plus de 95 % de sa masse, plus préférentiellement pour plus de 98 % de sa masse, voire pour la totalité de sa masse, d'une unique virole monobloc, de base circulaire, centrée sur l'axe central (X30, X4), et qui comprend au moins la paroi tubulaire (30).

10. Installation selon l'une des revendications précédentes **caractérisée en ce que** le noyau (4) possède, dans le prolongement axial de la face réceptrice (31), en saillie axiale de ladite face réceptrice (31), et de préférence formé d'un seul tenant avec la paroi tubulaire (30), un tronçon annulaire d'accouplement (35) qui présente au moins l'un des deux agencements suivants, et de préférence chacun des deux agencements suivants : (i) un premier agencement selon lequel le tronçon d'accouplement (35) présente, sur sa face radialement externe (35_out), d'une part un épaulement (36) qui est radialement rentrant par rapport à la face réceptrice (31), lequel épaulement (36) forme ainsi une limite axiale de la face réceptrice (31) et une butée axiale apte à stopper un mouvement d'introduction (MX+) axial du noyau (4) dans au moins l'une des stations (3, 20, 21), et d'autre part une portion tronconique (37) qui précède axialement l'épaulement (36), à l'opposé de la face réceptrice (31), pour assurer un centrage du noyau (4) par rapport à la station lors dudit mouvement d'introduction (MX+), et (ii) un second agencement selon lequel le tronçon d'accouplement (35) comporte, sur sa face radialement interne (35_in) qui prolonge axialement la face d'échange (32), hors de ladite face d'échange (32), un ou des renfoncements de préhension (38), tels qu'une gorge annulaire (38), prévus pour permettre la saisie dudit noyau (4) par un outil de préhension (108) qui est embarqué sur un dispositif de transfert (100) permettant de transporter le noyau (4) d'une station à l'autre.

11. Installation selon l'une des revendications précédentes **caractérisée en ce qu'**elle comporte une station tampon (85) permettant un stockage temporaire de noyaux (4), notamment de noyaux (4) de réserve qui sont vides de bandage annulaire et/ou de noyaux (4) porteurs d'un bandage annulaire cru (2A), ainsi qu'un stockage temporaire de bandages annulaires cuits (2B) extraits de leur noyau (4), ladite station tampon (85) comportant à cet effet au moins un mât (86) qui est pourvu d'une pluralité d'emplacements de stockage (87, 97), incluant d'une part un premier type d'emplacements de stockage (87), dits « emplacements pour noyaux » (87), qui sont agencés pour recevoir chacun au moins un noyau (4), vide ou porteur d'un bandage annulaire cru (2A), et qui comprennent à cet effet chacun au moins une, de préférence au moins deux branches de suspension (88) agencées de manière à ce que l'on puisse suspendre le noyau (4) à stocker en engageant l'évidement central dudit noyau sur ladite au moins une branche de suspension ou lesdites au moins deux branches de suspension (88), et d'autre part un second type d'emplacements de stockage (97), dits « emplacements pour bandages » (97), qui sont agencés pour recevoir chacun au moins un bandage annulaire cuit (2B) et pour pouvoir entraîner en rotation le bandage annulaire cuit (2B) afin d'éviter une ovalisation dudit bandage annulaire cuit (2B) sous l'effet de la gravité, lesdits emplacements pour bandages (97) étant pourvus à cet effet de branches de support (98) rotatives conçues pour porter le bandage annulaire cuit (2B) en soutenant la face radialement externe dudit bandage annulaire cuit (2B) et pour entraîner ledit bandage annulaire cuit (2B) en rotation sur lui-même autour de son axe central (X2), ainsi que d'au moins une et de préférence au moins deux branches de guidage (99) agencées pour s'engager dans l'évidement central dudit bandage annulaire et coopérer avec la face radialement interne du bandage annulaire cuit (2B) pour maintenir ledit bandage annulaire cuit (2B) en place à l'emplacement de bandage (97) et guider ledit bandage annulaire cuit (2B) pendant sa mise en rotation par les branches de support (98) rotatives.

12. Installation selon l'une des revendications précédentes **caractérisée en ce qu'**elle comprend un dispositif de transfert (100) pourvu d'un bras robotisé (101) qui permet de transporter le noyau (4) successivement d'une station à l'autre, ledit bras robotisé (101) desservant de préférence toutes les stations (3, 20, 21, 85, 91, 92) de l'installation (1) de sorte à pouvoir amener successivement le noyau (4) à chacune desdites stations, et **en ce que** ledit bras robotisé (101) porte un outil de préhension (108) pourvu d'une pince (109) qui comporte une pluralité de mors (110) qui sont montés mobiles radialement selon des directions radiales distinctes d'un mors à l'autre, et qui sont agencés de manière à pouvoir alternativement soit saisir le noyau (4) par l'intérieur, en exerçant un serrage centrifuge à l'encontre d'une face radialement interne dudit noyau, soit saisir par l'extérieur le bandage annulaire cuit (2B), séparé de son noyau (4), en opérant un serrage centripète sur une face radialement externe dudit bandage annulaire cuit (2B).

13. Procédé de fabrication d'un bandage (2) comprenant une étape (S2) d'assemblage, au cours de laquelle on dispose un noyau (4) dans une station d'assemblage (3) et l'on pose un ou plusieurs composants de bandage sur ledit noyau afin de former un bandage annulaire cru (2A), une première étape de transfert (S3) au cours de laquelle on transporte le noyau (4), porteur de son bandage annulaire cru (2A), de la station d'assemblage (3) jusqu'à une station de cuisson (20) distante de la station d'assemblage, une étape (S4) de cuisson au cours de laquelle on chauffe l'ensemble formé par ledit noyau et le bandage annulaire cru placé dans la station de cuisson (20) pour obtenir un bandage annulaire cuit (2B), une seconde étape de transfert (S5) au cours de laquelle on transporte le noyau (4) porteur du bandage annulaire cuit (2B) de la station de cuisson (20) à une station d'extraction (21), distante de la station de cuisson, puis une étape (S6) d'extraction au cours de laquelle, au sein de la station d'extraction (21), on dissocie le bandage annulaire cuit (2B) du noyau (4), ledit procédé étant **caractérisé en ce que** le noyau (4) possède une paroi tubulaire (30) qui s'étend le long et autour d'un axe central (X30), et qui s'étend en épaisseur, radialement audit axe central, depuis une première face annulaire radialement externe, dite « face réceptrice » (31), qui est destinée à recevoir le ou les composants de bandage, jusqu'à une seconde face annulaire, radialement interne, dite « face d'échange » (32), qui entoure l'axe central (X30) et qui est destinée à permettre des échanges thermiques entre la paroi tubulaire du noyau (30) et des sources thermiques (23, 24) extérieures audit noyau, **en ce que**, lors de l'étape (S4) de cuisson, on applique contre la face d'échange (32) une première source thermique (23), chauffante, afin de réaliser l'opération de cuisson, puis l'on dissocie ladite première source thermique (23) du noyau (4) de sorte que la face d'échange (32) soit de nouveau libre lorsque l'on procède à la seconde étape de transfert (S5) vers la station d'extraction (21), et **en ce que**, lors de l'étape (S6) d'extraction, on place une seconde source thermique (24), réfrigérante, au contact de la face d'échange (32) ainsi libérée, afin de refroidir ledit noyau (4), de manière à créer un jeu radial entre la face réceptrice du noyau (31) et le bandage annulaire cuit (2B), par contraction radiale différentielle de la paroi tubulaire (30) du noyau par rapport au bandage annulaire cuit (2B), et l'on dégage axialement le bandage annulaire cuit (2B) du noyau (4).

14. Procédé selon la revendication 13 **caractérisé en ce que** l'étape (S2) d'assemblage est précédée d'une étape (S1) de préchauffage, au cours de laquelle on porte le noyau (4) destiné à l'assemblage, vide de bandage annulaire (2), à une température dite « température de préchauffage » qui est comprise entre 50°C et 100°C, par exemple égale à 80°C +/- 5°C, puis l'on transfère ledit noyau (4), ainsi porté à la température de préchauffage, dans la station d'assemblage (3) pour l'étape (S2) d'assemblage, et **en ce que** ladite étape (S1) de préchauffage est réalisée soit en recyclant un noyau (4) qui est transféré directement depuis la station d'extraction (21), si la température résiduelle du noyau issu de l'étape d'extraction (21), à la fin du cycle de fabrication précédent, correspond à une température de préchauffage jugée acceptable, soit en prélevant un autre noyau (4), vide de bandage annulaire (2), préalablement placé en attente et porté à une température de préchauffage adéquate dans une station d'étuvage (91), et ainsi immédiatement disponible à la température de préchauffage souhaitée.

15. Procédé selon l'une des revendications 13 ou 14 **caractérisé en ce qu'**on utilise au moins deux noyaux (4) dans un même cycle de fabrication, en appliquant l'étape de cuisson à un premier noyau (4) portant un bandage annulaire et placé dans la station de cuisson (20) tandis que, en temps masqué, on applique l'étape d'extraction et/ou l'étape d'assemblage à un second noyau (4).

## Patentansprüche

1. Anlage (1) zur Herstellung von Reifen (2), die Anlage umfassend eine Aufbaustation (3), die dazu eingerichtet ist, eine oder mehrere Reifenkomponenten auf einen Kern zu legen, um einen rohen ringförmigen Reifen (2A) zu bilden, eine Vulkanisierstation (20), die dazu eingerichtet ist, die aus dem Kern (4) und dem rohen ringförmigen Reifen (2A) gebildete Einheit aufzunehmen und die Einheit bei einem Vulkanisiervorgang zu erwärmen, um einen vulkanisierten ringförmigen Reifen (2B) zu erhalten, und eine Entnahmestation (21), die dazu eingerichtet ist, nach dem Vulkanisiervorgang den vulkanisierten ringförmigen Reifen (2B) von dem Kern (4) zu trennen, wobei die Anlage (1) **dadurch gekennzeichnet ist, dass** der Kern (4) eine rohrförmige Wand (30) besitzt, die sich entlang einer und um eine zentrale Achse (X30) erstreckt und die sich in der Dicke (E30), radial zu der zentralen Achse (X30), von einer radial äußeren ersten ringförmigen Fläche (31), "Aufnahmefläche" (31) genannt, die dazu bestimmt ist, die Reifenkomponente oder -komponenten aufzunehmen, bis zu einer radial inneren zweiten ringförmigen Fläche (32), "Austauschfläche" (32) genannt, die die zentrale Achse (X30) umgibt und die dazu bestimmt ist, thermische Austausche zwischen der rohrförmigen Wand (30) des Kerns und thermischen Quellen (23, 24) außerhalb des Kerns (4) zu ermöglichen, erstreckt, dadurch, dass die Vulkanisierstation (20) eine erste, heizende, thermische Quelle (23) umfasst, die dazu ausgelegt ist, an die Austauschfläche (32) des Kerns angelegt zu werden, wenn sich der Kern (4) in der Vulkanisierstation (20) befindet, um den Kern (4) und den ringförmigen Reifen (2) bei dem Vulkanisiervorgang zu erwärmen, sich dann von dem Kern (4) zu trennen, um die Austauschfläche (32) erneut frei zu lassen, wenn der Kern (4) und der vulkanisierte ringförmige Reifen (2B) die Vulkanisierstation (20) verlassen und nach dem Vulkanisiervorgang zu der Entnahmestation (21) transferiert werden, und dadurch, dass die Entnahmestation (21) eine zweite, kühlende, thermische Quelle (24) umfasst, die dazu ausgelegt ist, wenn sich der Kern (4) und der vulkanisierte ringförmige Reifen (2B) in der Entnahmestation (21) befinden, auf die erste thermische Quelle (23) in Kontakt mit der Austauschfläche (32) des Kerns zu folgen, um den Kern (4) zu kühlen, so dass ein radiales Spiel zwischen der Aufnahmefläche (31) des Kerns und dem vulkanisierten ringförmigen Reifen (2B) durch differenzielle radiale Kontraktion der rohrförmigen Wand (30) des Kerns (4) in Bezug auf den vulkanisierten ringförmigen Reifen (2B) erzeugt wird und so einem Ausstoßorgan (25), mit dem die Entnahmestation (21) ausgestattet ist, ermöglicht wird, den vulkanisierten ringförmigen Reifen (2B) axial von dem Kern (4) zu lösen.

2. Anlage nach Anspruch 1, **dadurch gekennzeichnet, dass** der radiale Abstand (R31) von der Aufnahmefläche (31) zu der zentralen Achse (X30) größer als oder gleich 175 mm ist, bevorzugt zwischen 200 mm und 500 mm beträgt, und dadurch, dass die Dicke (E30) der rohrförmigen Wand (30) des Kerns, die die Austauschfläche (32) radial von der Aufnahmefläche (31) trennt, kleiner als oder gleich 40 mm, bevorzugt kleiner als oder gleich 25 mm, vorzugsweise kleiner als oder gleich 20 mm oder sogar kleiner als oder gleich 15 mm ist, beispielsweise 12 mm beträgt.

3. Anlage nach Anspruch 1 oder 2, **dadurch gekennzeichnet, dass** die erste thermische Quelle (23), die von der Vulkanisierstation (20) verwendet wird, eine Vielzahl von heizenden Sektoren (40) umfasst, die bevorzugt jeder mindestens einen elektrischen Heizwiderstand (41) tragen, wobei die heizenden Sektoren (40) so ausgelegt sind, dass sie an die Austauschfläche (32), von der Innenseite des Kerns (4) aus, angelegt werden, so dass sie während des Vulkanisiervorgangs eine Kontaktoberfläche auf der Austauschfläche (32), "heizende Nutzoberfläche" genannt, einnehmen und dann nach dem Vulkanisiervorgang freigeben, die axial mindestens 80 %, bevorzugt mindestens 85 %, vorzugsweise mindestens 90 % oder sogar mindestens 95 % der axialen Höhe (H31) der Aufnahmefläche (31), die von dem ringförmigen Reifen (2) bedeckt ist, und winklig, in Azimut-Abdeckung um die zentrale Achse (X30), mindestens 270 Grad, bevorzugt mindestens 300 Grad oder sogar mindestens 330 Grad ausmacht.

4. Anlage nach einem der vorhergehenden Ansprüche, **dadurch gekennzeichnet, dass** die Vulkanisierstation (20) eine Vulkanisierform (50) umfasst, die dazu ausgelegt ist, eine Vulkanisierkammer (51) zu begrenzen, die dazu bestimmt ist, die aus dem Kern (4) und dem rohen ringförmigen Reifen (2A) gebildete Einheit aufzunehmen und zu enthalten, um den Vulkanisiervorgang durchzuführen, wobei die Vulkanisierform (50) zu diesem Zweck eine untere Platte (52), auf der der Kern (4) aufliegt, einen äußeren Kranz (53), der dazu ausgelegt ist, die radial äußere Fläche des zu vulkanisierenden Reifens (2) zu umgeben, und eine obere Platte (54), die mit dem äußeren Kranz (53) axial entgegengesetzt zu der unteren Platte (52) zusammenwirkt, um die Vulkanisierkammer (51) zu schließen, umfasst, und dadurch, dass die erste thermische Quelle (23) eine Vielzahl von heizenden Sektoren (40) umfasst, die bevorzugt jeder mindestens einen elektrischen Heizwiderstand (41) tragen, heizende Sektoren (40), die im Zentrum der Vulkanisierkammer (51) angeordnet sind und unter der Abhängigkeit von einem Ausfahrmechanismus (55) platziert werden, der dazu ausgelegt ist, die heizenden Sektoren (40) abwechselnd in eine ausgefahrene Konfiguration, in der die heizenden Sektoren (40) unter zentrifugaler radialer Kompression gegen die Austauschfläche (32) des Kerns (4) gepresst werden, und eine zurückgezogene Konfiguration, in der die heizenden Sektoren (40) von der Austauschfläche (32) radial zurückversetzt platziert sind, zu platzieren, so dass man, nach dem Vulkanisiervorgang, den Kern (4) aus der Vulkanisierkammer (51) entnehmen kann, indem man eine axiale Verlagerung des Kerns (4) in Bezug auf die heizenden Sektoren (40) vornimmt, und die heizenden Sektoren (40) in der Vulkanisierstation (20), in Wartestellung im Inneren der Vulkanisierkammer (51), lassen kann, während der aus der Vulkanisierkammer (51) kommende, den vulkanisierten ringförmigen Reifen (2B) tragende Kern (4) zu der Entnahmestation (21) befördert wird.

5. Anlage nach Anspruch 4, **dadurch gekennzeichnet, dass** der Ausfahrmechanismus (55) einen ersten Schieber (56), der axial beweglich gelagert ist und eine Vielzahl von ersten Rampen (57) besitzt, die gemäß einer ersten Neigungsrichtung in Bezug auf die Hauptachse (X4, X30) geneigt sind und die jede mit einem heizenden Sektor (40) zusammenwirken, und einen zweiten Schieber (58), der axial beweglich gelagert ist und eine Vielzahl von zweiten Rampen (59) besitzt, die in Bezug auf die Hauptachse (X4, X30) gemäß einer zweiten Neigungsrichtung mit zu der ersten Neigungsrichtung entgegengesetztem Vorzeichen geneigt sind und die jede mit einem der heizenden Sektoren (40) zusammenwirken, umfasst, so dass man die radiale Verlagerung der heizenden Sektoren (40), die es ermöglicht, aus der zurückgezogenen Konfiguration in die ausgefahrene Konfiguration und umgekehrt überzugehen, steuert, indem man den ersten Schieber (56) und den zweiten Schieber (58) axial voneinander entfernt beziehungsweise den ersten Schieber (56) und den zweiten Schieber (58) einander axial annähert.

6. Anlage nach einem der vorhergehenden Ansprüche, **dadurch gekennzeichnet, dass** die zweite, kühlende, thermische Quelle (24), die von der Entnahmestation (21) verwendet wird, durch einen Zwangsluftstrom (70) gebildet wird, der im Kontakt mit der Austauschfläche (32) strömt, und dadurch, dass die Entnahmestation (21) einen zentralen Schaft (71) umfasst, auf den man den den vulkanisierten ringförmigen Reifen (2B) tragenden Kern (4) schiebt, so dass zwischen der radial äußeren Fläche des zentralen Schafts (71_out) und der radial inneren Austauschfläche (32) der rohrförmigen Wand (30) des Kerns (4) ein ringförmiger Strömungspfad (72) begrenzt wird, dessen radiale Breite (E72) bevorzugt zwischen 5 mm und 20 mm beträgt, Strömungspfad (72), der an eine Absaugvorrichtung (73) mittels eines Krümmers (74) angeschlossen ist, so dass man, wenn die Absaugvorrichtung (73) aktiviert wird, einen Zwangsluftstrom (70) erzeugt, der in den Strömungspfad (72) durch einen an einem ersten axialen Ende des Strömungspfads (72) gelegenen Einlassbereich (72_in) eindringt, der den Strömungspfad (72) entlang der Austauschfläche (32) durchläuft, dann durch den Krümmer (74) hindurch an einem zweiten axialen Ende des Strömungspfads (72), das zu dem ersten axialen Ende axial entgegengesetzt gelegen ist, abgeführt wird.

7. Anlage nach Anspruch 6, **dadurch gekennzeichnet, dass** die Entnahmestation (21) eine Hubplatte (75) umfasst, die den zentralen Schaft (71) trägt und die dazu bestimmt ist, den Kern (4) aufzunehmen, wenn der Kern (4) von dem vulkanisierten ringförmigen Reifen (2B) getrennt worden ist, wobei die Hubplatte (75) entlang einer vertikalen Richtung axial beweglich gelagert ist, wobei die Entnahmestation (21) ferner einen horizontalen Aufnahmetisch (76) umfasst, der mit einer Öffnung (77) durchsetzt ist, die so eingerichtet ist, dass sie zum einen den freien Durchgang des zentralen Schafts (71) und des Kerns (4) durch den Aufnahmetisch (76) hindurch ermöglicht und zum anderen einen ringförmigen Halterand (77A) aufweist, der einen axialen Anschlag gegen den vulkanisierten ringförmigen Reifen (2B) bildet, wobei die Entnahmestation auch eine Kappe (78) umfasst, die dazu ausgelegt ist, in axiale Anlage an den Kern (4) zu gelangen, bevorzugt an der extremalen Kante des Kerns, die sich axial entgegengesetzt zu dem Aufnahmetisch (76) und der Hubplatte (75) befindet, wobei die Kappe (78) mit Luftlöchern (79) versehen ist, die es der Luft ermöglichen, die Kappe (78) zu durchqueren, um in den Strömungspfad (72) einzutreten, der zwischen dem zentralen Schaft (71) und der rohrförmigen Wand (30) des Kerns begrenzt wird, und wobei die Kappe (78) das Ausstoßorgan (25) bildet, das es ermöglicht, den Kern (4), in seiner Bewegung begleitet von der Hubplatte (75), die den Kern (4) aufnimmt und stützt, durch die Öffnung (77) des Aufnahmetisches (76) hindurch axial wegzuschieben, während der vulkanisierte ringförmige Reifen (2B) in Anlage an dem Halterand (77A) der Öffnung (77) des Aufnahmetisches (76) gehalten wird, so dass der Kern (4) aus dem vulkanisierten ringförmigen Reifen (2B) entnommen wird.

8. Anlage nach einem der vorhergehenden Ansprüche, **dadurch gekennzeichnet, dass** die Aufnahmefläche (31) einstückig gebildet ist, so dass sie um die gesamte zentrale Achse (X30) herum eine Stoffschlüssigkeit aufweist.

9. Anlage nach einem der vorhergehenden Ansprüche, **dadurch gekennzeichnet, dass** der Kern (4) zu mehr als 90 % seiner Masse, bevorzugt zu mehr als 95 % seiner Masse, stärker bevorzugt zu mehr als 98 % seiner Masse oder sogar mit seiner gesamten Masse aus einem einzigen einteiligen Mantel mit kreisförmiger Basis besteht, der auf die zentrale Achse (X30, X4) zentriert ist und der mindestens die rohrförmige Wand (30) umfasst.

10. Anlage nach einem der vorhergehenden Ansprüche, **dadurch gekennzeichnet, dass** der Kern (4), in der axialen Verlängerung der Aufnahmefläche (31), axial von der Aufnahmefläche (31) abstehend und bevorzugt einstückig mit der rohrförmigen Wand (30) gebildet, einen ringförmigen Kupplungsabschnitt (35) besitzt, der mindestens eine der beiden folgenden Anordnungen und bevorzugt jede der beiden folgenden Anordnungen aufweist: (i) eine erste Anordnung, gemäß welcher der Kupplungsabschnitt (35) auf seiner radial äußeren Fläche (35_out) zum einen eine Schulter (36) aufweist, die in Bezug auf die Aufnahmefläche (31) radial zurückversetzt ist, wobei die Schulter (36) somit eine axiale Begrenzung der Aufnahmefläche (31) und einen axialen Anschlag, der geeignet ist, eine axiale Einführbewegung (MX+) des Kerns (4) in mindestens eine der Stationen (3, 20, 21) zu stoppen, bildet, und zum anderen einen kegelstumpfförmigen Abschnitt (37) aufweist, der der Schulter (36) axial vorausgeht, entgegengesetzt zu der Aufnahmefläche (31), um eine Zentrierung des Kerns (4) in Bezug auf die Station bei der Einführbewegung (MX+)zu gewährleisten, und (ii) eine zweite Anordnung, gemäß welcher der Kupplungsabschnitt (35) auf seiner radial inneren Fläche (35_in), die die Austauschfläche (32) axial verlängert, außerhalb der Austauschfläche (32), eine oder mehrere Greifvertiefungen (38) wie etwa eine ringförmige Rille (38) umfasst, die dazu vorgesehen sind, das Ergreifen des Kerns (4) durch ein Greifwerkzeug (108) zu ermöglichen, das in eine Transfervorrichtung (100) integriert ist, die es ermöglicht, den Kern (4) von einer Station zur anderen zu transportieren.

11. Anlage nach einem der vorhergehenden Ansprüche, **dadurch gekennzeichnet, dass** sie eine Pufferstation (85) umfasst, die eine vorübergehende Lagerung von Kernen (4), insbesondere von Reservekernen (4) ohne ringförmigen Reifen und/oder von einen rohen ringförmigen Reifen (2A) tragenden Kernen (4), sowie eine vorübergehende Lagerung von vulkanisierten ringförmigen Reifen (2B), die von ihrem Kern (4) entnommen wurden, ermöglicht, wobei die Pufferstation (85) zu diesem Zweck mindestens einen Mast (86) umfasst, der mit einer Vielzahl von Lagerplätzen (87, 97) versehen ist, beinhaltend zum einen einen ersten Typ von Lagerplätzen (87), "Plätze für Kerne" (87) genannt, die dazu eingerichtet sind, jeder mindestens einen leeren oder einen rohen ringförmigen Reifen (2A) tragenden Kern (4) aufzunehmen, und die zu diesem Zweck jeder mindestens einen, bevorzugt mindestens zwei Aufhängeschenkel (88) umfassen, die so eingerichtet sind, dass man den zu lagernden (4) Kern aufhängen kann, indem man die zentrale Ausnehmung des Kerns auf den mindestens einen Aufhängeschenkel oder die mindestens zwei Aufhängeschenkel (88) führt, und zum anderen einen zweiten Typ von Lagerplätzen (97), "Plätze für Reifen" (97) genannt, die dazu eingerichtet sind, jeder mindestens einen vulkanisierten ringförmigen Reifen (2B) aufzunehmen und den vulkanisierten ringförmigen Reifen (2B) drehantreiben zu können, um ein Unrundwerden des vulkanisierten ringförmigen Reifens (2B) unter der Wirkung der Schwerkraft zu verhindern, wobei die Plätze für Reifen (97) zu diesem Zweck mit rotierenden Tragschenkeln (98) versehen sind, die dazu ausgelegt sind, den vulkanisierten ringförmigen Reifen (2B) zu tragen, indem sie die radial äußere Fläche des vulkanisierten ringförmigen Reifens (2B) stützen, und den vulkanisierten ringförmigen Reifen (2B) um sich selbst um seine zentrale Achse (X2) herum drehanzutreiben, sowie mit mindestens einem und bevorzugt mindestens zwei Führungsschenkeln (99), die dazu eingerichtet sind, in die zentrale Ausnehmung des ringförmigen Reifens eingeführt zu werden und mit der radial inneren Fläche des vulkanisierten ringförmigen Reifens (2B) zusammenzuwirken, um den vulkanisierten ringförmigen Reifen (2B) an Ort und Stelle an dem Reifenplatz (97) zu halten und den vulkanisierten ringförmigen Reifen (2B) während seines Drehens durch die rotierenden Tragschenkel (98) zu führen.

12. Anlage nach einem der vorhergehenden Ansprüche, **dadurch gekennzeichnet**, das sie eine Transfervorrichtung (100) umfasst, die mit einem robotisierten Arm (101) versehen ist, der es ermöglicht, den Kern (4) nacheinander von einer Station zur anderen zu transportieren, wobei der robotisierte Arm (101) bevorzugt alle Stationen (3, 20, 21, 85, 91, 92) der Anlage (1) bedient, so dass er den Kern (4) nacheinander zu jeder der Stationen bringen kann, und dadurch, dass der robotisierte Arm (101) ein Greifwerkzeug (108) trägt, das mit einer Zange (109) versehen ist, die eine Vielzahl von Backen (110) umfasst, die entlang von radialen Richtungen, die von einer Backe zur anderen radial verschieden sind, radial beweglich gelagert sind und die so eingerichtet sind, dass sie abwechselnd entweder den Kern (4) von innen ergreifen können, indem sie eine zentrifugale Klemmung gegen eine radial innere Fläche des Kerns ausüben, oder den von seinem Kern (4) getrennten vulkanisierten ringförmigen Reifen (2B) von außen ergreifen können, indem sie eine zentripetale Klemmung auf eine radial äußere Fläche des vulkanisierten ringförmigen Reifens (2B) vornehmen.

13. Verfahren zur Herstellung eines Reifens (2), umfassend einen Aufbauschritt (S2), bei dem man einen Kern (4) in einer Aufbaustation (3) anordnet und man ein oder mehrere Reifenkomponenten auf den Kern legt, um einen rohen ringförmigen Reifen (2A) zu bilden, einen ersten Transferschritt (S3), bei dem man den Kern (4), der seinen rohen ringförmigen Reifen (2A) trägt, von der Aufbaustation (3) bis zu einer Vulkanisierstation (20), die von der Aufbaustation entfernt ist, transportiert, einen Vulkanisierschritt (S4), bei dem man die aus dem Kern und dem rohen ringförmigen Reifen gebildete, in der Vulkanisierstation (20) platzierte Einheit erwärmt, um einen vulkanisierten ringförmigen Reifen (2B) zu erhalten, einen zweiten Transferschritt (S5), bei dem man den den vulkanisierten ringförmigen Reifen (2B) tragenden Kern (4) von der Vulkanisierstation (20) zu einer Entnahmestation (21), die von der Vulkanisierstation entfernt ist, transportiert, dann einen Entnahmeschritt (S6), bei dem man, in der Entnahmestation (21), den vulkanisierten ringförmigen Reifen (2B) von dem Kern (4) trennt, wobei das Verfahren **dadurch gekennzeichnet ist, dass** der Kern (4) eine rohrförmige Wand (30) besitzt, die sich entlang und um eine zentrale Achse (X30) erstreckt und die sich in der Dicke, radial zu der zentralen Achse, von einer radial äußeren ersten ringförmigen Fläche, "Aufnahmefläche" (31) genannt, die dazu bestimmt ist, die Reifenkomponente oder -komponenten aufzunehmen, bis zu einer radial inneren zweiten ringförmigen Fläche, "Austauschfläche" (32) genannt, die die zentrale Achse (X30) umgibt und die dazu bestimmt ist, thermische Austausche zwischen der rohrförmigen Wand des Kerns (30) und thermischen Quellen (23, 24) außerhalb des Kerns zu ermöglichen, erstreckt, dadurch, dass bei dem Vulkanisierschritt (S4) an die Austauschfläche (32) eine erste, heizende, thermische Quelle (23) angelegt wird, um den Vulkanisiervorgang auszuführen, man dann die erste thermische Quelle (23) von dem Kern (4) trennt, so dass die Austauschfläche (32) erneut frei ist, wenn man den zweiten Transferschritt (S5) zu der Entnahmestation (21) vornimmt, und dadurch, dass man bei dem Entnahmeschritt (S6) eine zweite, kühlende, thermische Quelle (24) in Kontakt mit der so freigegebenen Austauschfläche (32) platziert, um den Kern (4) zu kühlen, so dass ein radiales Spiel zwischen der Aufnahmefläche des Kerns (31) und dem vulkanisierten ringförmigen Reifen (2B) erzeugt wird durch differenzielle radiale Kontraktion der rohrförmigen Wand (30) des Kerns in Bezug auf den vulkanisierten ringförmigen Reifen (2B), und man den vulkanisierten ringförmigen Reifen (2B) axial von dem Kern (4) löst.

14. Verfahren nach Anspruch 13, **dadurch gekennzeichnet, dass** dem Aufbauschritt (S2) ein Vorwärmschritt (S1) vorausgeht, bei dem man den zum Aufbauen bestimmten Kern (4), ohne ringförmigen Reifen (2), auf eine Temperatur, "Vorwärmtemperatur" genannt, bringt, die zwischen 50 °C und 100 °C beträgt, beispielsweise 80 °C +/- 5 °C, man dann den so auf die Vorwärmtemperatur gebrachten Kern (4) in die Aufbaustation (3) zwecks des Aufbauschritts (S2) transferiert, und dadurch, dass der Vorwärmschritt (S1) ausgeführt wird, indem entweder ein Kern (4) zurückgeführt wird, der direkt von der Entnahmestation (21) aus transferiert wird, wenn die Resttemperatur des aus dem Entnahmeschritt (21) hervorgehenden Kerns, am Ende des vorausgegangenen Fertigungszyklus, einer als akzeptabel erachteten Vorwärmtemperatur entspricht, oder indem ein anderer Kern (4), ohne ringförmigen Reifen (2), entnommen wird, der zuvor in Wartestellung versetzt und in einer Temperstation (91) auf eine geeignete Vorwärmtemperatur gebracht wurde, und somit unmittelbar mit der gewünschten Vorwärmtemperatur verfügbar ist.

15. Verfahren nach einem der Ansprüche 13 oder 14, **dadurch gekennzeichnet, dass** man mindestens zwei Kerne (4) in einem selben Fertigungszyklus verwendet, indem der Vulkanisierschritt auf einen ersten Kern (4) angewandt wird, der einen ringförmigen Reifen trägt und in der Vulkanisierstation (20) platziert ist, während zeitgleich der Entnahmeschritt und/oder der Aufbauschritt auf einen zweiten Kern (4) angewandt wird.

## Claims

1. Facility (1) for manufacturing tyres (2), said facility comprising an assembly station (3) configured to place one or more tyre components onto a core so as to form an uncured annular tyre (2A), a curing station (20) configured to receive the assembly formed by said core (4) and the uncured annular tyre (2A) and to heat said assembly during a curing operation so as to obtain a cured annular tyre (2B), and an extraction station (21) configured so as to separate, after the curing operation, the cured annular tyre (2B) from the core (4), said facility (1) being **characterized in that** the core (4) has a tubular wall (30) extending along and around a central axis (X30) and which extends in thickness (E30) radially with respect to said central axis (X30) from a radially outer first annular face (31), referred to as "receiving face" (31), which is intended to receive the tyre component or components, as far as a radially inner second annular face (32), referred to as "exchange face" (32), which surrounds the central axis (X30) and which is intended to allow exchanges of heat between the tubular wall (30) of the core and thermal sources (23, 24) external to said core (4), **in that** the curing station (20) comprises a first, heating, thermal source (23) which is designed to press against the exchange face (32) of the core when said core (4) is in said curing station (20) so as to heat said core (4) and the annular tyre (2) during the curing operation, and then dissociate from the core (4) so as to leave the exchange face (32) free again when the core (4) and the cured annular tyre (2B) leave said curing station (20) and are transferred to the extraction station (21) after the curing operation, and **in that** said extraction station (21) comprises a second, refrigerating, thermal source (24) which is designed so that when the core (4) and the cured annular tyre (2B) are in the extraction station (21), it takes the place of the first thermal source (23) in contact with said exchange face (32) of the core so as to cool said core (4) in such a way as to create a radial clearance between the receiving face (31) of the core and the cured annular tyre ( 2B) through differential radial contraction of the tubular wall (30) of the core (4) relative to the cured annular tyre (2B) thus allowing an ejector member (25) with which the extraction station (21) is equipped to remove the cured annular tyre (2B) axially from the core (4).

2. Facility according to Claim 1, **characterized in that** the radial distance (R31) from the receiving face (31) to the central axis (X30) is equal to or greater than 175 mm, preferably comprised between 200 mm and 500 mm, and **in that** the thickness (E30) of the tubular wall (30) of the core, which radially separates the exchange face (32) from the receiving face (31), is less than or equal to 40 mm, preferably less than or equal to 25 mm, preferentially less than or equal to 20 mm, or even less than or equal to 15 mm and for example equal to 12 mm.

3. Facility according to Claim 1 or 2, **characterized in that** the first thermal source (23), used by the curing station (20), comprises a plurality of heating segments (40), preferably each bearing at least one resistive electrical heating element (41), said heating segments (40) being designed in such a way as to be pressed against the exchange face (32) from the inside of the core (4) so as to occupy, during the curing operation, and then free up after the curing operation, a contact area on the exchange face (32), referred to as "useful heating area", which represents axially at least 80%, preferably at least 85%, preferentially at least 90% or even at least 95% of the axial height (H31) of the receiving face (31) that is covered by the annular tyre (2) and angularly, in terms of azimuthal coverage about the central axis (X30), at least 270 degrees, preferably at least 300 degrees, or even at least 330 degrees.

4. Facility according to one of the preceding claims, **characterized in that** the curing station (20) comprises a curing mould (50) designed to delimit a curing chamber (51) intended to receive and contain the assembly formed by the core (4) and the uncured annular tyre (2A) in order to perform the curing operation, said curing mould (50) to this end comprising a lower plate (52), on which the core (4) is rested, an outer ring (53) designed to surround the radially outer face of the tyre (2) that is to be cured, and an upper plate (54) which collaborates with the outer ring (53) at the axially opposite end from the lower plate (52) so as to close the curing chamber (51), and **in that** the first thermal source (23) comprises a plurality of heating segments (40), preferably each of them bearing at least one resistive electrical heating element (41), which heating segments (40) are arranged at the centre of the curing chamber (51) and placed under the dependency of a deployment mechanism (55) which is designed to place said heating segments (40) alternately in a deployed configuration in which said heating segments (40) are compressed in a centrifugal radial direction firmly against the exchange face (32) of the core (4), and a retracted configuration in which said heating segments (40) are positioned radially set back from the exchange face (32) so that, after the curing operation, the core (4) can be removed from said curing chamber (51) by causing said core (4) to move axially relative to said heating segments (40) and said heating segments (40) can be left behind in the curing station (20) waiting inside the curing chamber (51) while the core (4) bearing the cured annular tyre (2B) coming from the curing chamber (51) is conveyed to the extraction station (21).

5. Facility according to Claim 4, **characterized in that** the deployment mechanism (55) comprises a first pusher (56) mounted with the ability to move axially and having a plurality of first ramps (57) which are inclined in a first direction of inclination with respect to the main axis (X4, X30) and which each collaborate with a heating segment (40), and a second pusher (58) mounted with the ability to move axially and having a plurality of second ramps (59) which are inclined with respect to the main axis (X4, X30) in a second direction of inclination opposite to the first direction of inclination and which each collaborate with one of said heating segments (40) so that the radial movement of the heating segments (40), enabling transition from the retracted configuration to the deployed configuration and vice versa, is brought about by axially moving the first pusher (56) and the second pusher (58) apart and respectively by axially moving the first pusher (56) and the second pusher (58) closer together.

6. Facility according to one of the preceding claims, **characterized in that** the second, refrigerating, thermal source (24), used by the extraction station (21), is formed by a forced air flow (70) which flows in contact with the exchange face (32), and **in that** the extraction station (21) comprises a central barrel (71) over which the core (4) bearing the cured annular tyre (2B) is slipped so as to delimit, between the radially outer face of said central barrel (71_out) and the radially inner exchange face (32) of the tubular wall (30) of the core (4), an annular flow path (72) of which the radial width (E72) is preferably comprised between 5 mm and 20 mm, which flow path (72) is connected to a suction device (73) by means of a manifold (74) so that when the suction device (73) is activated, a forced air flow (70) is created and enters the flow path (72) via an intake zone (72_in) situated at a first axial end of the annular flow path (72), which travels along said flow path (72) along the exchange face (32) and is then discharged via the manifold (74) at a second axial end of said flow path (72), which end is axially the opposite end to the first axial end.

7. Facility according to Claim 6, **characterized in that** the extraction station (21) comprises a lifting plate (75) which supports the central barrel (71) and which is intended to receive the core (4) when said core (4) is separated from the cured annular tyre (2B), said lifting plate (75) being mounted with the ability to move axially in a vertical direction, said extraction station (21) further comprising a horizontal receiving table (76) which is pierced with an opening (77) arranged in such a way as to, on the one hand, allow the central barrel (71) and the core (4) to pass freely through said receiving table (76) and, on the other hand, exhibit an annular retaining lip (77A) which forms an axial end stop against the cured annular tyre (2B), said extraction station also comprising a hood (78) which is designed to come to bear axially against the core (4), preferably against the outer edge face of said core which is axially on the opposite side from the receiving table (76) and from the lifting plate (75), said hood (78) being provided with vents (79) allowing the air to pass through said hood (78) to enter the flow path (72) delimited between the central barrel (71) and the tubular wall (30) of the core, and said hood (78) forming the ejector member (25) that allows the core (4), accompanied in its movement by the lifting plate (75) that receives and supports said core (4) to be pushed back axially through the opening (77) in the receiving table (76) while the cured annular tyre (2B) is held back bearing against the retaining lip (77A) of said opening (77) in the receiving table (76) so that the core (4) is extracted from the cured annular tyre (2B).

8. Facility according to one of the preceding claims, **characterized in that** the receiving face (31) is formed in a single piece so as to exhibit continuity of material all around the central axis (X30).

9. Facility according to one of the preceding claims, **characterized in that** the core (4) is made up, for more than 90% of its mass, preferably for more than 95% of its mass, more preferentially for more than 98% of its mass, or even for the entirety of its mass, of a single one-piece shell ring of circular base centred on the central axis (X30, X4) and which comprises at least the tubular wall (30).

10. Facility according to one of the preceding claims, **characterized in that** the core (4) has, in the axial continuation of the receiving face (31), projecting axially from said receiving face (31) and preferably formed as one piece with the tubular wall (30), an annular coupling portion (35) which exhibits at least one of the following two arrangements, and preferably each of the following two arrangements: (i) a first arrangement whereby the coupling portion (35) exhibits, on its radially outer face (35_out), on the one hand, a shoulder (36) which is radially re-entrant with respect to the receiving face (31), which shoulder (36) thus forms an axial limit of the receiving face (31) and an axial end stop able to halt a movement of axial introduction (MX+) of the core (4) into at least one of the stations (3, 20, 21) and, on the other hand, a frustoconical portion (37) that axially precedes the shoulder (36) on the opposite side to the receiving face (31), so as to centre the core (4) with respect to the station during said introduction movement (MX+), and (ii) a second arrangement whereby the coupling portion (35) exhibits, on its radially inner face (35_in) which axially prolongs the exchange face (32), away from said exchange face (32), one or more gripping depressions (38), such as an annular groove (38), provided so as to allow said core (4) to be grasped by a gripping tool (108) carried on board a transfer device (100) allowing the core (4) to be transported from one station to the other.

11. Facility according to one of the preceding claims, **characterized in that** it comprises a buffer station (85) allowing temporary storage of cores (4), notably of spare cores (4) which have no annular tyre on them and/or of cores (4) bearing an uncured annular tyre (2A), and temporary storage of cured annular tyres (2B) their core (4) extracted, said buffer station (85) for this purpose comprising at least one tower (86) which is provided with a plurality of storage locations (87, 97) including, on the one hand, a first type of storage location (87) referred to as "core spaces" (87) which are each configured to receive at least one empty core (4) or core supporting an uncured annular tyre (2A) and which for that purpose each comprise at least one and preferably at least two suspension branches (88) arranged in such a way that the core (4) that is to be stored can be suspended by engaging the central opening of said core over said at least one suspension branch or said at least two suspension branches (88) and, on the other hand, a second type of storage location (97) referred to as "tyre spaces" (97) which are each configured to accept at least one cured annular tyre (2B) and to be able to rotate the cured annular tyre (2B) so as to prevent said cured annular tyre (2B) from becoming ovalized under the effect of gravity, said tyre spaces (97) being provided for that purpose with rotary support branches (98) designed to support the cured annular tyre (2B) by supporting the radially outer face of said cured annular tyre (2B) and to rotate said cured annular tyre (2B) on itself about its central axis (X2), as well as at least one and preferably at least two guide branches (99) configured to be engaged in the central recess of said annular tyre and collaborate with the radially inner face of the cured annular tyre (2B) in order to hold said cured annular tyre (2B) in place in the tyre space (97) and guide said cured annular tyre (2B) while it is being rotated by the rotary support branches (98).

12. Facility according to one of the preceding claims, **characterized in that** it comprises a transfer device (100) provided with a robot arm (101) allowing the core (4) to be transported successively from one station to the other, said robot arm (101) preferably serving all of the stations (3, 20, 21, 85, 91, 92) of the facility (1) so as to be able to bring the core (4) successively to each of said stations, and **in that** said robot arm (101) bears a gripping tool (108) provided with a gripper (109) which comprises a plurality of jaws (110) which are mounted with the ability to move radially in radial directions which differ from one jaw to another, and which are arranged in such a way as to be able alternately either to grasp of the core (4) from the inside, by performing centrifugal clamping against a radially inner face of said core, or grasp the cured annular tyre (2B), separated from its core (4), from the outside by performing centripetal clamping against a radially outer face of said cured annular tyre (2B).

13. Method for manufacturing a tyre (2) comprising a tyre-building step (S2), during which a core (4) is set down in a tyre-building station (3) and one or more tyre components are placed onto said core in order to form an uncured annular tyre (2A), a first transfer step (S3) during which the core (4) bearing its uncured annular tyre (2A) is transported from the tyre-building station (3) as far as a curing station (20) distant from the tyre-building station, a curing step (S4) during which the assembly formed by said core and the uncured annular tyre placed in the curing station (20) is cured to obtain a cured annular tyre (2B), a second transfer step (S5) during which the core (4) bearing the cured annular tyre (2B) is transported from the curing station (20) to an extraction station (21) distant from the curing station, and then an extraction step (S6) during which, in the extraction station (21), the cured annular tyre (2B) is separated from the core (4), said method being **characterized in that** the core (4) has a tubular wall (30) which extends along and around a central axis (X30) and which extends in thickness radially with respect to said central axis from a radially outer first annular face, referred to as "receiving face" (31), which is intended to receive the tyre component or components, as far as a radially inner second annular face referred to as "exchange face" (32) which surrounds the central axis (X30) and which is intended to allow exchanges of heat between the tubular wall (30) of the core and thermal sources (23, 24) external to said core, **in that** during the curing step (S4) a first, heating, thermal source (23) is pressed against the exchange face (32) of the core so as to perform the curing operation, and then said first thermal source (23) is dissociated from the core (4) so as to leave the exchange face (32) free again when the second transfer step (S5) of transferring to the extraction station (21) is performed, and **in that**, during the extraction step (S6), a second, refrigerating, thermal source (24) is brought into contact with the exchange face (32) thus freed, so as to cool said core (4) in such a way as to create a radial clearance between the receiving face (31) of the core and the cured annular tyre (2B) through differential radial contraction of the tubular wall (30) of the core relative to the cured annular tyre (2B), and the cured annular tyre (2B) is removed axially from the core (4).

14. Method according to Claim 13, **characterized in that** the tyre-building step (S2) is preceded by a preheating step (S1) during which the core (4) intended for tyre-building, empty of any annular tyre (2), is raised to a temperature known as the "preheat temperature" which is comprised between 50° C and 100°C for example equal to 80°C +/- 5°C, then said core (4) thus raised to the preheat temperature is transferred into the tyre-building station (3) for the tyre-building step (S2), and **in that** said preheating step (S1) is performed either by recirculating a core (4) which is transferred directly from the extraction station (21) if the residual temperature of the core after the end of the extraction step (21), at the end of the preceding manufacturing cycle, corresponds to a preheat temperature deemed to be acceptable, or by picking up another core (4), empty of any annular tyre (2), placed on standby beforehand and raised to a suitable preheat temperature in a heating station (91), and thus immediately available at the desired preheat temperature.

15. Method according to one of Claims 13 or 14, **characterized in that** at least two cores (4) are used in the one same manufacturing cycle, applying the curing step to a first core (4) bearing an annular tyre and placed in the curing station (20) while, in concurrent time, the extraction step and/or the tyre-building step is applied to a second core (4).
